# EUROPEAN PATENT APPLICATION

(11) **EP 4 534 355 A1**
(43) Date of publication of application: **09.04.2025**
(21) Application number: 24204443.6
(22) Date of filing: 03.10.2024
(51) Int. Cl.: B60R 9/06, B60P 7/08, F16B 21/04

(54) **SYSTEMS FOR CONNECTING AN ACCESSORY TO AN ITEM**

(30) Priority: 03.10.2023 US 202363587463 P
(71) Applicant: Bombardier Recreational Products Inc., Valcourt, Québec J0E 2L0 (CA)
(72) Inventor: DUMOULIN, Louis, Marieville, J3M 0A8 (CA); HALLGRIMSSON, Kaj, Bromont, J2L 2J3 (CA); ROY, Michael, Racine, J0E 1Y0 (CA); MORIN-SAVARD, Alexandre, Drummondville, J1A 2N2 (CA); SAVARD, Laurent, Granby, J2H 0S4 (CA); GUENDOUL, Nabil, Granby, J2G 2K7 (CA); GINGRAS, Louis-Charles, Rougemont, J0L 1M0 (CA); BELANGER-BARIL, Philippe, Bromont, J2L 3C2 (CA)
(74) Representative: Murgitroyd & Company

(57) **Abstract**

A system for connecting an accessory (75) to an item (10), the system including an anchor fixture (102) including a fixture body (106) and the anchor aperture (122); and an anchor (104) with an anchor lock (132) being configured to be inserted through the anchor aperture of the anchor fixture, the anchor lock having at least one protrusion (411) extending therefrom; and the anchor being selectively secured to the anchor fixture by inserting the anchor lock through the anchor aperture and moving the anchor lock relative to the anchor fixture to place the anchor lock in the locked position, the anchor lock impeding movement within the anchor fixture of the anchor.

## Description

### CROSS-REFERENCE

The present application claims priority from United States Provisional Patent Application 63/587,463, entitled "Systems for Connecting an Accessory to an Item," filed on October 3, 2023, the entirety of which is incorporated by reference herein.

### FIELD OF THE TECHNOLOGY

The present invention relates to systems and methods for attachment of accessories to a vehicle.

### BACKGROUND

Vehicles such as snowmobiles are often made to carry miscellaneous accessories for personal items, fuel, equipment, amongst others, in addition to passengers. For instance, the vehicles may be provided with racks and the like to carry cargo. The cargo items are often secured to parts of the vehicles by ropes, cords, tie-downs and the like. Anchoring systems including an anchor and an anchor fixture are also available to easily secure accessories to a vehicle. However, these solutions are often not easy to implement for smaller accessories that a driver of a vehicle may desire to keep on hand (e.g., a walkie-talkie).

Therefore, there is a desire for a system for connecting an accessory to an item that at least partly addresses these drawbacks.

### SUMMARY

It is an object of the present invention to ameliorate at least some of the inconveniences present in the prior art.

According to an aspect of the present technology, there is provided systems for connecting an accessory to an item, in some cases also providing power to the accessory via the system.

For purposes of the present application, the accessory could be implemented as a variety of objects. The accessory could be one or more of, but is not limited to, storage containers, bags, pouches, nets, speakers, lights or illumination devices, communication devices (for example, walkie-talkies), toolkits, fishing pouch/tools, hunting tools, winch remotes, quick detaches for vehicle body panels, helmets, helmet accessories, cameras, phones, food containers, and water bottles.

For purposes of the present application, terms related to spatial orientation when referring to a vehicle and components in relation to the vehicle, such as "forwardly", "rearwardly", "left", "right", "above" and "below", are as they would be understood by a driver of the vehicle, with the vehicle, in a straight ahead orientation (i.e. not steered left or right), and in an upright position. When referring to a component alone, terms related to spatial orientation should be taken with respect to the component itself. The explanations provided above regarding the above terms take precedence over explanations of these terms that may be found in any one of the documents referenced herein.

Embodiments of the present invention each have at least one of the above-mentioned object and/or aspects, but do not necessarily have all of them. It should be understood that some aspects of the present invention that have resulted from attempting to attain the above-mentioned object may not satisfy this object and/or may satisfy other objects not specifically recited herein.

Additional and/or alternative features, aspects, and advantages of embodiments of the present invention will become apparent from the following description, the accompanying drawings, and the appended claims.

### BRIEF DESCRIPTION OF THE DRAWINGS

For a better understanding of the present invention, as well as other aspects and further features thereof, reference is made to the following description which is to be used in conjunction with the accompanying drawings, where:
Fig. 1 is a right side elevation view of a snowmobile;
Fig. 2 is a perspective view, taken from a top, rear, right side, of a system for connecting an accessory to the snowmobile of Fig. 1;
Fig. 3 is a perspective view, taken from a top, rear, left side, of an anchor fixture and an anchor of the system of Fig. 2 shown in a disassembled configuration;
Fig. 4 is a perspective view, taken from a top, front, left side, of the anchor fixture and the anchor of Fig. 3;
Fig. 5 is a perspective view, taken from a top, rear, left side, of the anchor fixture and the anchor of Fig. 3, shown with the anchor secured to the anchor fixture;
Fig. 6 is a perspective view, taken from a top, front, left side, of the anchor fixture and the anchor of Fig. 5;
Fig. 7 is a perspective view, taken from a top, front, right side, of the anchor fixture and the anchor of Fig. 5;
Fig. 8 is a bottom plan view of the anchor fixture and the anchor of Fig. 5;
Fig. 9 is a bottom plan view of the anchor fixture and the anchor of Fig. 3, shown with an anchor lock of the anchor in an unlocked position;
Fig. 10 is a front elevation view of a garment having a plurality of systems for connecting accessories to a garment body of the garment;
Fig. 11 is a top perspective view of one of the systems of Fig. 10;
Fig. 12 is a perspective view, taken from a top, front, right side, of the system of Fig. 11, shown with an anchor and an anchor fixture thereof in a disassembled configuration;
Fig. 13 is a perspective view, taken from a bottom, front, right side, of the system of Fig. 12;
Fig. 14 is a perspective view, taken from a top, front, left side, of the system of Fig. 11, shown with the anchor and the anchor fixture thereof assembled and with an anchor lock of the anchor being in an unlocked position;
Fig. 15 is a front elevation view of the system of Fig. 11, shown with the anchor lock being in a locked position and a latching feature of the anchor being in an unlatched position;
Fig. 16 is a perspective view, taken from a top, front, left side, of the system of Fig. 11, shown with the anchor lock being in a locked position and the latching feature being in a latched position;
Fig. 17 is a bottom plan view of the system of Fig. 16;
Fig. 18 is a top plan view of the anchor fixture of the system of Fig. 11;
Fig. 19A is a top plan view of an alternative embodiment of the anchor fixture of the system of Fig. 11;
Fig. 19B is a top plan view of another alternative embodiment of the anchor fixture of the system of Fig. 11;
Fig. 20 is a bottom perspective view of another embodiment of the anchor of the system of Fig. 11, shown connected to an accessory and with the latching feature thereof in the latched position;
Fig. 21 is a bottom perspective view of the anchor and the accessory of Fig. 20, shown with the latching feature thereof in the unlatched position;
Fig. 22 is a perspective view of a cross-section of the anchor and accessory of Fig. 20 and a corresponding anchor fixture connected to a textile body of the garment;
Fig. 23 is a perspective view, taken from a top, front, left side, of another one of the systems of Fig. 10 including an anchor and an anchor fixture connected to each other;
Fig. 24 is a top plan view of the system of Fig. 23;
Fig. 25 is a perspective view of the anchor fixture and the anchor of Fig. 23, showing a top side of the anchor fixture and a bottom side of the anchor;
Fig. 26 is a perspective view of a cross-section taken along line 26-26 in Fig. 24;
Fig. 27 is a perspective view of a cross-section taken along line 27-27 in Fig. 24;
Fig. 28 is a plan view of the anchor fixture and the anchor of Fig. 23 with a backing member of the anchor fixture separated therefrom, a bottom side of a fixture body and the anchor and a top side of a backing member being shown;
Fig. 29 is a front elevation view of a garment having a plurality of systems for connecting accessories to a garment body of the garment, whereby the garment is connected to an external power source;
Fig. 30 is a perspective view taken from a front, right side of another system for connecting an accessory to an item according to the present technology, shown with an attachment base thereof in a partially connected configuration;
Fig. 31 is a top plan view of the system of Fig. 30, shown in the locked position with an accessory shown schematically;
Fig. 32 is a front elevation view of the system of Fig. 30, shown in the locked position with an accessory shown schematically;
Fig. 33 is a perspective view taken from a front, left side of the attachment base of the system of Fig. 30;
Fig. 34 is a top plan view of the attachment base of Fig. 33;
Fig. 35 is a bottom plan view of the attachment base of Fig. 33;
Fig. 36 is a bottom plan view of the attachment base of Fig. 33 and schematically illustrated anchor fixtures of the system of Fig. 30, illustrated in the unlocked position;
Fig. 37 is a bottom plan view of the attachment base and anchor fixtures of Fig. 36, illustrated in the locked position;
Fig. 38 is a side elevation view of another system for connecting an accessory to an item according to the present technology, shown in a disassembled configuration;
Fig. 39 is a front plan view of the system of Fig. 38 connecting speaker accessory to the snowmobile, shown in a disassembled configuration;
Fig. 40 is a perspective view taken from the front, bottom, side thereof of the speaker accessory of Fig. 39, illustrated with anchors of the system of Fig. 38;
Fig. 41 is a top plan view of the speaker accessory and anchors of Fig. 40;
Fig. 42 is a perspective view taken from the front, bottom, side thereof of another non-limiting example of an accessory to be connected to an item, illustrated with anchors of the system of Fig. 38;
Fig. 43 is an exploded, perspective view taken from the top, front side of the anchor of the system of Fig. 38;
Fig. 44 is an exploded, front elevation view of the anchor of Fig. 43;
Fig. 45 is a front elevation view of an anchor lock and stem of the anchor of Fig. 43;
Fig. 46A is a top plan view of an anchor fixture of the system of Fig. 38;
Fig. 46B is a bottom plan view of the anchor fixture of Fig. 46A;
Fig. 47A is a cross-sectional, perspective taken by from a top, right side of the anchor fixture of Fig. 46A, taken along a major axis of an anchor aperture of the anchor fixture;
Fig. 47B is a cross-sectional, perspective taken by from a bottom, left side of the anchor fixture of Fig. 46A, taken along the major axis of the anchor aperture;
Fig. 48 is a bottom plan view of the system of Fig. 38, shown in the unlocked position;
Fig. 49 is a bottom plan view of the system of Fig. 38, shown in the unlocked position;
Fig. 50 is a top plan view of the system of Fig. 38, shown in the locked position;
Fig. 51 is a cross-sectional view of the system of Fig. 38, taken along line 51-51 of Fig. 50;
Figs. 52 to 54 are top plan views of the system of Fig. 38, shown in the unlocked position with a variety of anchor orientations;
Fig. 55 is a perspective view of another anchor for connecting an accessory to an item according to the present technology;
Fig. 56 is a bottom plan view of the anchor of Fig. 55;
Fig. 57 is a side elevation view of the anchor of Fig. 55;
Fig. 58 is a top plan view of the anchor of Fig. 55;
Fig. 59 is a cross-sectional view of the anchor of Fig. 55, taken along line 59-59 of Fig. 58;
Fig. 60 is a perspective view of another system for connecting an accessory to an item according to the present technology, shown with an anchor thereof in a partially exploded configuration;
Fig. 61 is a front elevation view of the system of Fig. 60, shown with one anchor thereof in a partially exploded configuration;
Fig. 62 is a cross-sectional, exploded view of a portion of the system of Fig. 60;
Fig. 63 is a perspective view of the portion of the system of Fig. 62;
Fig. 64 is a perspective view of another system for connecting an accessory to an item according to the present technology, illustrated in a disconnected, unlocked arrangement;
Fig. 65 is a perspective view of the system of Fig. 64, illustrated in a connected, locked arrangement;
Fig. 66 is a bottom, side perspective view of an accessory of the system of Fig. 64;
Fig. 67 is a bottom plan view of the accessory of Fig. 66, with an electrical component thereof in an unlocked position;
Fig. 68 is a bottom plan view of the accessory of Fig. 66, with the electrical component in a locked position;
Fig. 69 is a top plan view of an anchor fixture of the system of Fig. 64;
Fig. 70 is a top, side perspective view of the anchor fixture of Fig. 69;
Fig. 71 is a bottom, side perspective view of the anchor fixture of Fig. 69;
Fig. 72 is a bottom plan view of the anchor fixture of Fig. 69;
Fig. 73 is an exploded, bottom, side perspective view of the anchor fixture of Fig. 69;
Fig. 74 is a partial cross-sectional view of the system of Fig. 64, with the accessory in an inserted, unlocked arrangement;
Fig. 75 is a partial cross-sectional view of the system of Fig. 64, with the accessory in an inserted, locked arrangement;
Fig. 76 is a perspective view of another system for connecting an accessory to an item according to the present technology, illustrated in a disconnected arrangement;
Fig. 77 is a perspective view of the system of Fig. 76, illustrated in a connected arrangement;

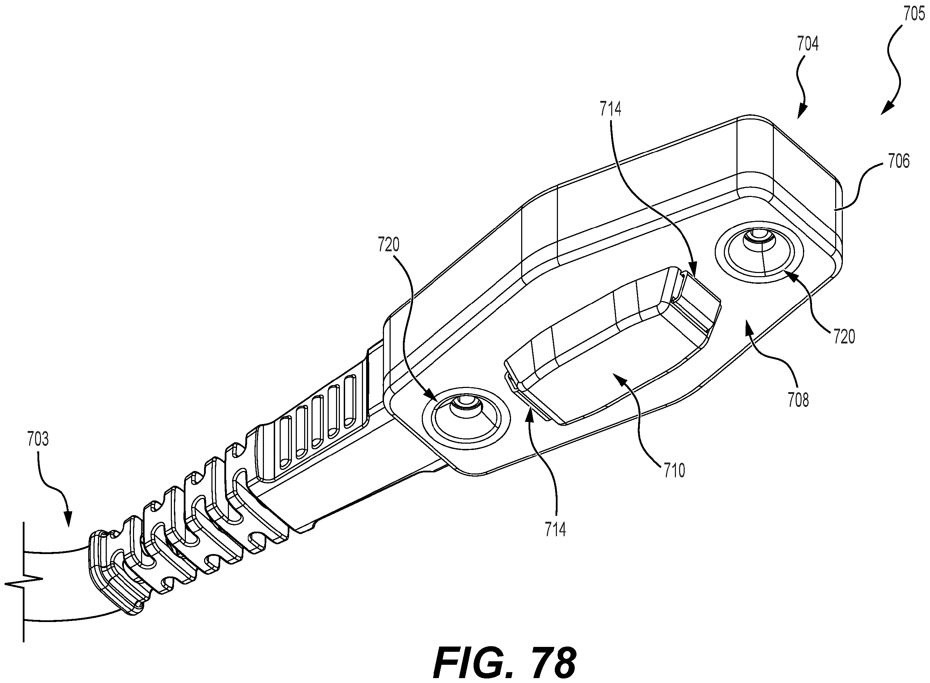

Fig. 78 is a bottom, side perspective view of a cord and plug assembly of the system of Fig. 76;

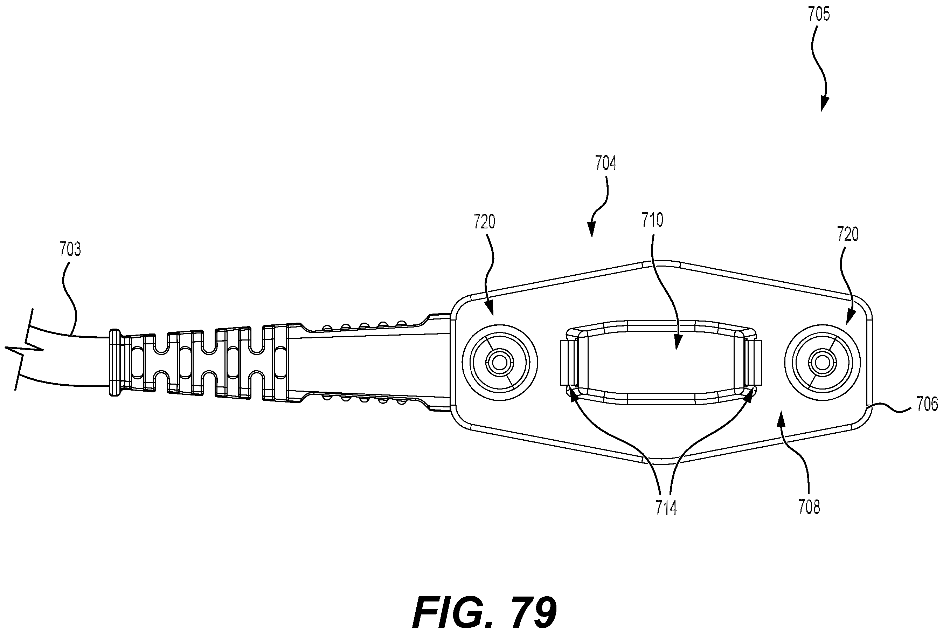

Fig. 79 is a bottom plan view of the cord and plug assembly of Fig. 78;

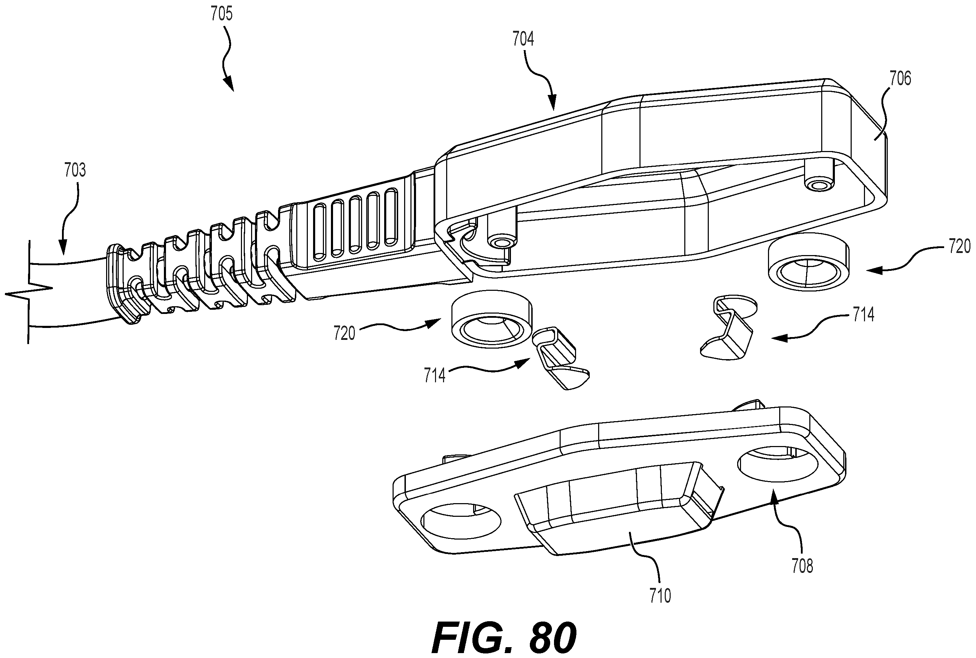

Fig. 80 is an exploded, bottom, side perspective view of the cord and plug assembly of Fig. 78;

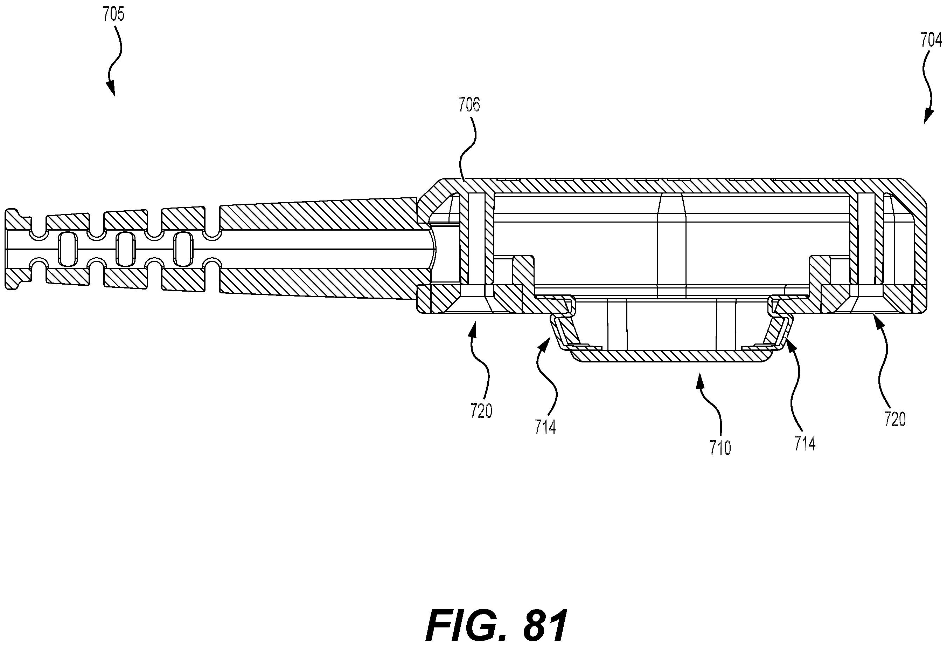

Fig. 81 is a cross-sectional view of the cord and plug assembly of Fig. 78;
Fig. 82 is a bottom perspective view of another anchor for connecting an accessory to an item according to the present technology;
Fig. 83 is an exploded, perspective view taken from the top, front side of the anchor of Fig. 82;
Fig. 84 is an exploded, perspective view taken from the bottom, front side of the anchor of Fig. 82;
Fig. 85 is a cross-sectional view of the anchor of Fig. 82; and
Fig. 86 is another cross-sectional view of the anchor of Fig. 82, taken generally orthogonally to the cross-section of Fig. 85.

### DETAILED DESCRIPTION

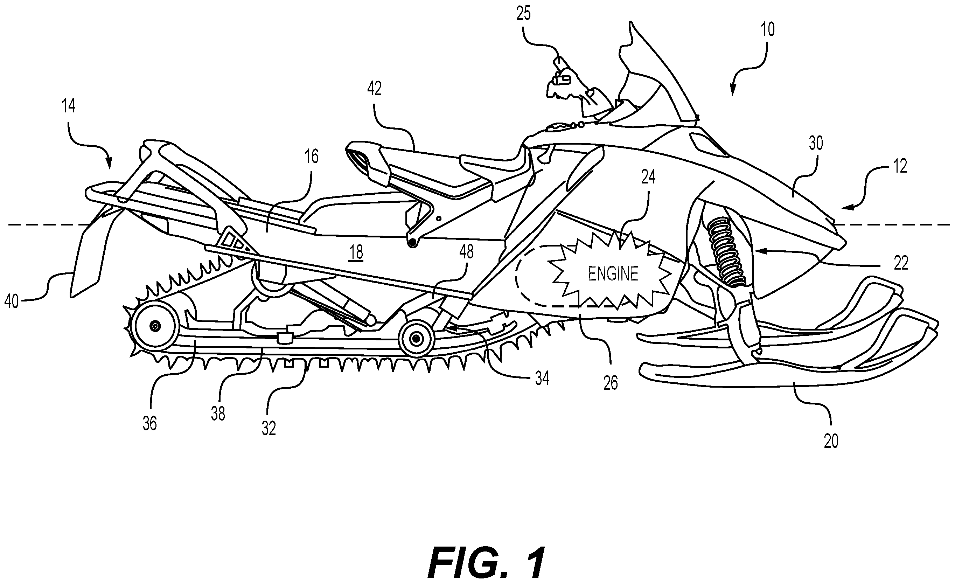

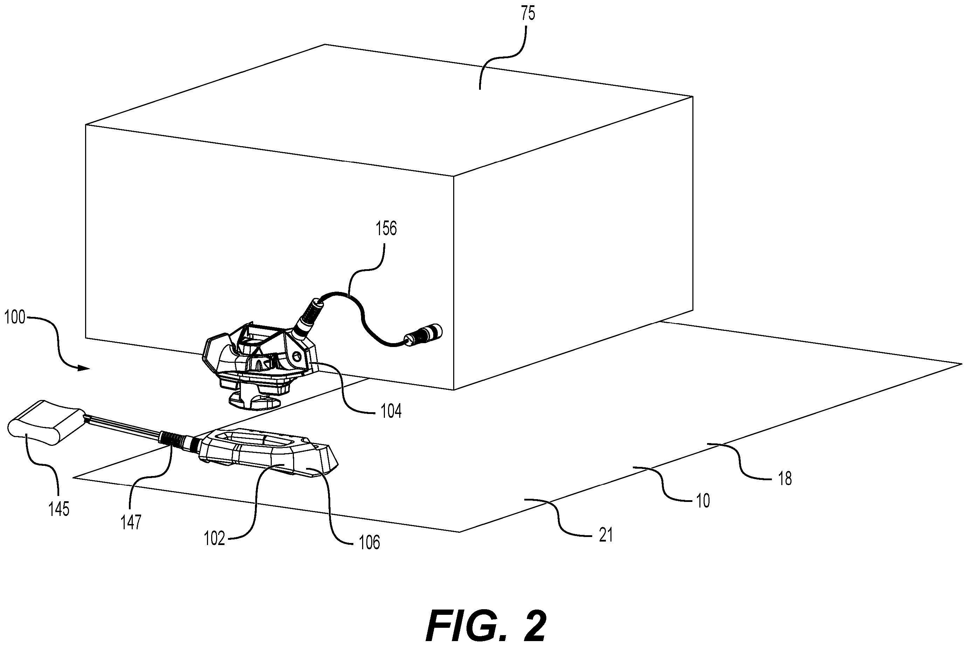

As will be described herein and as shown in Fig. 2, a system 100 is broadly provided for connecting an accessory 75 to an item such as a part of a vehicle 10 (Fig. 1). The vehicle 10 may be any suitable vehicle. In this embodiment, the vehicle 10 is a snowmobile. The snowmobile 10 will be broadly described with reference to Fig. 1. It should be understood that the snowmobile 10 could have a construction different than the one described.

The snowmobile 10 has a front end 12 and a rear end 14, which are defined with respect to a forward travel direction of the snowmobile 10. The snowmobile 10 has a frame 16 which includes a tunnel 18. Skis 20 and a steering assembly 22 are provided at the front end 12 of the snowmobile 10. The steering assembly 22 includes a handlebar 25 that is operable by a driver of the snowmobile 10 to steer the snowmobile 10. A motor 24 and a belt transmission system 26 (shown schematically) disposed near the front end 12 are enclosed by fairings 30 which protect the engine 24 and the belt transmission system 26. In this embodiment, the motor 24 is an internal combustion engine.

In the rear section of the snowmobile 10, an endless drive track 32 is disposed under the tunnel 18. The endless drive track 32 is operatively connected to the engine 24 through the belt transmission system 26. The endless drive track 32 is driven to run about a rear suspension assembly 34 for propulsion of the snowmobile 10. The rear suspension assembly 34 includes a slide frame assembly 36 which includes a pair of spaced apart slide rails 38 that engage the inner side of the ground-engaging portion of the endless drive track 32. A snowflap 40 is disposed at the rear end 14 of the snowmobile 10.

A driver seat 42 is installed in the rear section of the snowmobile 10. A rear portion of the driver seat 42 may include a storage compartment, or may be used to accept a passenger seat.

With reference to Fig. 2, the system 100 includes an anchor fixture 102 that is fixable to the snowmobile 10, and an anchor 104 that is mateable with the anchor fixture 102. The anchor fixture 102 can be connected to any suitable part of the snowmobile 10. For instance, in this embodiment, the anchor fixture 102 is connected to an upper surface 21 of the tunnel 18. The anchor fixture 102 may be connected to another part of the snowmobile 10 in other embodiments (e.g., an accessory-receiving rack or other structure).

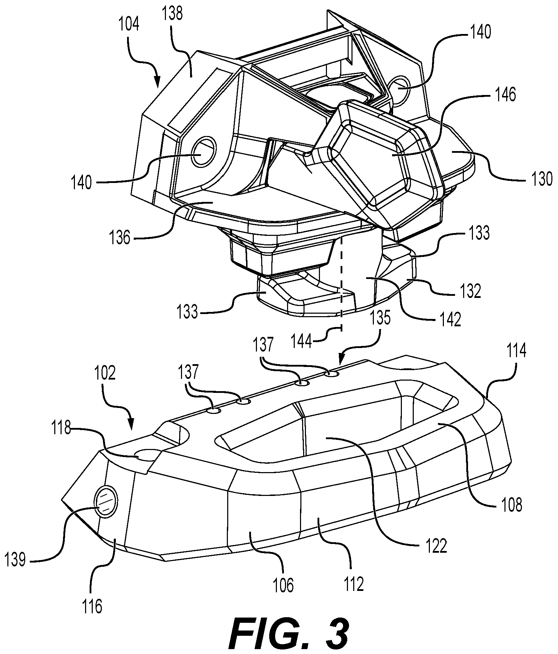

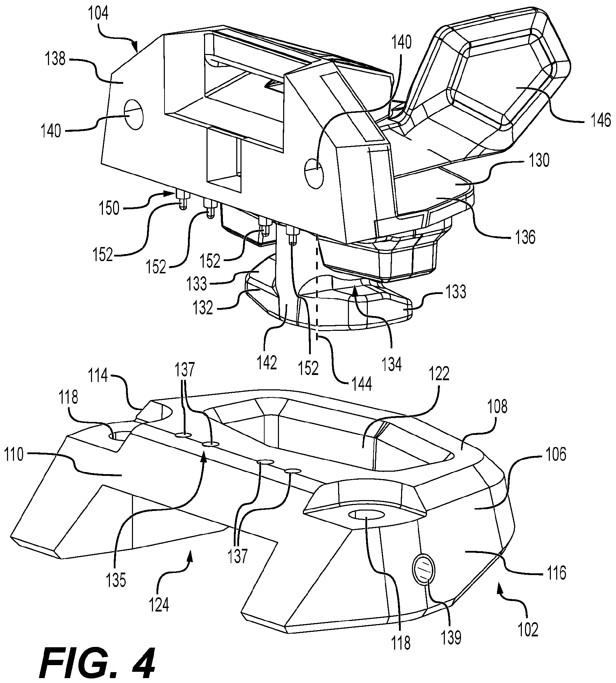

With reference to Figs. 3 and 4, in this embodiment, the anchor fixture 102 has a fixture body 106 including a top wall portion 108, a front wall portion 110, a rear wall portion 112, a left side wall portion 114 and a right side wall portion 116. Each of the wall portions 108, 110, 112, 114, 116 has an interior surface and an exterior surface. As best shown in Fig. 4, the left and right side wall portions 114, 116 define openings 118 for receiving respective fasteners (e.g., bolts) to connect the anchor fixture 102 to the upper surface 21 of the tunnel 18. The interior surfaces of the wall portions 108, 110, 112, 114, 116 define an anchor chamber 120 that, as will be described in more detail below, is configured to receive therein a part of the anchor 104. The top wall portion 108 also defines an anchor aperture 122 that opens into the anchor chamber 120. As will be described below, part of the anchor 104 is inserted into the anchor chamber 120 through the anchor aperture 122 in order to secure the anchor 104 to the anchor fixture 102. In this embodiment, the front portion 110 also defines a fastener aperture 124 that opens into the anchor chamber 120. The fastener aperture 124 can be optionally used for inserting a tongue fastener (not shown) therein, thereby providing another way in which to secure an accessory to the anchor fixture 102. It is contemplated that the fastener aperture 124 could be omitted in other embodiments. An anchor fixture having this general structure is described in greater detail in U.S. Patent No. 9,751,592, issued September 5, 2017, the entirety of which is incorporated by reference herein. It is contemplated that the anchor fixture 102 may be configured differently in other embodiments. For instance, in some embodiments, the anchor fixture 102 could be a rack attached to the snowmobile 10 and defining the anchor aperture 122. In such embodiments, the anchor fixture 102 may not define an anchor chamber but rather simply a space below the top wall portion 108.

In this embodiment, the anchor fixture 102 also has a fixture electrical element 135 for establishing electrical communication between the anchor fixture 102 and the anchor 104. As can be seen, the fixture electrical element 135 is connected to the fixture body 106, namely being disposed on an outer surface of the top wall portion 108. Other positions of the fixture electrical element 135 are contemplated in other embodiments. In this embodiment, the fixture electrical element 135 includes a plurality of electrical contacts 137 made of an electrically conductive material (e.g., copper). The electrical contacts 137 are aligned with one another in a front-to-rear direction and laterally spaced from one another. Other arrangements of the electrical contacts 137 are also contemplated. As shown in Fig. 3, the anchor fixture 102 also has a fixture power connector 139 configured to electrically connect the anchor fixture 102 to a power source 145 (Fig. 2). In particular, the fixture power connector 139 is electrically connected to the electrical contacts 137 in order to conduct electricity between the electrical contacts 137 and the power source 145. In this embodiment, the fixture power connector 139 is a power receptacle configured for receiving a power plug that is electrically connected to the power source 145 via wiring 147. It is contemplated that, in other embodiments, the fixture power connector 139 could be hardwired instead of selectively receiving the power plug (i.e., the wiring 147 is fixedly attached to the anchor fixture 102 to electrically connect the anchor fixture 102 to the power source 145. In this embodiment, the power source 145 is a portable battery pack. It is contemplated that the power source 145 could be any other suitable power source in other embodiments, such as a battery of the snowmobile 10.

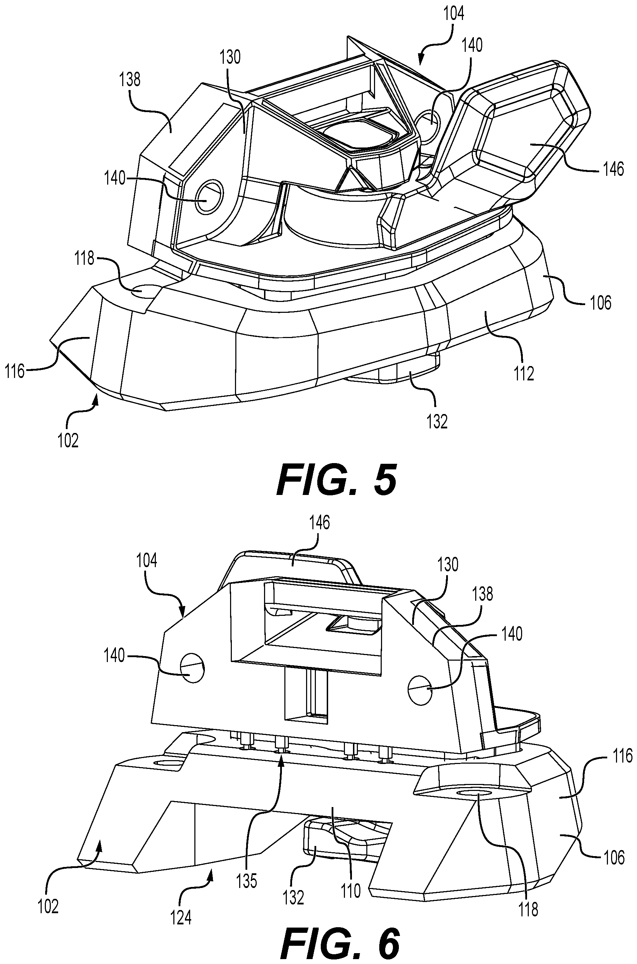

Turning to the anchor 104, with reference to Figs. 3 and 4, in this embodiment, the anchor 104 has an anchor base 130 and an anchor lock 132 extending below the anchor base 130, spaced therefrom by a gap 134. The anchor base 130 has a horizontal portion 136 and an upright portion 138 generally perpendicular to the horizontal portion 136. The upright portion 138 is configured to be connected to a body of the accessory 75 (Fig. 2). Notably, in this embodiment, the upright portion 138 defines two fastener openings 140 for receiving respective fasteners (not shown) that engage the body of the accessory 75 such as to connect the anchor base 130 to the accessory 75. The anchor lock 132 is connected to the anchor base 130 via a stem 142 defining an axis 144. The anchor lock 132 includes two cams 133 extending from opposite sides of the stem 142 in opposite directions from each other. A lever 146 is connected to the stem 142, above the horizontal portion 136. The lever 146 allows a user to rotate the stem 142 about the axis 144, thereby rotating the anchor lock 132. In particular, the anchor lock 132 is rotatable about the axis 144 between locked and unlocked positions. In the unlocked position, illustrated in Figs. 3 and 4, the anchor lock 132 extends generally parallel to the anchor base 130 such that the cams 133 are offset from one another in a direction of elongation of the anchor base 130. In the locked position, illustrated in Figs. 5 to 8, the anchor lock 132 is rotated by 90° about the axis 144 relative to the unlocked position. A more complete description of the general structure of the anchor 104 can be found in U.S. Patent No. 9,751,592.

In this embodiment, as best shown in Fig. 4, the anchor 104 also has an anchor electrical element 150 configured to contact the fixture electrical element 135. As can be seen, in this embodiment, the anchor electrical element 150 is connected to the anchor base 130, namely being disposed on a lower surface of the anchor base 130. Notably, this position of the anchor electrical element 150 ensures that it will come into contact with the fixture electrical element 135. It is contemplated that the anchor electrical element 150 may be positioned differently depending on the position of the fixture electrical element 135. In this embodiment, the anchor electrical element 150 includes a plurality of spring-loaded pins 152 made of an electrically conductive material (e.g., copper). In this example, four spring-loaded pins 152 are provided, each being positioned to contact a corresponding one of the electrical contacts 137 of the anchor fixture 102. In particular, the spring-loaded pins 152 are aligned to form a row with similar spacing as the electrical contacts 137 of the anchor fixture 102.

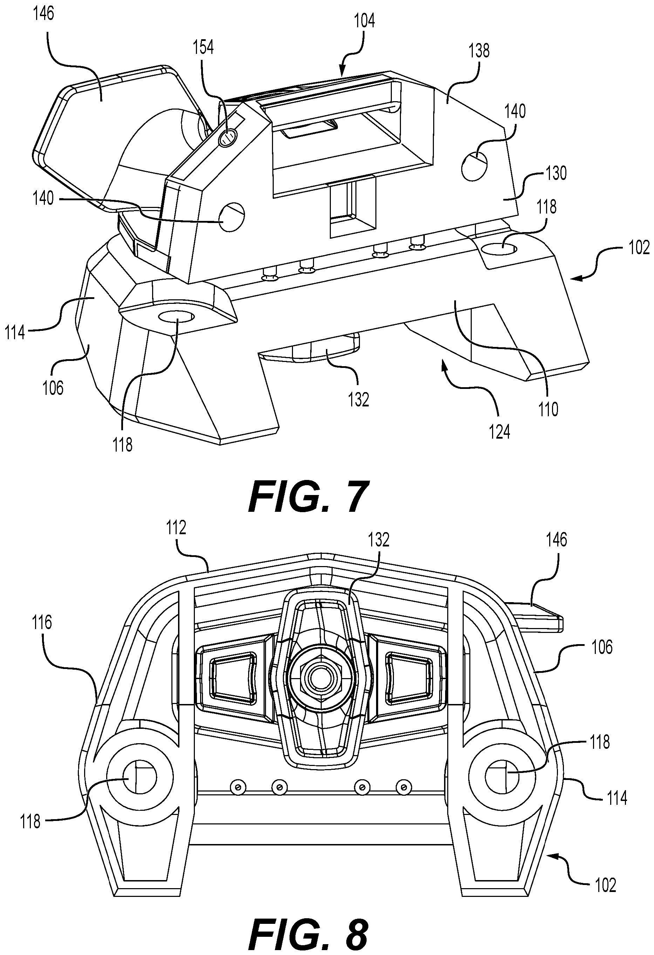

As shown in Fig. 7, the anchor 104 also has an anchor power connector 154 configured to electrically connect the anchor 104 to the accessory 75. In particular, the anchor power connector 154 is electrically connected to the spring-loaded pins 152 in order to conduct electricity between the spring-loaded pins 152 and the accessory 75. In this embodiment, the anchor power connector 154 is a power receptacle configured for receiving a power plug that is electrically connected to the accessory 75 via wiring 156 (Fig. 2). It is contemplated that, in other embodiments, the anchor power connector 154 could be hardwired instead of selectively receiving the power plug (i.e., the wiring 56 is fixedly attached to the anchor 104 to electrically connect the anchor 104 to the accessory 75).

In order to secure the anchor 104 to the anchor fixture 102, the anchor lock 132 is placed in the unlocked position as shown in Figs. 3 and 4 and the anchor lock 132 is then inserted through the anchor aperture 122 and into the anchor chamber 120 of the anchor fixture 102. Upon doing so, the anchor electrical element 150 comes into contact with the fixture electrical element 135. The anchor lock 132 is then rotated relative to the anchor fixture 102 to the locked position, shown in Figs. 5 to 8, whereby the anchor lock 132 is disposed in the anchor chamber 120 and prevented by the anchor fixture 102 from passing through the anchor aperture 122. In the locked position, the pressure exerted by the cams 133 on the anchor fixture 102 cause the spring-loaded pins 152 of the anchor electrical element 150 to retract as they are forced against the electrical contacts 137 of the anchor fixture 102. Electrical communication between the fixture electrical elements 135 and the anchor electrical element 150 is thus established. As such, since the anchor electrical element 150 is electrically connected to the accessory 75 while the fixture electrical element 135 is electrically connected to the power source 145, the accessory 75 is electrically connected to the power source 145 via the anchor 104 and the anchor fixture 102.

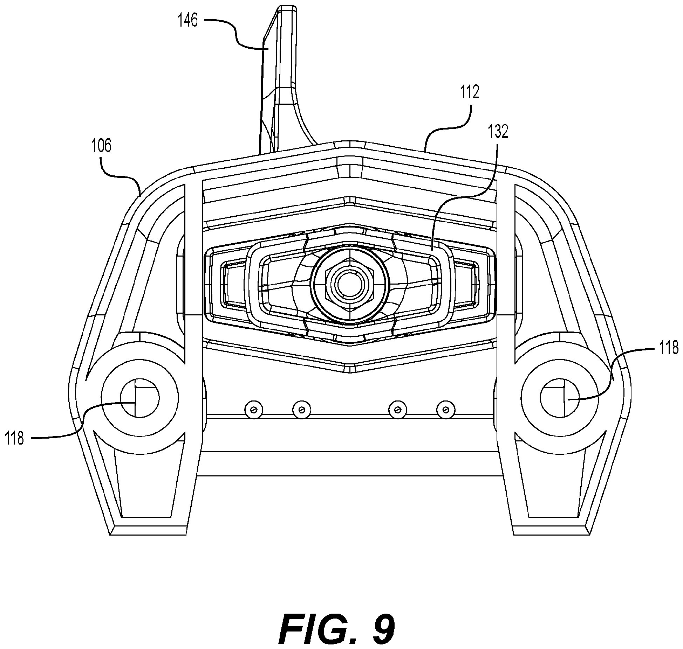

In order to disconnect the anchor 104 from the anchor fixture 102, the anchor lock 132 is placed in the unlocked position whereby, as best shown in Fig. 9, the anchor lock 132 is free to pass through the anchor aperture 122. Upon moving the anchor lock 132 to the unlocked position, the spring-loaded pins 152 are withdrawn as they cease being forced inward by the electrical contacts 137. The anchor 104 is then lifted to extract the anchor lock 132 from the anchor chamber 120 through the anchor aperture 122.

It is contemplated that, in other embodiments, the roles of the anchor 104 and the anchor fixture 102 may be reversed. Notably, in some embodiments, the anchor fixture 102 could be connected to the accessory 75 (rather than the snowmobile 10), and the anchor 104 could be connected to the snowmobile 10 (rather than the accessory 75). For instance, in such embodiments, the anchor fixture 102 and the anchor 104 may be electrically connected to the accessory 75 and the power source 145 respectively.

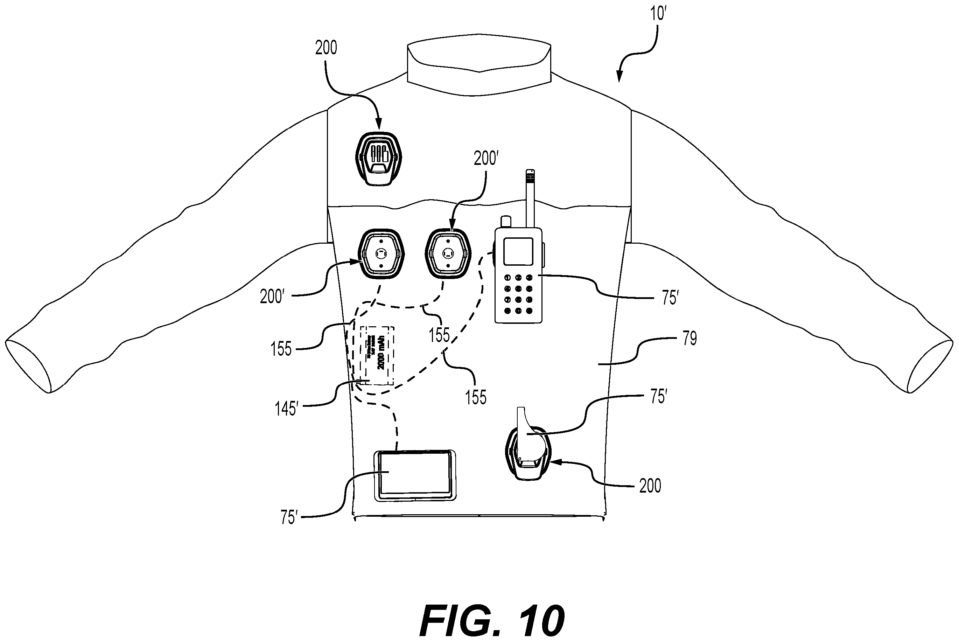

With reference now to Fig. 10, another embodiment of a system 200 for connecting an accessory 75' to an item 10' will be described herein. In this embodiment, the item 10' is a soft item such as textile-based item. In particular, the item 10' is a garment and specifically a jacket. However, the garment 10' may be any other type of garment in other embodiments (e.g., a pair of pants, a personal floatation device, etc.). In other examples, the item 10' may be another type of soft item (e.g., a duffle bag).

The system 200 includes an anchor fixture 202 that is fixable to the garment 10', and an anchor 204 that is mateable with the anchor fixture 202. In this embodiment, the anchor fixture 202 is connected to a textile body 79 of the garment 10' while the anchor 204 is connected (fixedly or removably) to the accessory 75'. The accessory 75' may be any suitable accessory for fixing to the garment 10'. For example, as illustrated in Fig. 10, the accessory 75' can be a communication device (e.g., a walkie-talkie), an electronic navigation device, or a whistle. Other types of accessories are also contemplated.

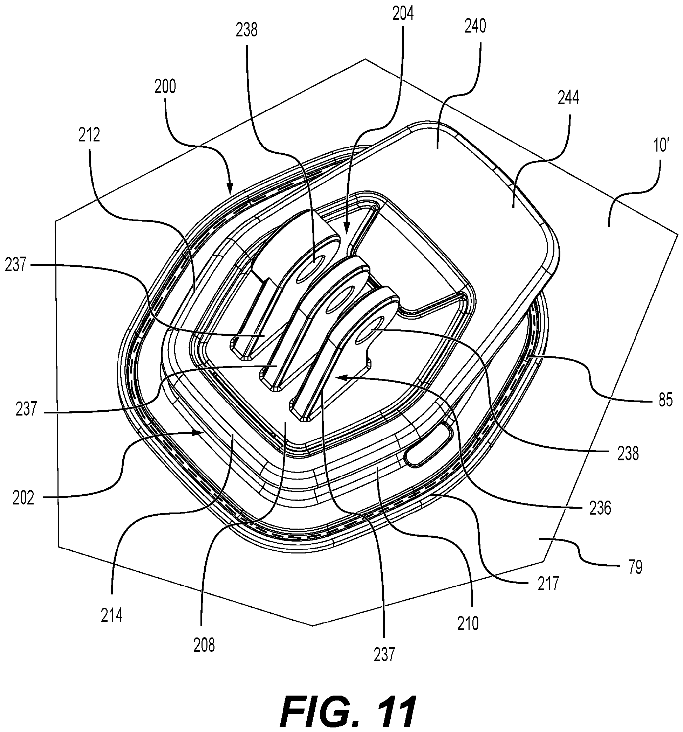

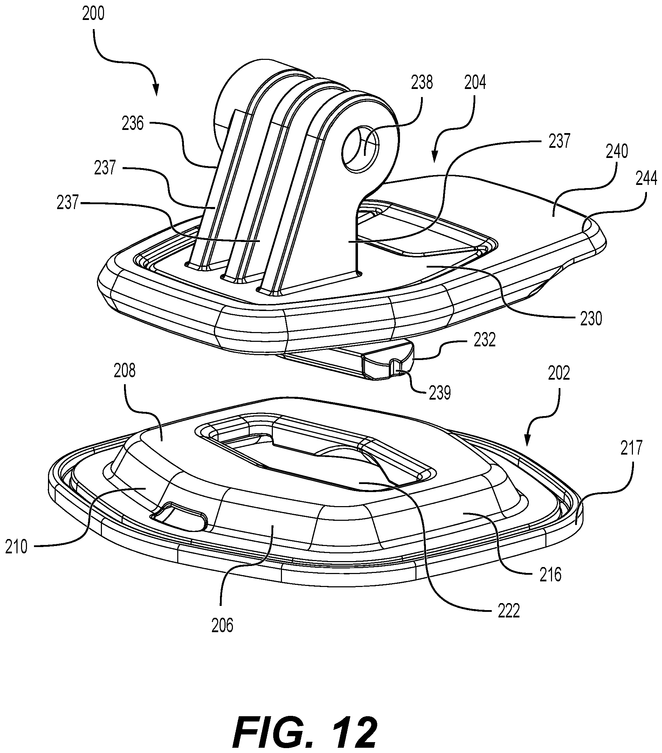

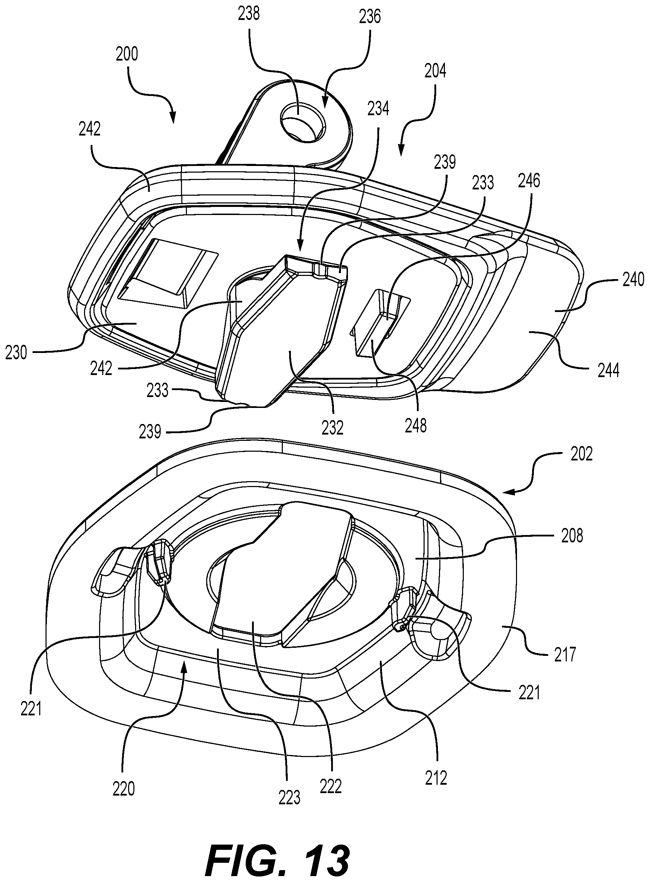

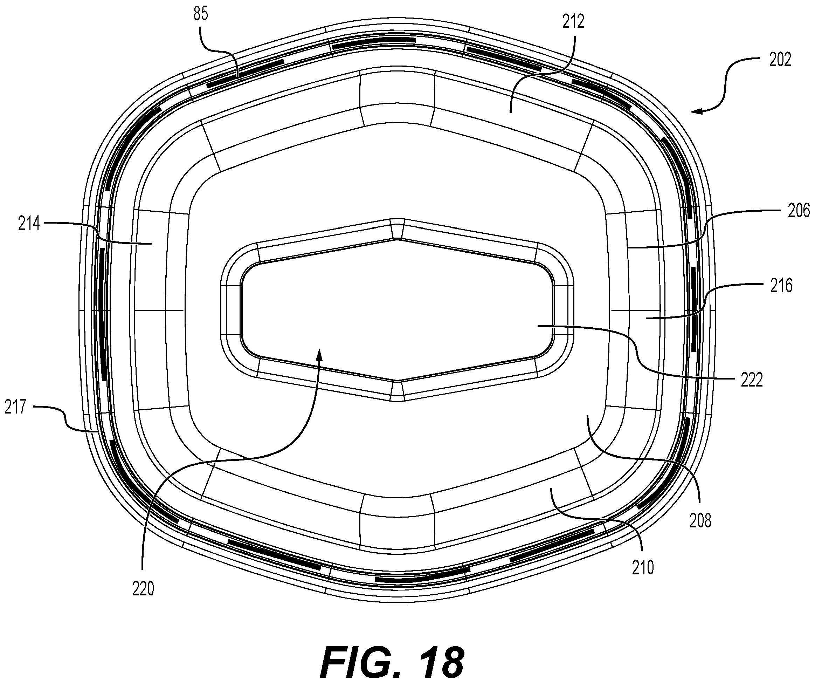

With reference to Figs. 12 and 13, in this embodiment, the anchor fixture 202 has a fixture body 206 including a top wall portion 208, a front wall portion 210, a rear wall portion 212, a left side wall portion 214 and a right side wall portion 216. Each of the wall portions 208, 210, 212, 214, 216 has an interior surface and an exterior surface. The anchor fixture 202 also has an edge portion 217 that is configured to be fastened to the textile body 79 of the garment 10'. The edge portion 217 is connected to and surrounds a periphery of the fixture body 206 such that the edge portion 217 defines a periphery of the anchor fixture 202. The edge portion 217 may only extend along a portion of the periphery of the fixture body 206 in other embodiments. In this embodiment, the edge portion 217 is made of a soft material which can be helpful to fix the edge portion 217 to the textile body 79. For example, the edge portion 217 may be made of a textile material or an elastomeric material. As such, as best shown in Figs. 11 and 18, the edge portion 217 can be sewn to the textile body 79 via stitching 85. It is contemplated that the stitching 85 may be replaced by any other fastening connection. For example, the edge portion 217 could instead be glued to the textile body 79.

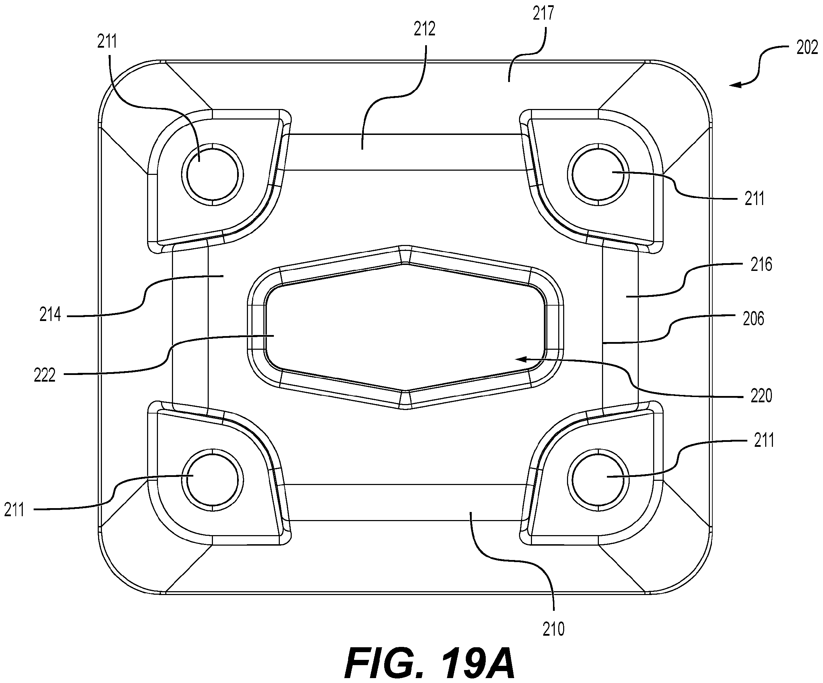

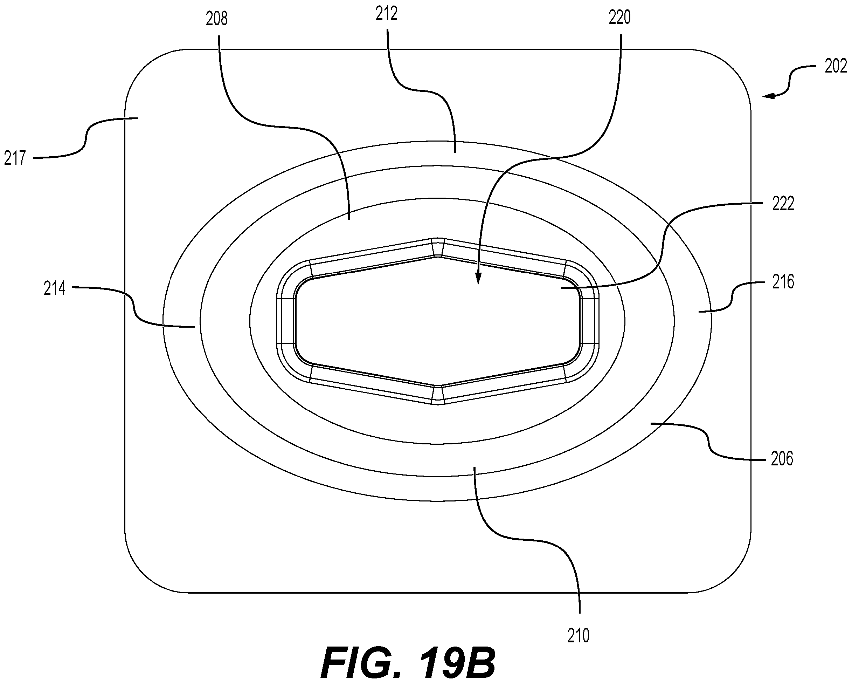

In an alternative embodiment, as shown in Fig. 19A, the anchor fixture 202 could be configured to be otherwise connected to the item 10'. For instance, in this alternative embodiment, the entire anchor fixture 202 is made integrally as a single piece component from a continuous material (e.g., plastic). Thus, in this example, the edge portion 217 forms part of the fixture body 206. In this alternative embodiment, the top wall portion 208 of the fixture body 206 defines four openings 211 which are configured to receive respective fasteners (e.g., bolts, rivets or screws) for fixing the anchor fixture 202 to the item 10'. In another alternative embodiment, as shown in Fig. 19B, the entire anchor fixture 202 is made integrally as a single piece component and the edge portion 217 is configured to be overmolded onto the item 10'. This may be useful for example if at least part of the item 10' is made by molding such that, upon molding the item 10', the anchor fixture 202 is overmolded by the material forming the item 10'.

Returning to Fig. 13, the interior surfaces of the wall portions 208, 210, 212, 214, 216 define an anchor chamber 220 that, as will be described in more detail below, is configured to receive therein a part of the anchor 204. The top wall portion 208 also defines an anchor aperture 222 that opens into the anchor chamber 120. As will be described below, part of the anchor 204 is inserted into the anchor chamber 220 through the anchor aperture 222 in order to secure the anchor 204 to the anchor fixture 202. In this embodiment, the fixture body 206 is generally dome-shaped thereby having a concave bottom side and a convex top side, the anchor chamber 220 being defined on the concave bottom side. In use, when the anchor fixture 202 is affixed to the textile body 79, the anchor chamber 220 is thus defined between the surface of the textile body 79 and the wall portions 208, 210, 212, 214, 216. Notably, as shown in Fig. 18, the stitching 85 that affixes the anchor fixture 202 to the textile body 79 surrounds the anchor chamber 220.

As shown in Fig. 13, in this embodiment, the anchor fixture 202 also has two inner interlocking members 221 configured to interlock with a part of the anchor 204 as will be described in greater detail further below. In particular, the interlocking members 221 are protrusions that extend downward from an interior surface 223 of the top wall portion 208. Each interlocking member 221 has a curved portion 225 facing inwardly toward the anchor aperture 222.

Turning now to the anchor 204, with reference to Figs. 12 and 13, in this embodiment, the anchor 204 has an anchor base 230 and an anchor lock 232 extending below the anchor base 230, spaced therefrom by a gap 234. The anchor base 230 is configured to be connected to a body of the accessory 75'. Notably, the anchor base 230 has an accessory mount 236 that is configured for connection to the body of the accessory 75'. In this embodiment, the accessory mount 236 includes three stands 237 projecting upward from a top surface of the anchor base 230. Each of the stands 237 defines an opening 238. The openings 238 are aligned with one another (i.e., are coaxial) and are configured to receive a fastener (not shown) that engages the accessory 75'. In particular, in this embodiment, the accessory 75' has two stands defining respective openings and received between the stands 237. The fastener is inserted through the stands 237 and through the stands of the accessory 75'. The accessory 75' can be made to pivot or not about the fastener by adjusting the tightness with which the fastener is secured (a tighter fastening more greatly limits pivoting of the accessory 75' about the fastener). The accessory mount 236 may be configured differently in other embodiments.

As best shown in Fig. 13, the anchor lock 232 is connected to the anchor base 230 via a stem 242 defining an axis (not shown). The stem 242 extends downward from the anchor base 230. The anchor lock 232 includes two cams 233 extending from opposite sides of the stem 242 in opposite directions from each other. In this embodiment, each of the cams 233 defines a recess 239 at an end of the cam 233. The recesses 239 are configured to receive respective ones of the interlocking members 221 as will be described in more detail below. As will be appreciated, unlike the anchor 104 described above, in this embodiment, the anchor 204 does not have a lever to rotate the anchor lock 232. Rather, the anchor base 230 and anchor lock 232 move together. As such, when the anchor lock 232 is rotated between an unlocked position and a locked position, as will be explained further below, the anchor base 230 describes the same rotation. Therefore, the entirety of the anchor 204 is rotated in order to rotate the anchor lock 232 between the unlocked and locked positions.

As shown in Figs. 12 and 13, in this embodiment, the anchor 204 also has a movable latch 240 that is operable by the user to keep the anchor lock 232 in the locked position when it is disposed within the anchor chamber 220. The latch 240 has a latch body 242 that is connected to and surrounds the anchor base 230. The latch body 242 may only extend along a part of the periphery of the anchor base 230 in other embodiments. In this embodiment, the latch body 242 includes a handle 244 for handling by the user to actuate the latch 240. As shown in Fig. 13, the latch 240 has a latching feature 246 for engaging the anchor fixture 202 to prevent rotation of the anchor lock 232 from the locked position to the unlocked position as will be described in greater detail below. In this embodiment, the latching feature 246 includes a latching protrusion 248 that is selectively insertable within the anchor aperture 222. The handle 244 is operatively connected to the latching protrusion 248 via the latch body 242 such that lifting and lowering the handle 244 causes the latching protrusion 248 to be lifted and lowered accordingly. The manner in which the latching protrusion 248 interacts with the anchor fixture 202 will be described in more detail below.

In this embodiment, the latch 240 is made of an elastomeric material (e.g., rubber). It is contemplated that the latch 240 could be made of other materials in other embodiments.

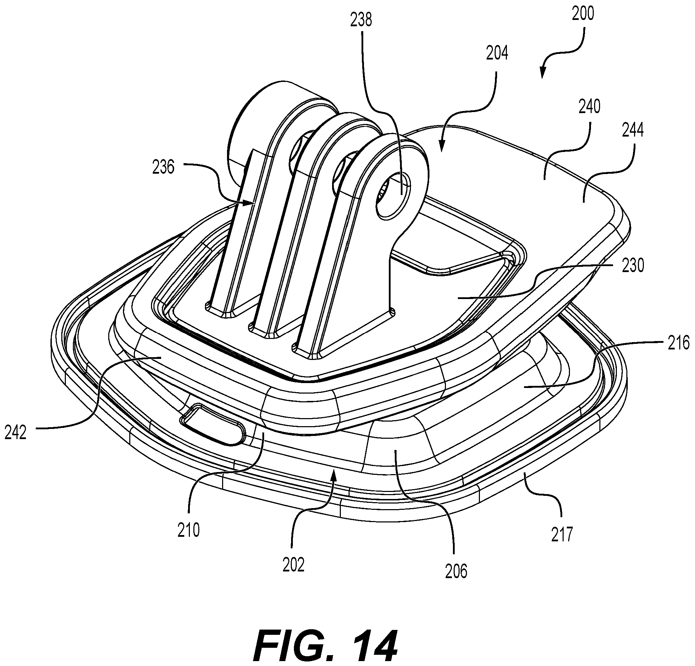

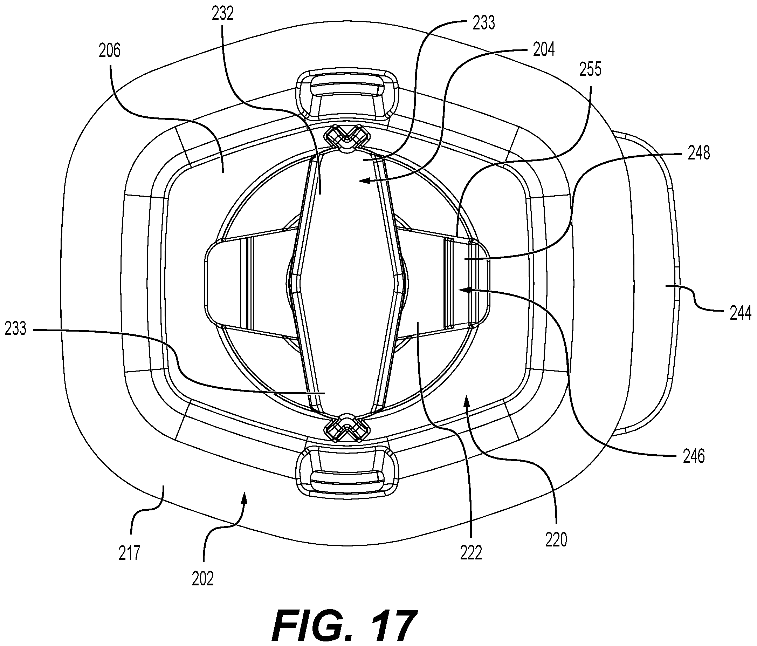

In order to secure the anchor 204 to the anchor fixture 202, the anchor 204 is first oriented such that the anchor lock 232 is in the unlocked position as shown in Figs. 12 and 13. The anchor lock 232 is then inserted through the anchor aperture 222 and into the anchor chamber 220 of the anchor fixture 202. The anchor lock 232 is thus disposed in the anchor chamber 220 but is still in the unlocked position and thus free to pass through the anchor aperture 222, as illustrated for example in Fig. 14. The entirety of the anchor 204 is then rotated in order to rotate the anchor lock 232 to the locked position, as shown in Fig. 17. As will be appreciated, since the anchor 204 is fixed to the accessory 75, the accessory 75 is rotated together with the anchor 204 when the anchor 204 is rotated between the unlocked and locked positions. As shown in Fig. 17, in the locked position, the anchor lock 232 is disposed in the anchor chamber 220 and prevented by the anchor fixture 202 (namely by the top wall portion 208) from passing through the anchor aperture 222. In this embodiment, when the anchor lock 232 is rotated to the locked position, the interlocking members 221 of the anchor fixture 202, which are fixed and disposed within the anchor chamber 220, engage the cams 233 of the anchor lock 232. More specifically, the curved portion 225 of each interlocking member 221 is received in a corresponding recess 239 of one of the cams 233. The anchor lock 232 thus snaps into place when the curved portions 225 are moved into the recesses 239.

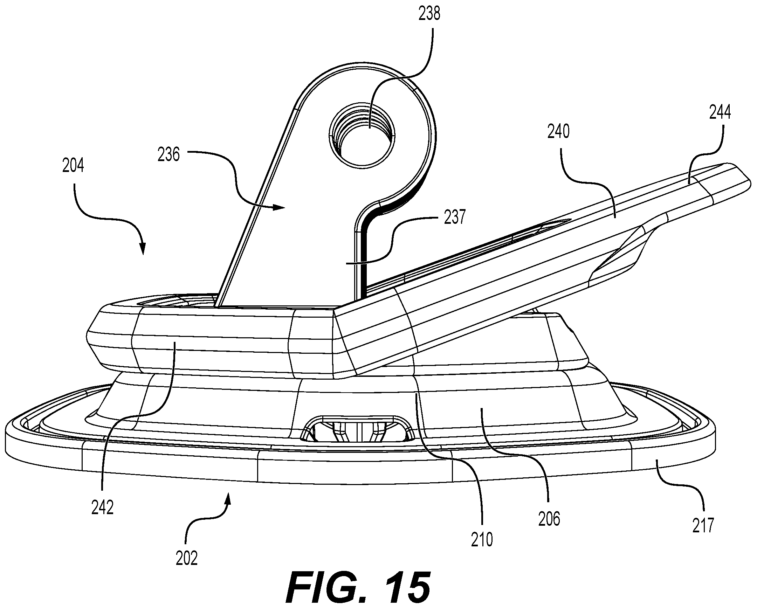

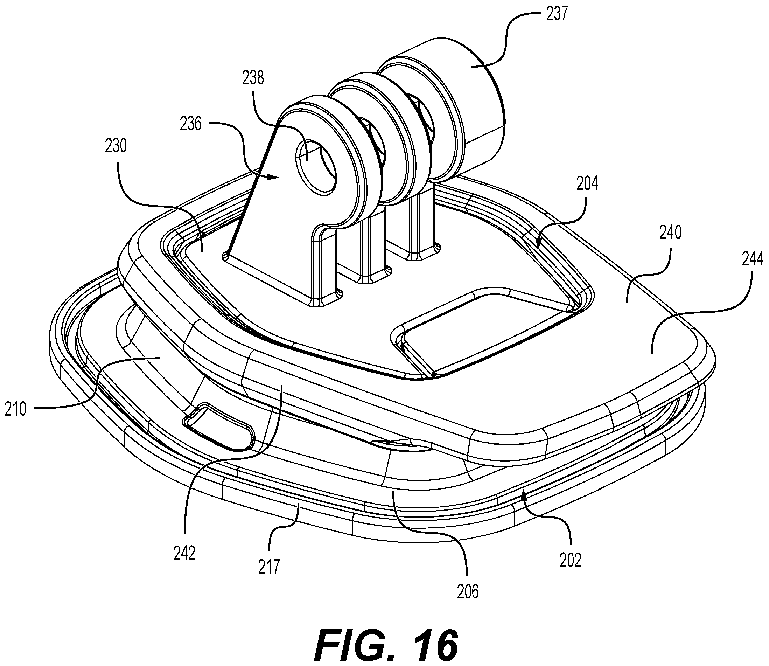

At this point, the anchor 204 is in the position shown in Fig. 15, with the latch handle 244 being lifted such that the latching protrusion 248 is not in engagement with the anchor fixture 202. As shown in Figs. 16 and 17, in order to further secure the anchor lock 232 in the locked position, the user lowers the handle 244 which causes the latching protrusion 248 to be inserted into the anchor aperture 222. As shown in Fig. 17, the latching protrusion 248 is shaped and dimensioned such that, when it is inserted into the anchor aperture 222, the latching protrusion 248 is in contact with part of an inner edge portion 255 of the top wall portion 208 defining the anchor aperture 222 such as to wedge the anchor lock 232 in the locked position. As such, the latching protrusion 248 thereby prevents the anchor lock 232 from moving to the unlocked position. This may be helpful to ensure that the anchor lock 232 remains in the locked position even when it is subjected to significant vibrations (e.g., if the user is wearing the garment 10' while driving a snowmobile). It is contemplated that, in other embodiments, an aperture defined by the anchor fixture 202 and different from the anchor aperture 222 could receive the latching protrusion 248.

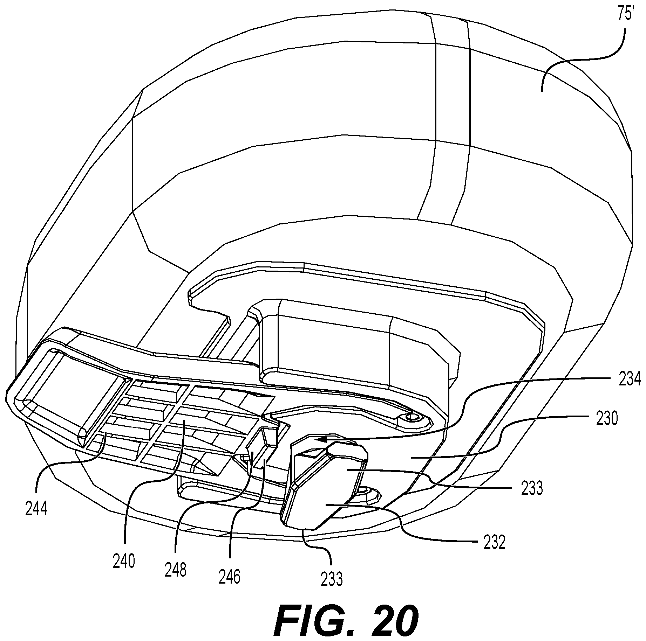

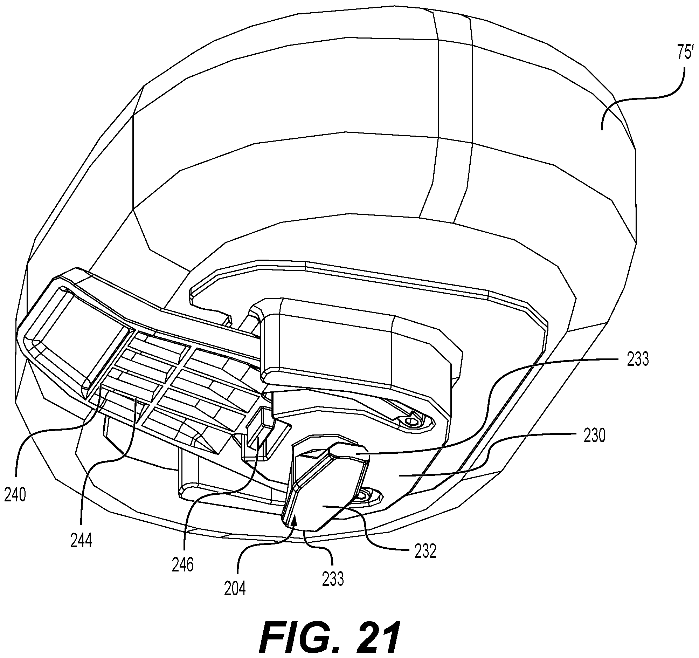

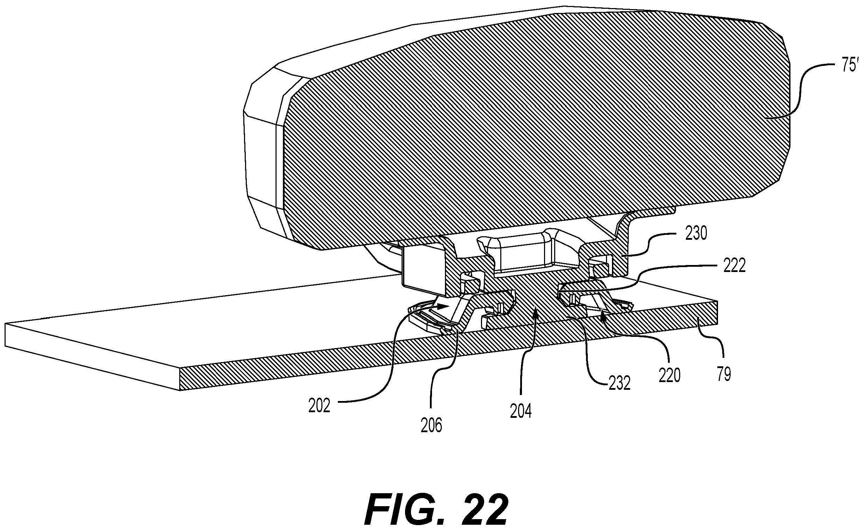

The anchor 204 may also be configured differently in other embodiments. For instance, an alternative embodiment of the anchor 204 attached to the accessory 75' is illustrated in Figs. 20 to 22. In this embodiment, the anchor 204 does not include the stands 237 described above. Instead, the anchor base 230 is connected to the accessory 75' via fasteners and/or glue, or the anchor base 230 could be molded onto a bottom of the body of the accessory 75'. In addition, as can be seen, the handle 244 of the latch 240 extends further outwards from the anchor base 230 to accommodate the size of the accessory 75'.

It is contemplated that, in other embodiments, the anchor 204 may instead be connected to the textile body 79 of the garment 10' while the anchor fixture 202 is connected to the accessory 75'. For instance, in such embodiments, the anchor 204 could have an edge portion similar to the edge portion 217 described above with respect to the anchor fixture 202.

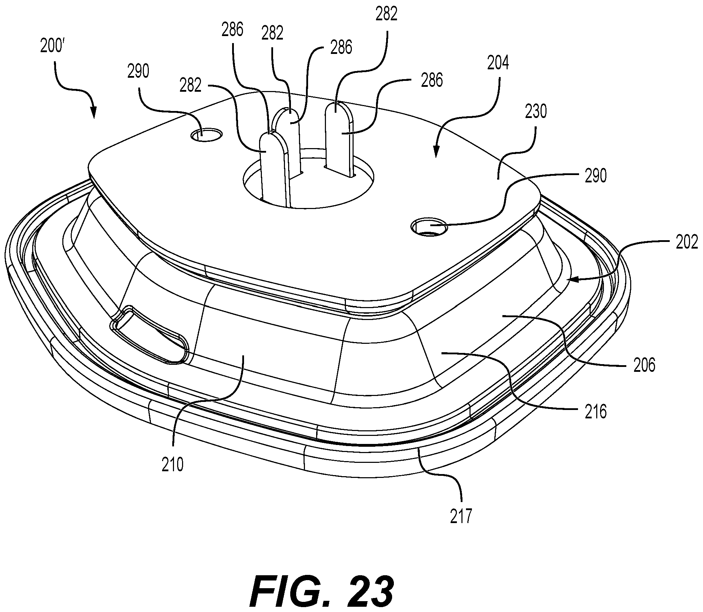

Referring back to Fig. 10, according to another embodiment, a system 200' is provided that is similar to the system 200 described above. Therefore, in Figs. 23 to 28 which illustrated the system 200', the same reference numbers as used in the description of the system 200 have been used to designate equivalent components of the system 200'. Only the differences between the system 200' and the system 200 will thus be described herein. As will be explained below, one of the main differences between the systems 200, 200' is that the anchor fixture 202 and the anchor 204 of the system 200' are configured to be electrically connected to one another in order to power the accessory 75'.

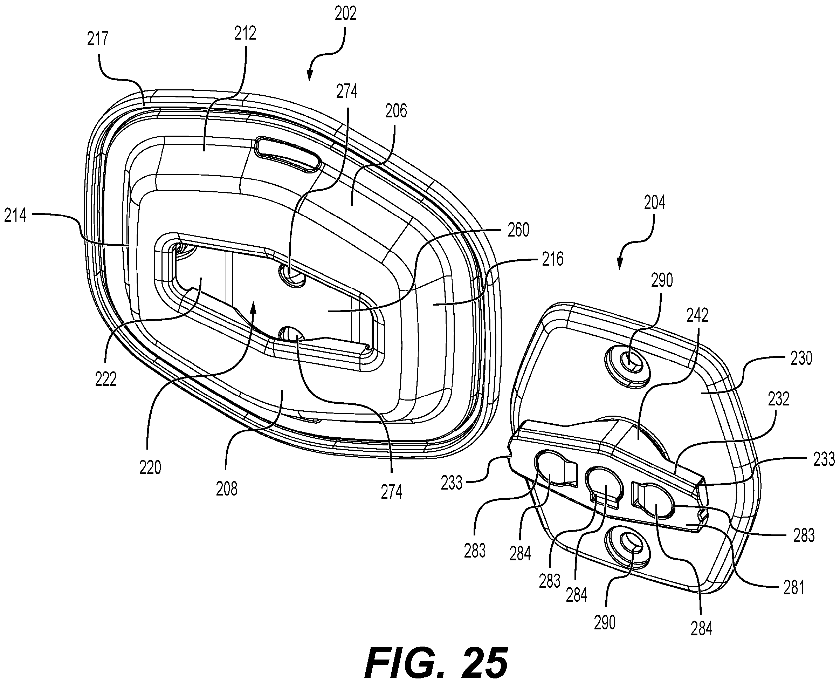

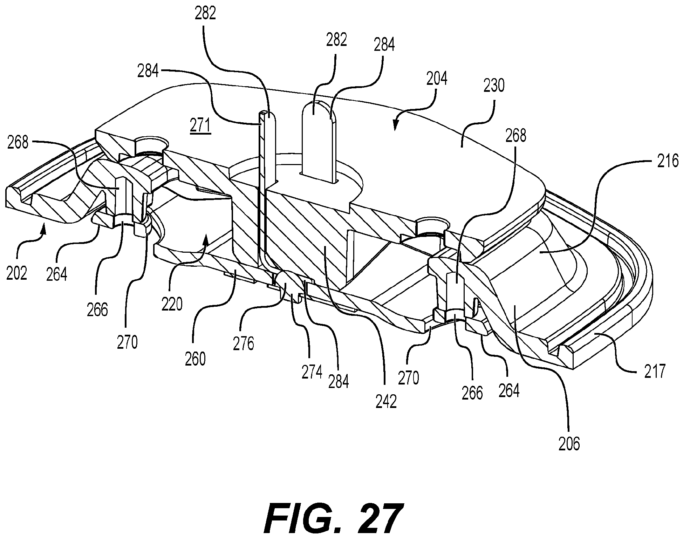

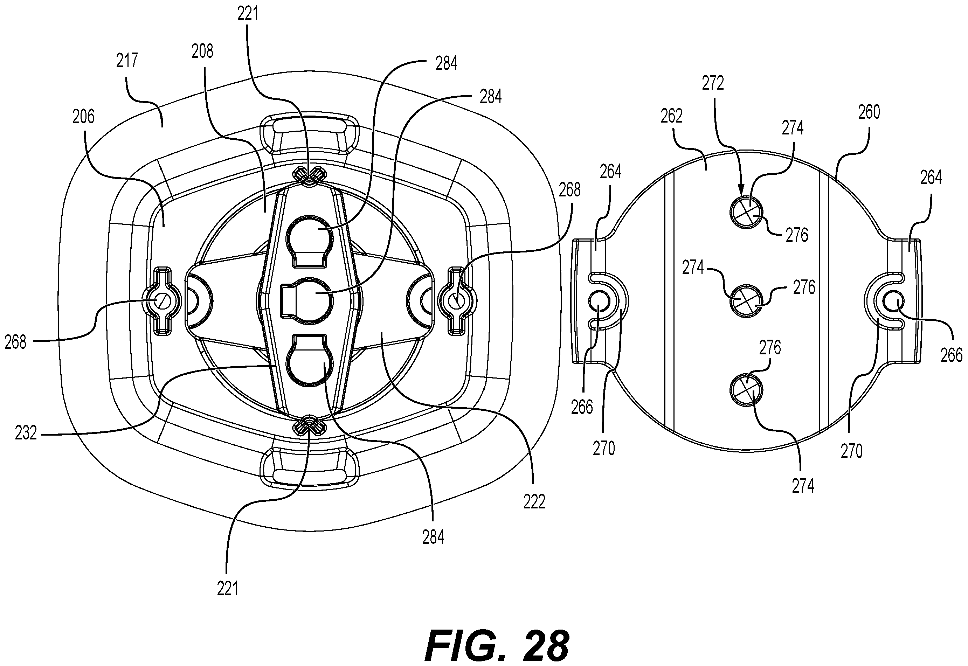

With reference to Figs. 25 to 28, in this embodiment, the anchor fixture 202 of the system 200' includes a backing member 260 connected to the fixture body 206. Together with the wall portions 208, 210, 212, 214, 216 of the fixture body 206, the backing member 260 defines the anchor chamber 220. That is, at least part of the anchor chamber 220 is defined between the backing member 260 and the fixture body 206. As best shown in Fig. 28, the backing member 260 has a body 262 which, in this example, is generally circular. It is contemplated that the body 262 may have any other suitable shape in other embodiments. In this embodiment, the body 262 defines two flange portions 264 on opposite sides of the body 262 configured for connection to the fixture body 206. Notably, the flange portions 264 define respective openings 266 for receiving fasteners (not shown) that connect the backing member 260 to the fixture body 206. In particular, the fasteners extend through the openings 266 and into respective openings 268 (Figs. 27, 28) defined by the fixture body 206. The openings 268 are threaded to securely receive the fasteners therein. As shown in Figs. 27 and 28, in this embodiment, the body 262 of the backing member 260 also defines two semi-circular slots 270 that partially surround respective ones of the openings 266. The semi-circular slots 270 afford some flexibility to the flange portions 264.

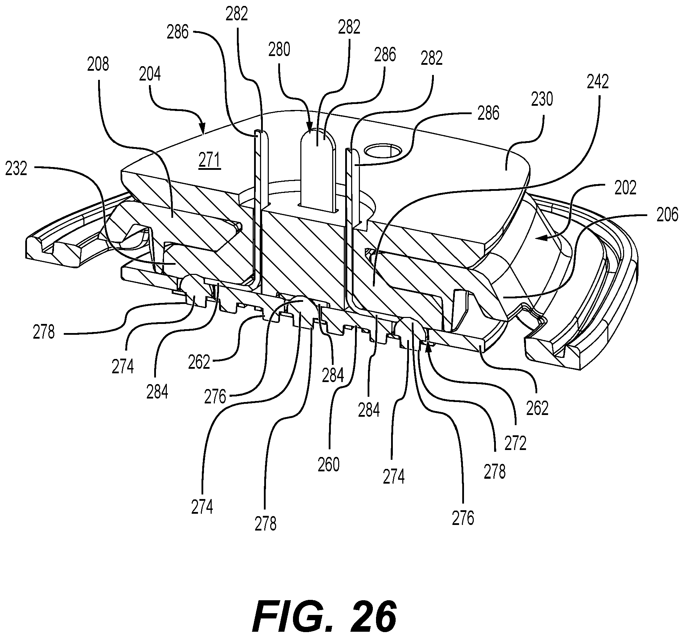

As shown in Figs. 26 to 28, the backing member 260 also has a fixture electrical element 272 that is configured to electrically connect the anchor fixture 202 to the anchor 204 as will be described in more detail below. In this embodiment, the fixture electrical element 272 includes three electrical contacts 274 that are arranged in a row and. Each of the electrical contacts 274 has a dome-shaped contact portion 276 and a connecting portion 278 extending below the contact portion 276. The contact portion 276 protrudes from a top surface of the body 262 of the backing member 260. As such, the contact portion 276 is disposed within the anchor chamber 220. The connecting portion 278 is configured to be electrically connected to a power source 145' (Fig. 10). Notably, as shown in Fig. 10, wiring 155 connects each of the anchor fixture 202 of the systems 200' to the power source 145' which is supported by the textile body 79 of the garment 10'. In this embodiment, the power source 145' is a portable battery pack. It is contemplated that the power source 145' could be any other suitable power source in other embodiments.

Referring now to Figs. 23 to 25, the anchor 204 of the system 200' has an anchor electrical element 280 that is configured to contact the fixture electrical element 272. In this embodiment, the anchor electrical element 280 includes three conducting members 282 that extend at least partly through the anchor base 230 and through the anchor lock 232. Notably, as best shown in Fig. 25, each of the conducting members 282 has a contact portion 284 that is exposed at a lower surface 281 of the anchor lock 232. In particular, the lower surface 281 of the anchor lock 232 defines three openings 283 in which the contact portions 284 of the conducting members 282 are disposed. In this embodiment, the contact portions 284 are formed by bending of the conducting members 282 which provides the contact portions 284 with a certain flexibility to deflect upon coming into contact with the electrical contacts 274. As best shown in Figs. 26 and 27, from the anchor lock 232, the conducting members 282 extend upwardly through the stem 242 of the anchor 204 and protrude from a top surface 271 of the anchor base 230. In particular, each of the conducting members 282 has a connecting portion 286 that protrudes upward from the top surface 271 of the anchor base 280. The connecting portion 286 is configured to conduct electricity to a power circuit of the accessory 75'. Notably, the connecting portions 286 form three prongs that are receivable by corresponding receptacles defined by the accessory 75'.

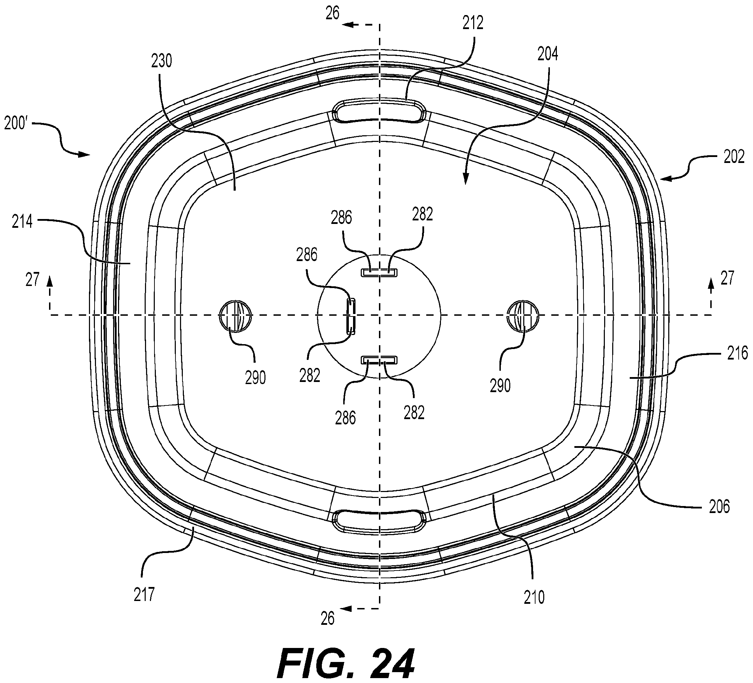

As will be appreciated, in this embodiment, the accessory mount 236 previously described is omitted. Rather, the accessory base 230 is connected to the accessory 75' via fasteners (not shown) received by openings 290 (Figs. 23, 24) defined by the anchor base 230. The anchor 204 may be connected to the accessory 75' in any other suitable way.

In order to secure the anchor 204 to the anchor fixture 202 of the system 200', the anchor 204 is first oriented such that the anchor lock 232 is in the unlocked position. The anchor lock 232 is then inserted through the anchor aperture 222 and into the anchor chamber 220 of the anchor fixture 202. The anchor lock 232 is thus disposed in the anchor chamber 220 but is still in the unlocked position and thus free to pass through the anchor aperture 222. The entirety of the anchor 204 is then rotated in order to rotate the anchor lock 232 to the locked position, shown in Figs. 26 to 28. As will be appreciated, since the anchor 204 is fixed to the accessory 75', the accessory 75' is rotated together with the anchor 204 when the anchor 204 is rotated between the unlocked and locked positions. In the locked position, the anchor lock 232 is disposed in the anchor chamber 220 and prevented by the anchor fixture 202 (namely by the top wall portion 208) from passing through the anchor aperture 222. Upon doing so, the anchor electrical element 280 comes into contact with the fixture electrical element 272. Notably, the contact portions 276, 284 are aligned and come into contact with one another to establish electrical communication therebetween. As such, since the anchor electrical element 280 is electrically connected to the accessory 75' while the fixture electrical element 272 is electrically connected to the power source 145', the accessory 75' is electrically connected to the power source 145' via the anchor 204 and the anchor fixture 202.

Similarly to the system 200, the roles of the anchor 204 and the anchor fixture 202 may be reversed in other embodiments, with the anchor 204 connected to the textile body 79 and the anchor fixture 202 connected to an accessory body of the accessory 75'.

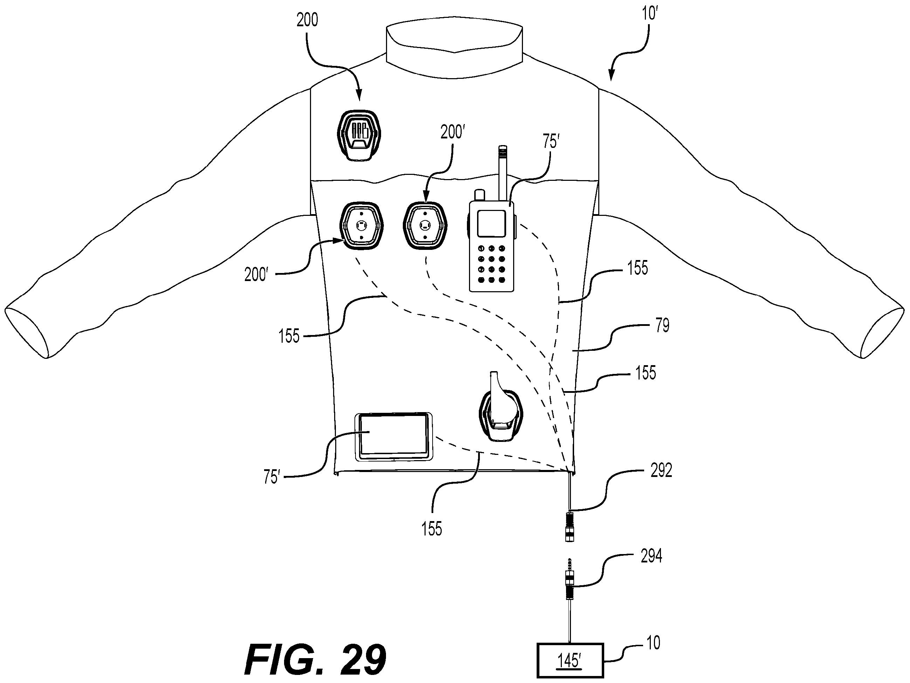

With reference to Fig. 29, according to an alternative embodiment, the power source 145' may be external to the garment 10'. Notably, in this alternative embodiment, the wiring 155 electrically connects the anchor fixtures 202 of the various systems 200' to a garment power connector 292 of the garment 10' that is configured to be mated with an external connector 294. In this embodiment, the garment power connector 292 is a receptacle and the external connector 294 is a plug that is received within the garment power connector 292. The external connector 294 is itself electrically connected to the power source 145' which, in this alternative embodiment, is a battery of the snowmobile 10. Other types of power sources are also contemplated.

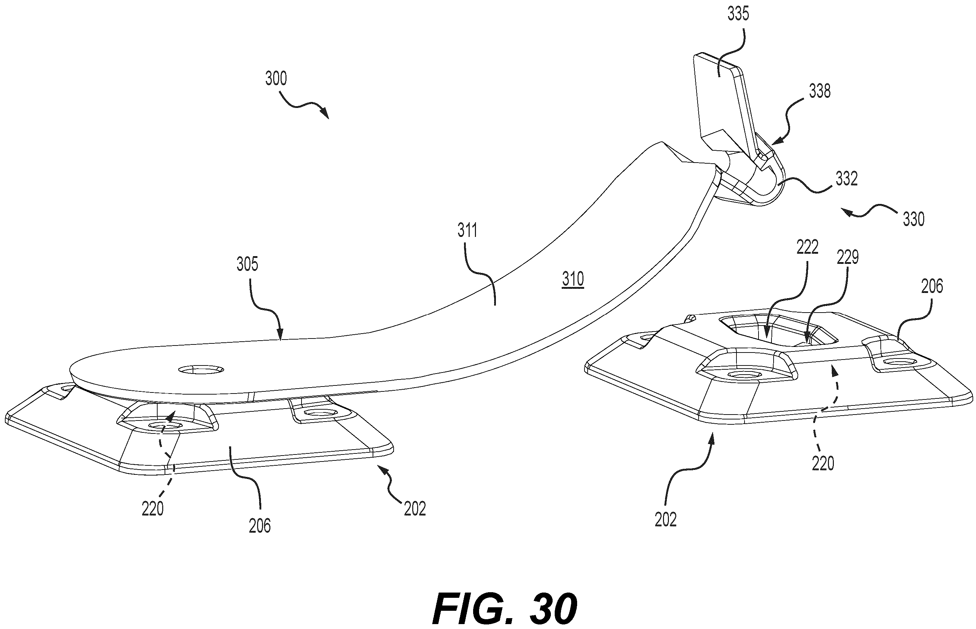

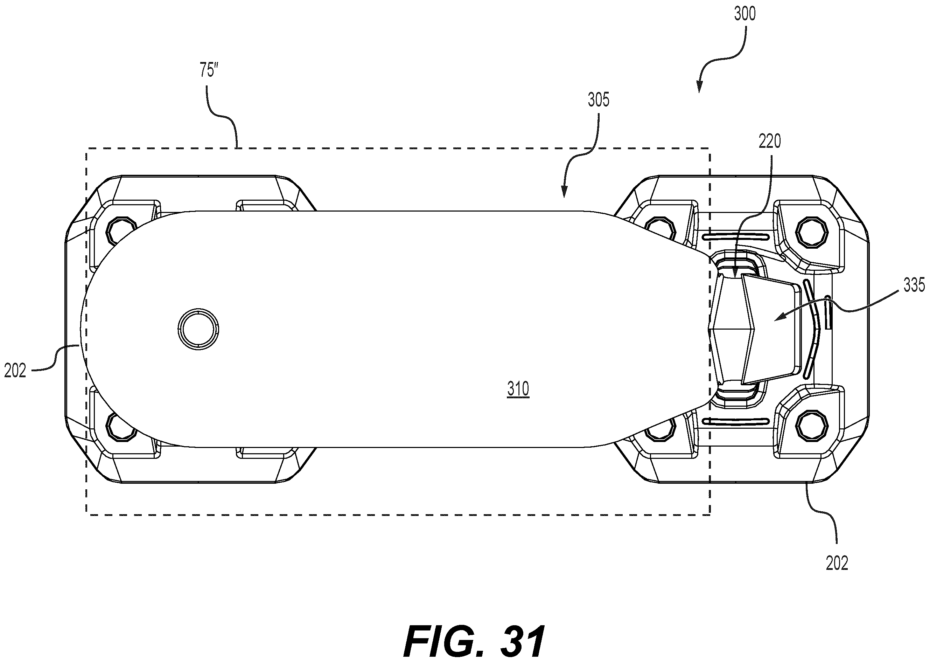

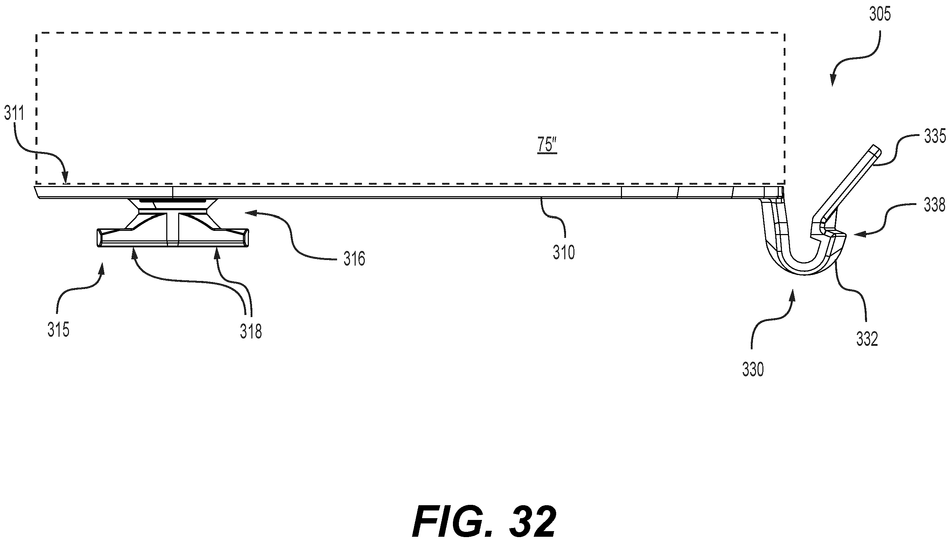

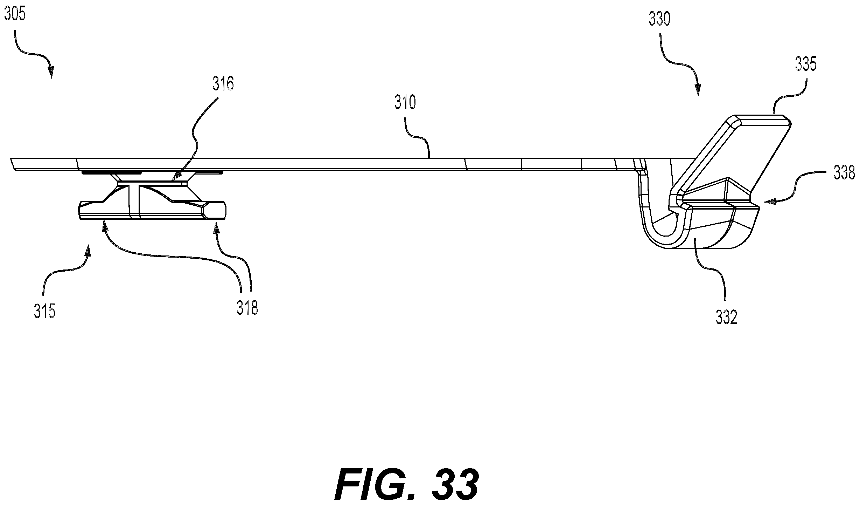

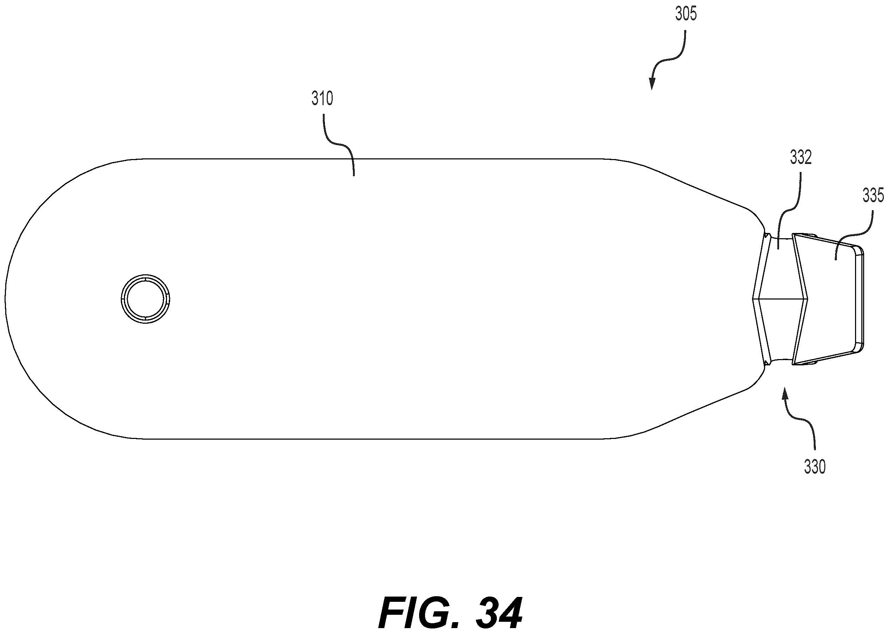

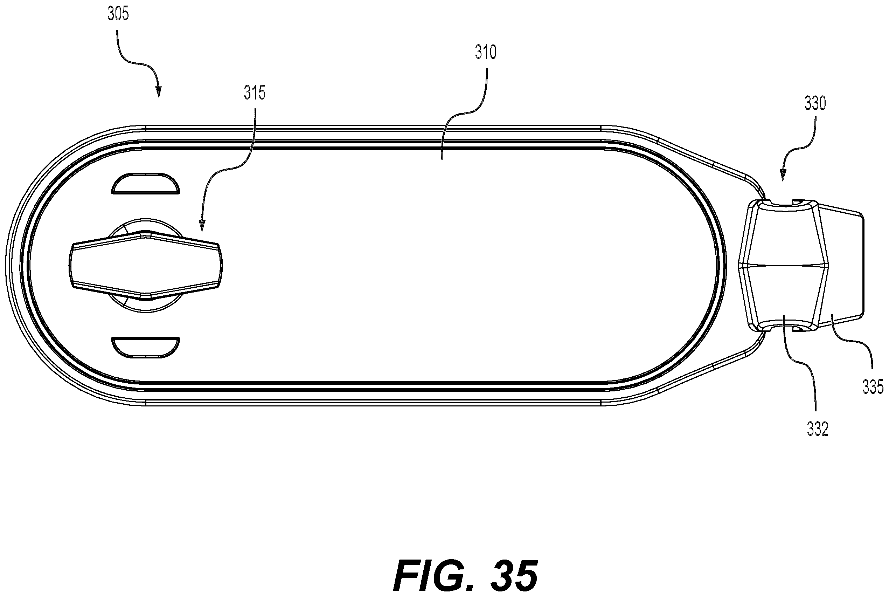

Another non-limiting embodiment of a system 300 for connecting an accessory to an item is illustrated in Figs. 30 to 37. The system 300 is schematically illustrated connecting a container accessory 75" in Figs. 31 and 32, for example for connecting to the snowmobile 10 or the garment 10'. It is contemplated that the system 300 could be used for connecting a variety of accessories to a variety of items.

The system 300 includes two anchor fixtures 202 configured to be connected to the item. The anchor fixtures 202 of the system 300 are generally the same anchor fixtures 202 illustrated and described with reference to Fig. 19A. Therefore, detailed description of the anchor fixtures 202 will not be repeated here. It is contemplated that some details of the anchor fixtures 202 of the system 300 could vary. It is further contemplated that the anchor fixtures 202 could be omitted in some embodiments, for example where an item has an anchor chamber and aperture formed therein. For reference and as is described above, each anchor fixture 202 defines an anchor chamber 220 and an anchor aperture 222 opening into the anchor chamber 220.

The system 300 also includes an attachment base 305 for connecting to the two anchor fixtures 202 when in use. The attachment base 305 includes and is generally formed by a base body 310 configured to be connected to the accessory. In the schematic example in Figs. 31 and 32, a connection surface 311 of the base body 310 is glued or sewn to the accessory 75". The base body 310 is at least partially formed from a flexible material, such as flexible plastic or rubber. As is illustrated in Fig. 30, this permits the base body 310 to flex when moving between locked and unlocked positions of the system 300, as will be described in more detail below.

The attachment base 305 includes a snap joint 330 attached to the base body 310 at one end portion thereof. The base body 310 and the snap joint 330 are integrally formed in the present embodiment. It is contemplated that the snap joint 330 could be separately formed and subsequently attached to the base body 310 in some embodiments. The snap joint 330 is shaped and adapted for selectively inserting into the anchor aperture 222 of one of the anchor fixtures 202, as will be described in additional detail below.

In the illustrated embodiment, the snap joint 330 is specifically a U-shaped snap fit joint 330. The U-shaped snap fit joint 330 includes a U-shaped body 332 shaped and arranged to be inserted into the anchor aperture 222. The U-shaped body 332 includes a ridge 338 on an exterior side thereof, also referred to as a lip 338. The ridge 338 selectively abuts the anchor aperture 222 when the system 300 is in the locked position. One end of the U-shaped body 332 is connected to the base body 310. The snap fit joint 330 also includes a tab 335 connected to and extending from an opposite end of the U-shaped body. Use of the ridge 338 and the tab 335 of the U-shaped snap fit joint 330 is described further below.

The attachment base 305 further includes an anchor lock 315 attached to the base body 310 near an end portion thereof, generally opposite the snap joint 330. The anchor lock 315 is shaped and arranged to be selectively inserted into one of the anchor fixtures 202, described further below. The anchor lock 315 is connected to the base body 310 via a stem 316. The anchor lock 315 includes two cams 318 extending from opposite sides of the stem 316. In the present embodiment, the base body 310 and the anchor lock 315, as well as the snap joint 330, are integrally formed. It is contemplated that the anchor lock 315 could be separately formed and then subsequently connected to the base body 310 is some embodiments.

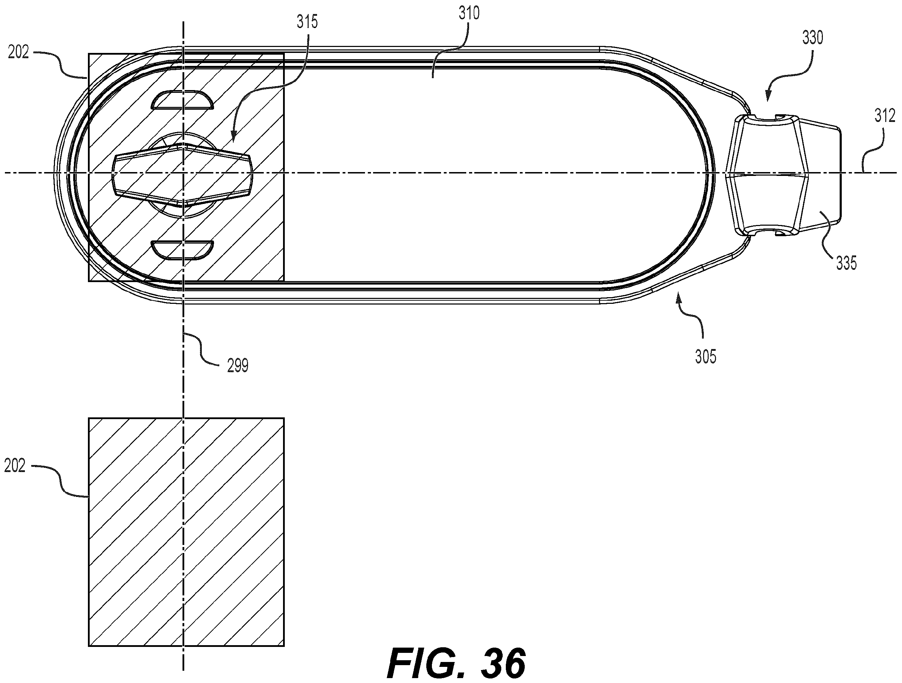

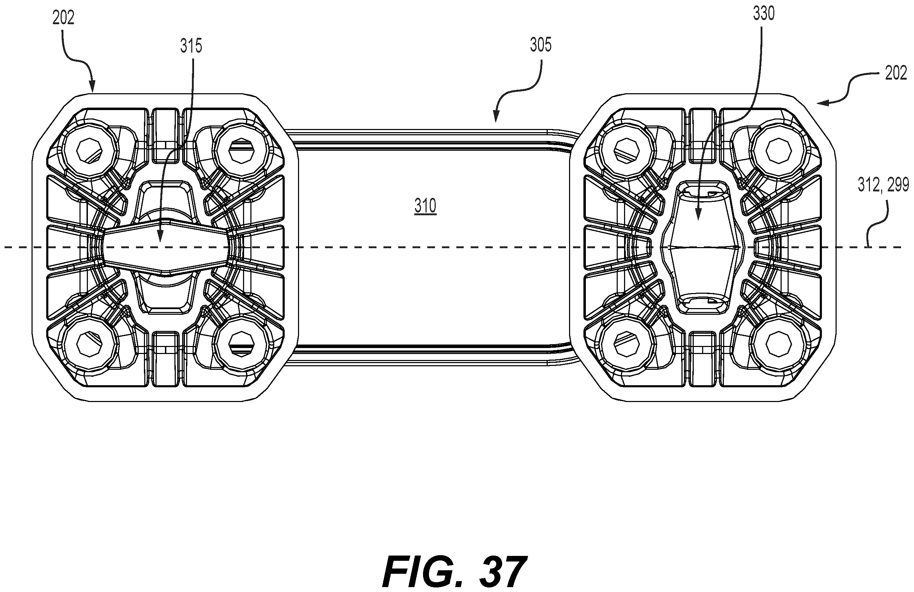

The attachment base 305 is selectively moveable between an unlocked position and a locked position, and vice versa. Specifically, the anchor lock 315, when inserted into the anchor aperture 222, is rotatable relative to the corresponding anchor fixture 202 between the unlocked position, Figs. 31 and 37, and the locked position, shown schematically in Fig. 36. In the locked position, the attachment base 305 is selectively connected to the anchor fixtures 202 at both ends of the attachment base 305.

More specifically, in the locked position, the anchor lock 315 is disposed in the anchor chamber 220 of one anchor fixture 202, the anchor lock 315 being prevented by the anchor fixture 202 from passing through the anchor aperture 222. Further in the locked position, the snap joint 330 is generally aligned with the anchor aperture 222 of the other anchor fixture 202 and is selectively inserted therein. As is shown in Fig. 37, when in the locked position, a long axis 312 of the attachment base 305 is positioned parallel to a line 299 extending through the centers of the anchor apertures 222 of the anchor fixtures 202.

As is noted above and illustrated in Fig. 30, the base body 310 is at least partially flexible, which permits the snap joint 330 to be selectively inserted into and removed from the anchor aperture 222 when the anchor lock 315 is in the locked position. When the snap joint 330 is inserted into the anchor aperture 222, a top edge of the ridge 338 abuts an edge 229 of the anchor aperture 222 to selectively maintain the snap joint 330 in the anchor fixture 202. To remove the snap joint 330 from the anchor aperture 222, the tab 335 is bent to bring the tab-connected end of the U-shaped body 332 toward the base body-connected end of the U-shaped body 332, thereby permitting the ridge 338 to pass the edge of the anchor aperture 222. The snap joint 330 is then pulled generally upward, flexing the base body 310, in order to fully disengage from the anchor fixture 202. The attachment base 305 is then rotated a quarter-turn in order to align the anchor lock 315 with the anchor aperture 222. As the anchor lock 315 is rotationally fixed relative to the base body 310 and the snap joint 330, an entirety of the attachment base 305 is rotated with the anchor lock 315 to move the anchor lock 315 between the unlocked position and the locked position, and vice versa.

In the unlocked position, the anchor lock 315 is free to pass through the anchor aperture 222 and the snap joint 330 is misaligned with the corresponding anchor fixture 202. As is shown in Fig. 36, when in the unlocked position, the long axis 312 of the attachment base 305 is positioned perpendicular to the line 299 extending through centers of the anchor apertures 222 of the anchor fixtures 202 as installed for use in the system 300.

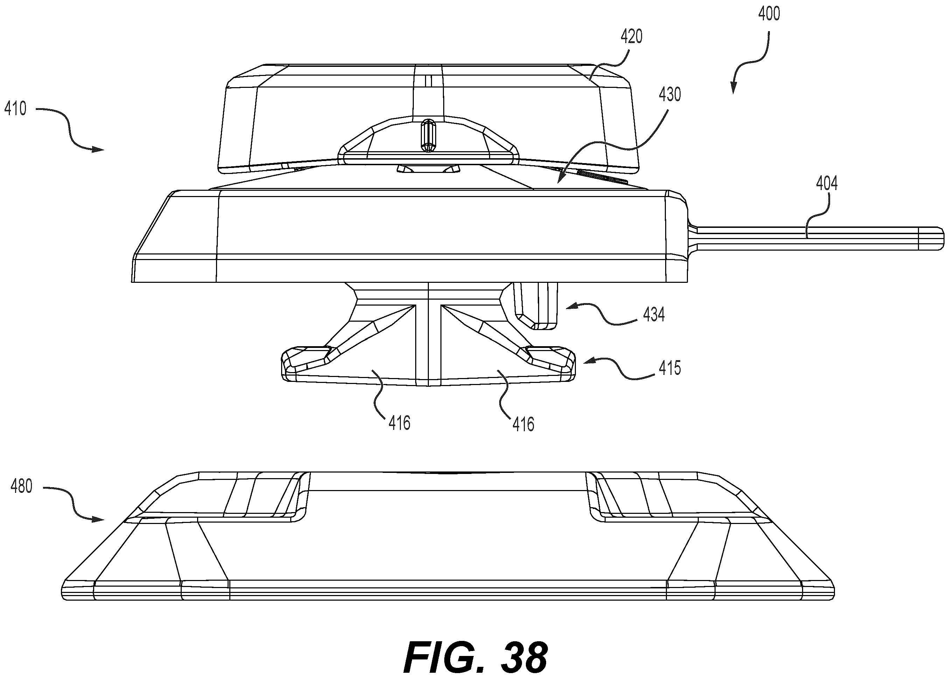

With reference to Fig. 38, another non-limiting embodiment of a system 400 for connecting an accessory to an item is illustrated.

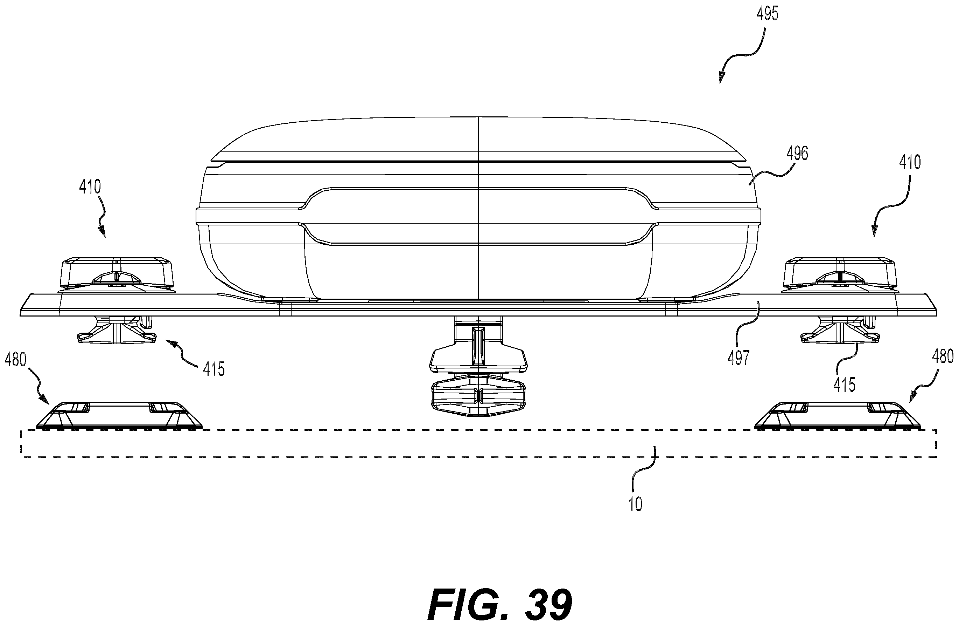

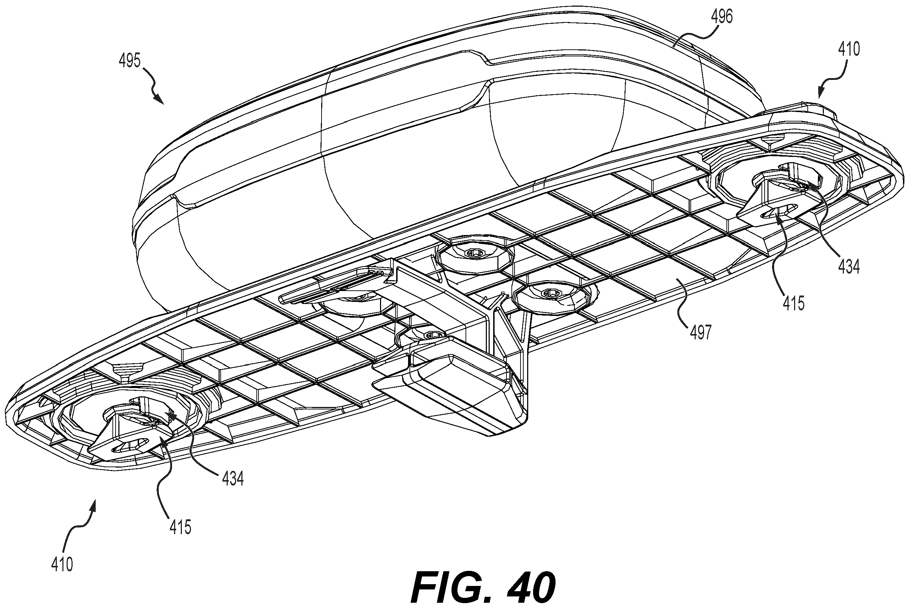

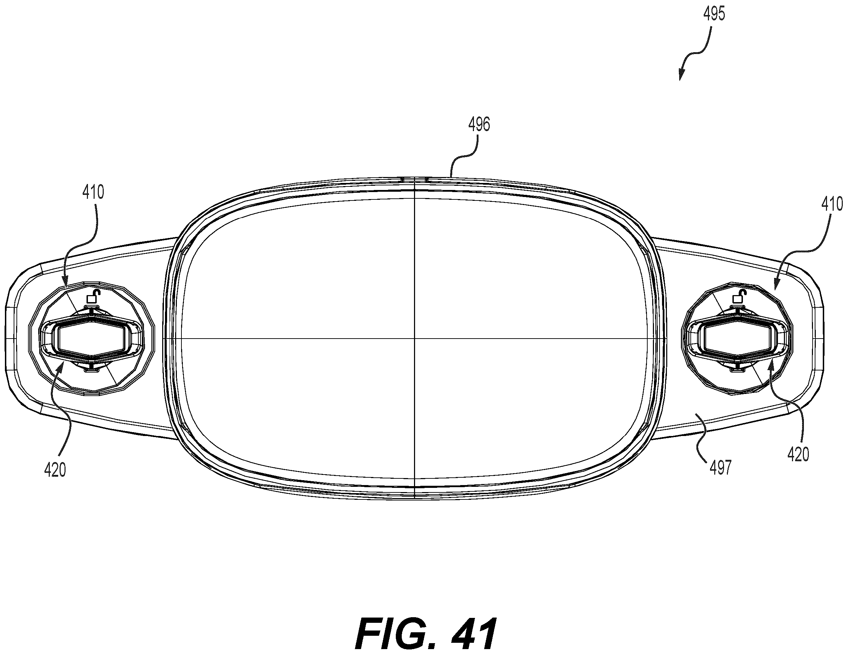

The system 400 is illustrated connecting a storage accessory 495 in Figs. 39 to 41 to the snowmobile 10 (shown schematically in Fig. 39). The storage accessory 495 includes a storage box 496 and a platform 497 to which the storage 496 is connected. The system 400 selectively connects the storage accessory 495 to the snowmobile 10 by selectively connecting anchors 410 connected to the storage accessory 495 to anchor fixtures 480 connected to the snowmobile 10, details of which are described below. In another non-limiting example, the anchors 410 are illustrated connected to a bag accessory 498 for selectively connecting the bag 498 to an item such as the snowmobile 10. As will be described further below, multiple anchor bases 404 are connected to the bag 498, the anchors 410 being connected to the anchor bases 404. It is contemplated that the system 400 could be used for connecting a variety of other accessories to a variety of items, including but not limited to the snowmobile 10 and the garment 10'.

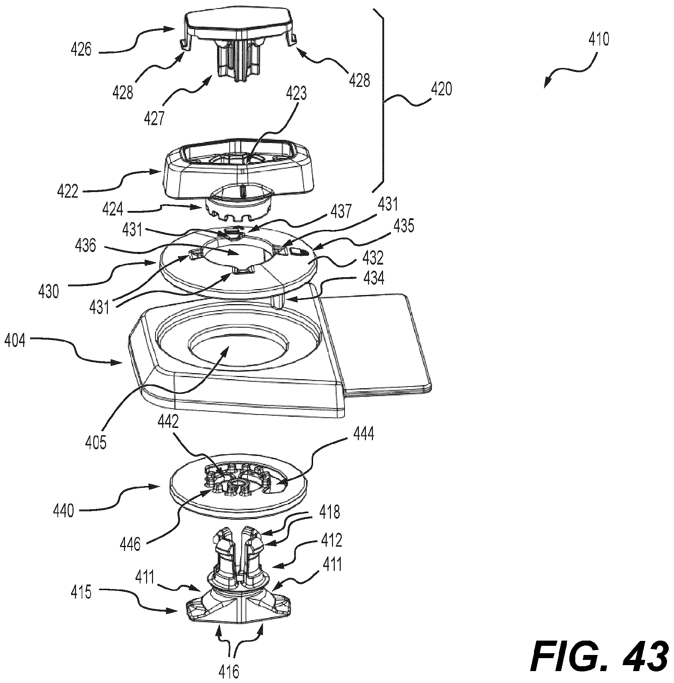

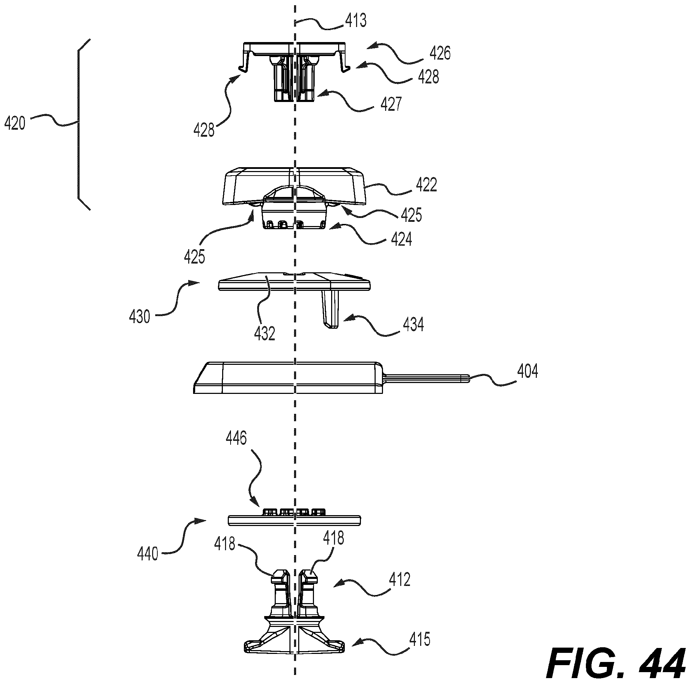

With additional reference to Figs. 43 and 44 and as briefly mentioned above, the system 400 includes the anchor 410 and the anchor fixture 480. A portion of the anchor 410 is selectively received in the anchor fixture 480 for selectively connecting an accessory connected to the anchor 410 to an item connected to the anchor fixture 480. The reverse arrangement is also possible in at least some embodiments, where the anchor fixtures 480 could be connected to an accessory to selectively connect to an item connected to the anchor 410.

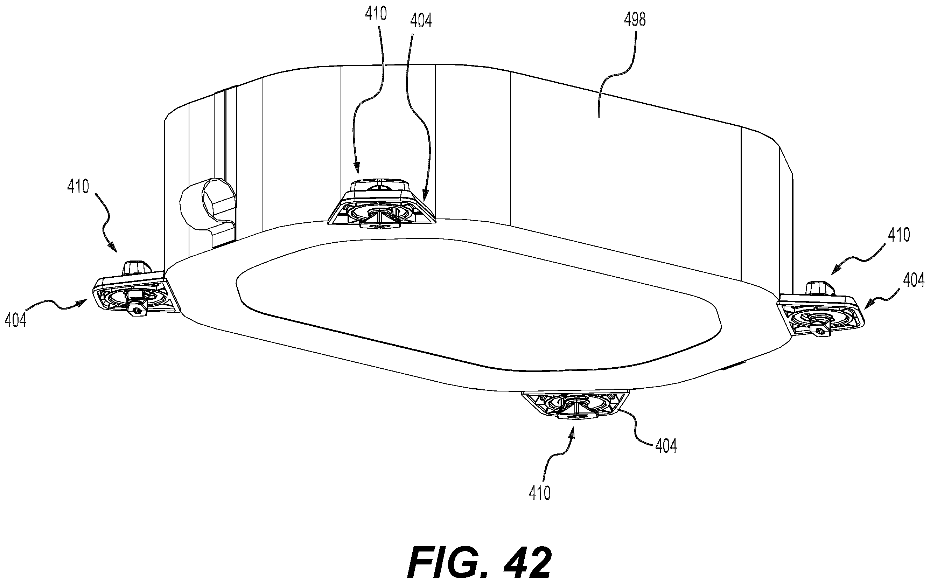

The system 400 also includes the anchor base 404 for connecting the anchor 410 to an accessory in at least some embodiments. The anchor base 404 is configured to be connected to either the accessory or the item. It is further contemplated that the anchor 410 (with or without the anchor base 404) and the anchor fixture 480 could connected to two accessories, in order to connect two accessories together. As is illustrated in Fig. 42 as one non-limiting example, four anchor bases 404 are connected to the bag 498. The anchor base 404 defines a base aperture 405 therein. As will be described in more detail below, the anchor 410 is rotationally connected to the anchor base 404, with a portion of the anchor 410 extending through the base aperture 405. It is noted that while the system 400 is generally described herein using the anchor base 404, the anchor base 404 may be omitted in some non-limiting embodiments, with a portion of the accessory providing a base structure for receiving the anchor 410 therethrough. See for example the embodiment illustrated in Figs. 39 to 41, where the platform 497 receives the anchors 410 without use of the anchor base 404.

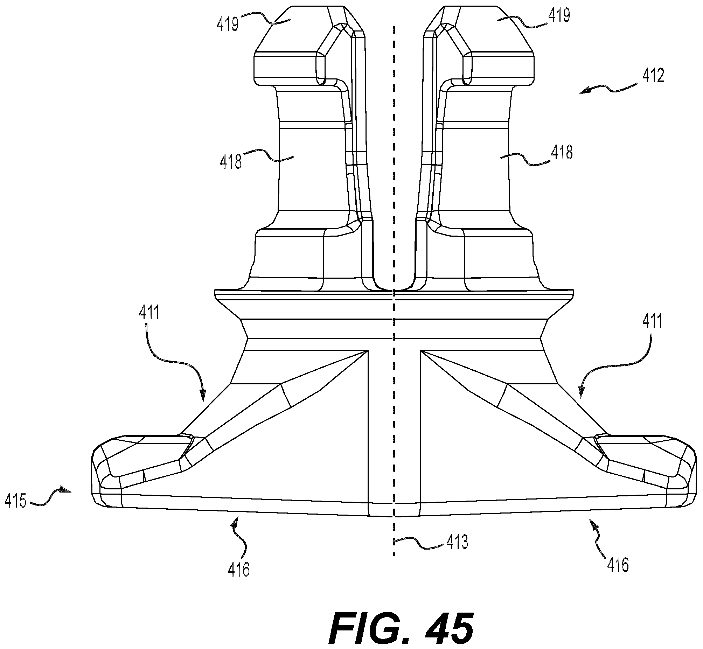

With additional reference to Fig. 45, the anchor 410 has an anchor stem 412 and an anchor lock 415 connected to one end of the stem 412. The anchor stem 412, also referred to as the stem 412, defines an axis 413 about which the anchor lock 415 is rotated during use. The anchor lock 415 includes two cams 416 extending from opposite sides of the stem 412. In the illustrated embodiment, the stem 412 and the anchor lock 415 are integrally connected. In different embodiments, the anchor lock 415 could be differently connected to the stem 412.

As is best seen in Figure 45, the anchor lock 415 further has one or more protrusions extending therefrom for selectively engaging with a surface of the anchor fixture 480 when in the locked position. In the illustrated embodiment, the anchor lock 415 includes a protrusion 411 extending from each cam 416, generally in the form of a conic, bulbous or protruding surface curving out from the junction of the corresponding cam 416 with the stem 412. It is contemplated that the protrusions 411 could take different forms, for example as ridges or bumps on a lever-side surface of the cams 416. Use of the protrusions 411 is described in more detail below.

The anchor 410 also includes a lever 420 connected to the stem 412. The lever 420 allows a user to rotate the stem 412 about the axis 413, thereby rotating the anchor lock 415. In particular, the anchor lock 415 is rotatable about the axis 413 by using the lever 420 between locked and unlocked positions, described further below.

In the present embodiment, the lever 420 includes a handle portion 422 forming the ergonomic portion of the lever 420. The handle portion 422, also referred to as the handle 422, has a passage 423 defined therethrough. One end portion of the handle 422 has a plurality of slots 424 defined therein for engaging with a lock washer 440, described further below. It is contemplated that the lever 420 could be a single integral component in some embodiments, with or without slots defined therein. In the present embodiment, the lever 420 also includes a lever insert 426 disposed at least partially in the passage 423 of the handle 422. The lever insert 426 has an end portion 427 engaged with the stem 412 inside the passage 423 inside the handle 422, thereby securing the lever 420 to the anchor lock 415 via the stem 412. Specifically, the stem 412 is formed from four rigid members 418 and the portion 427 is shaped to fit between the rigid members 418.

When connected to the anchor 410, the anchor base 404 is disposed between the lever 420 and the anchor lock 415. With the lever 420 disposed to one side of the anchor base 404 and the anchor lock 415 disposed on the other side of the anchor base 404, the anchor 410 is connected through the base aperture 405 by inserting the anchor stem 412 through the base aperture 405 and into one side of the passage 423 of the handle portion 422. The lever insert 426 is then inserted into an other side of the passage 423, the end portion 427 being push fit between the rigid members 418 of the stem 412. In order to maintain connection of the lever 420 to the anchor lock 415, the lever insert 426 also includes two clips 428 to secure the lever insert 426 to the handle portion 422. It is further noted that the rigid members 418 include hook end portions 419. These hook end portions 419 pass through the passage 423 and abut an edge (not shown) in the handle 422, preventing removal of the stem 412 from the handle 422.

By the present embodiment, the anchor 410 further includes an indicator washer 430 disposed between the lever 420 and the anchor lock 415, and more specifically between the lever 420 and the anchor base 404. The indicator washer 430 provides a visual indication to the user of the system 400 that the anchor 410 (*i.e.* the anchor lock 415) is in the locked position or in the unlocked position (or generally not locked when not connected to the anchor fixture 480). The indicator washer 430 includes a washer body 432 and a washer stop 434 extending from the washer body 432. The washer body 432 has a central aperture 436 defined therein, through which the stem 412 extends to engage with the lever 420. The washer body 432 is generally dome shaped, such that it resists compression from the convex surface of the washer body 432. In at least some embodiments, the dome formed body 432 provides a longitudinally outward directed force, against which the hook end portions 419 of the stem 412 abutting the handle 422 resist. These counter acting forces thus act to maintain a rigid alignment of the anchor 410. The washer stop 434 extends from the washer body 432 parallel to the anchor stem 412, generally toward the anchor lock 415. Use of the washer stop 434 will be described in more detail below. The indicator washer 430 includes at least one visual indicator for providing a visual indication of a locking status of the anchor 410 to a user. In the present embodiment, the indicator washer 430 includes both a lockedstatus indicator symbol 435 and an unlocked-status indicator symbol 437. In some embodiments, the indicator washer 430 could include only one of the indicator symbols 435, 437, or a different indicator. The washer body 432 also has formed therein two pairs of indents 431 (Fig. 43), each pair of indents 431 being aligned with one of the indicator symbols 435, 437. Two oppositely disposed bumps 425 of the handle 222 (Fig. 44), positioned on a side adjacent the indicator washer 430, are received in the indents 431 when the anchor lock 415 and the lever 420 are in the locked or unlocked positions. When received in the indents 431, the bumps 425 aid in indicating that the lever 420 is in the correct position, *i.e.* the lever 420 clicks into place when the anchor lock 415 is in the locked or unlocked position.

The anchor 410 further includes a lock washer 440 disposed between the base aperture 405 of the anchor base 404 and the anchor lock 415. The lock washer 440 is thus oppositely disposed to the indicator washer 430 (relative to the base aperture 405) and acts as a stabilizing feature to aid in maintaining the correct positioning of the anchor 410 relative to the anchor base 404 (or the accessory portion defining an aperture in embodiments omitting the anchor base 404). The lock washer 440 could be omitted in some embodiments.

The lock washer 440 has defined therein a central aperture 442 through which extends the anchor stem 412 for connecting with the lever 420. The lock washer 440 also has defined therein a channel 444, the channel 444 having the form of an arc centered on the axis 413. The washer stop 434 of the indicator washer 430 extends through the channel 444, with the channel 444 being sized and shaped to permit movement of the washer stop 434 relative to the lock washer 440. Relative motion of the different components of the anchor 410 during use is described in more detail below. The lock washer 440 also includes a plurality of teeth 446 disposed on a lever-facing surface thereof. The teeth 446 are shaped and arranged to engage with the slots 424 of the lever 420 (specifically of the handle 422). The lock washer 440 is thus rotationally fixed to the lever 420.

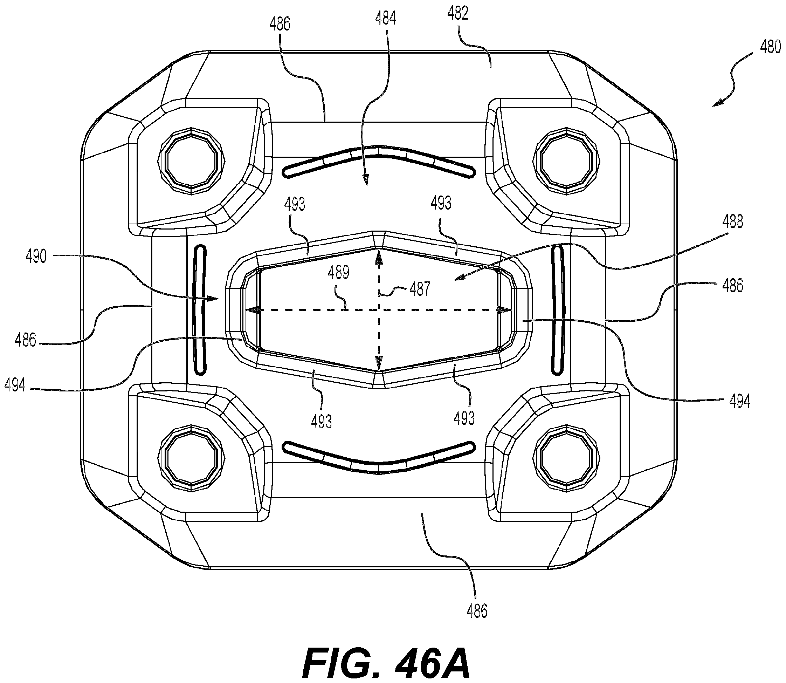

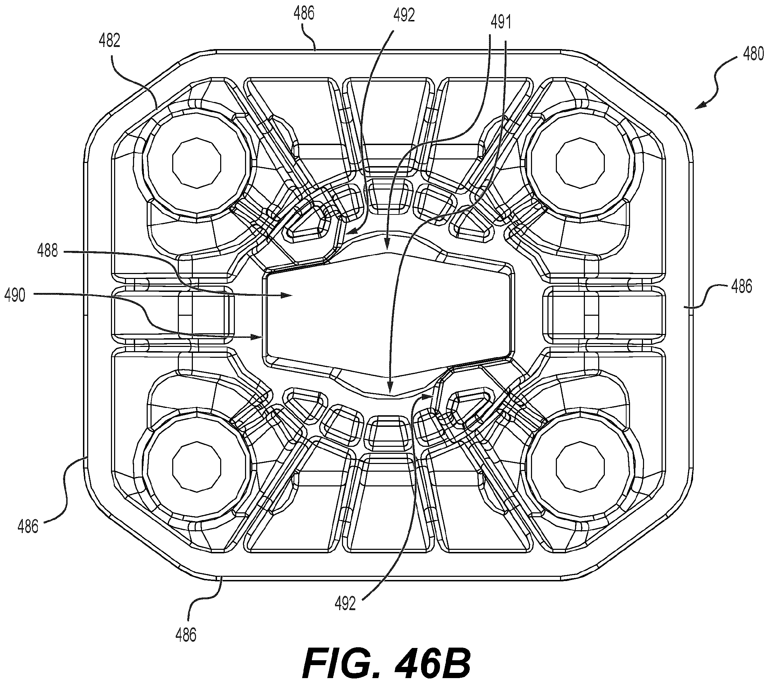

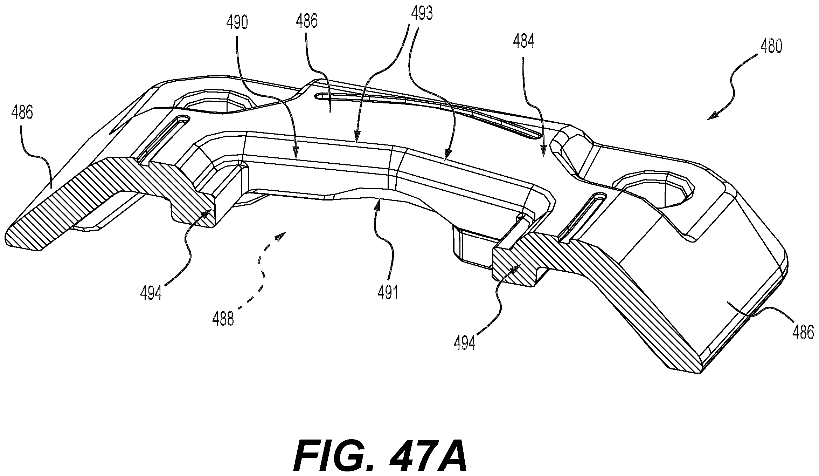

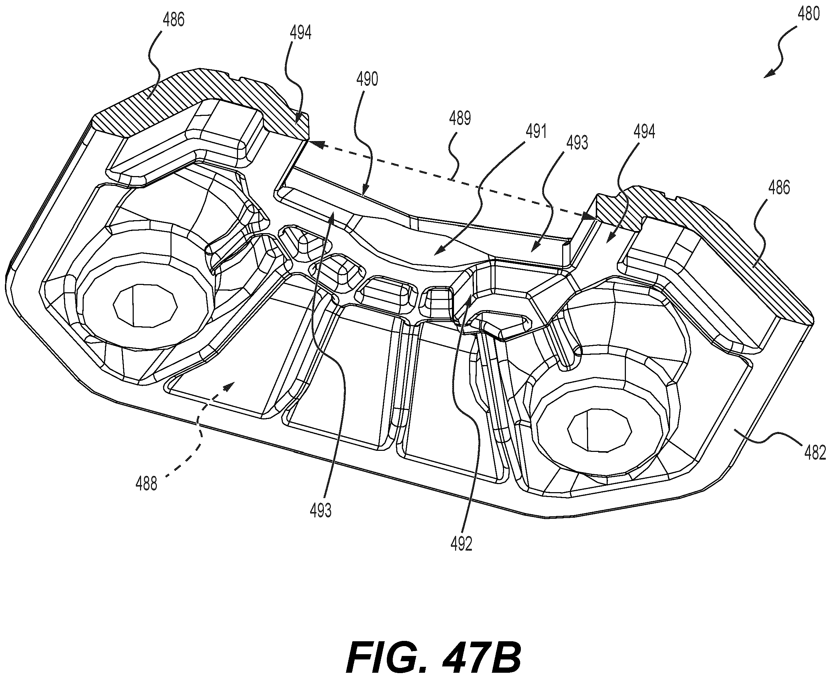

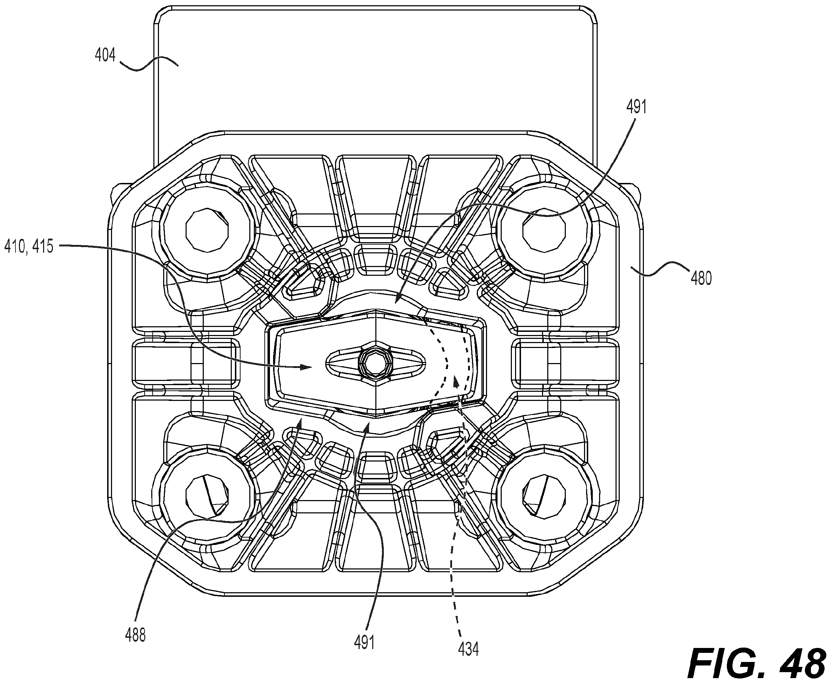

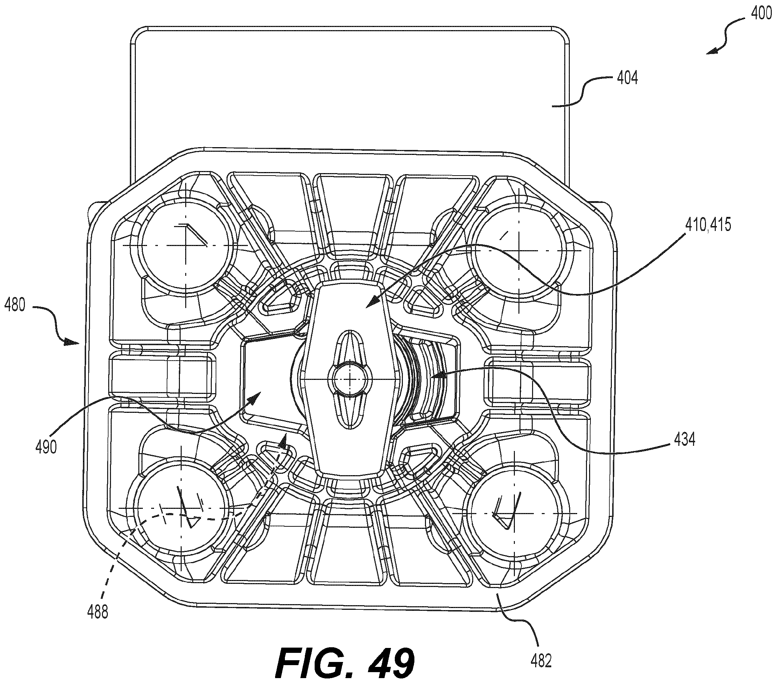

The system 400 also includes an anchor fixture 480 that is fixable to an item, such as the snowmobile 10 or the garment 10', the anchor 410 being mateable with the anchor fixture 480. With additional reference to Figs. 46A,B and 47A,B, the anchor fixture 480 has a fixture body 482 including a top wall portion 482 and four side wall portions 486. Each of the wall portions 484, 486 has an interior surface and an exterior surface. The interior surfaces of the wall portions 484, 486 define an anchor chamber 488 that is configured to receive therein the anchor lock 415. The top wall portion 484 also defines an anchor aperture 490 that opens into the anchor chamber 488. The anchor lock 415 is selectively inserted into the anchor chamber 488 through the anchor aperture 490 in order to secure the anchor 410 to the anchor fixture 480. The anchor lock 415 is illustrated disposed in the anchor chamber 488 in the unlocked position in Fig. 48 and in the locked position in Fig. 49.

As can be seen from Fig. 46A, the anchor aperture 490 is a hexagonal aperture 490 in the present embodiment. The hexagonal aperture 490 is defined by two shorter end side portions 494 and four longer longitudinal side portions 493. Each of the two end side portions 494 are shorter than each of the four longitudinal side portions 493. A maj or axis 489 of the anchor aperture 490 is defined by a line 489 extending between the two end side portions 494 and a minor axis 487 of the anchor aperture 490 is defined by a line 487 extending between junctions of each pair of the longitudinal side portions 494. The major axis 489 is larger than the minor axis 487, such that the anchor aperture 490 has a generally oblong, hexagonal form. It is contemplated that the shape of the anchor aperture 490 could vary in different embodiments.

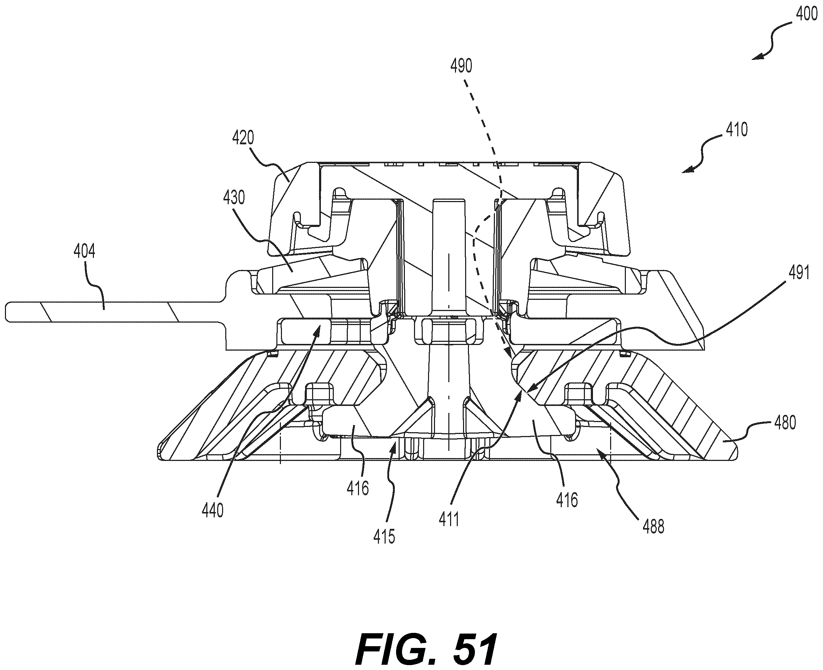

Returning to Figs. 46B to 47B, the anchor aperture 490 has one or more recessed portions 491 formed along an edge thereof. Specifically, two side wall portions 486 defining the long sides of the aperture 490 further form two oppositely disposed recessed portions 491, along the fixture body 482, along the surface between the top wall portion 484 and the chamber 488. The recessed portions 491 are generally centered between longer of the longer side portions 493 on each side of the anchor aperture 490. The recessed portions 491 are generally arc-shaped recesses 491 formed by the anchor fixture 480. With reference to Figs. 49 to 51, when the anchor lock 415 is in the locked position, the protrusions 411 of the anchor lock 415 are received in the recessed portions 491 of the anchor aperture 490. The anchor lock 415, by way of the protrusions 411 nested in the recessed portions 491, thus impedes movement of the anchor 410 within the anchor fixture 480. In the present embodiment, lateral movement of the anchor lock 415, orthogonal to a line passing through a center of the cams 416 and along a long axis of the anchor aperture 490, is generally reduced. Otherwise stated, the anchor lock is shaped and arranged to impede movement along the major axis 489 and the minor axis 487 of the anchor aperture 487, such that lateral movement of the anchor 410 is reduced parallel and orthogonal to the anchor aperture 490.

Depending on the relative shapes and arrangements of the protrusions 411 and recessed portions 491, it is also contemplated that incidental rotational movement of the anchor lock 415 away from the locked position may be reduced or impeded. The anchor aperture 490 has stop edge portions 492 formed adjacent to the recessed portions 491, formed by the fixture body 482 on the bottom side thereof. As will be noted below, the stop edge portions 492 aid in preventing the anchor lock 415 from being turned past the locked position.

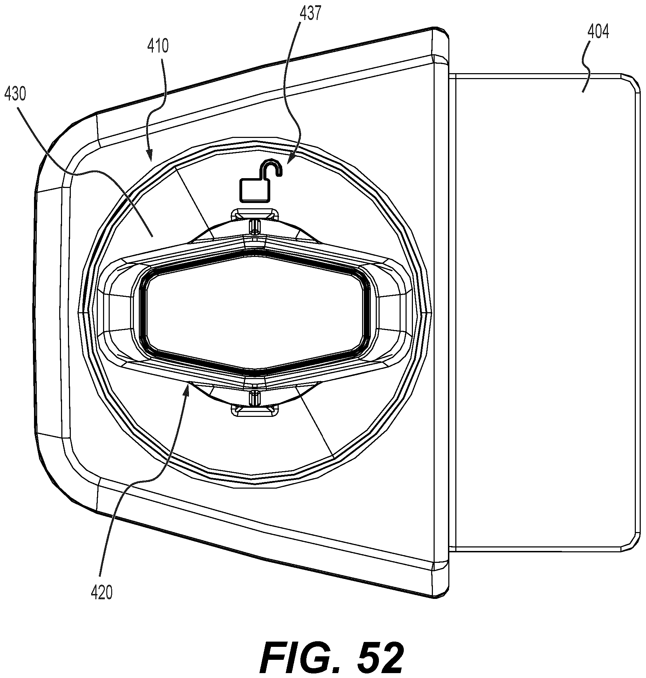

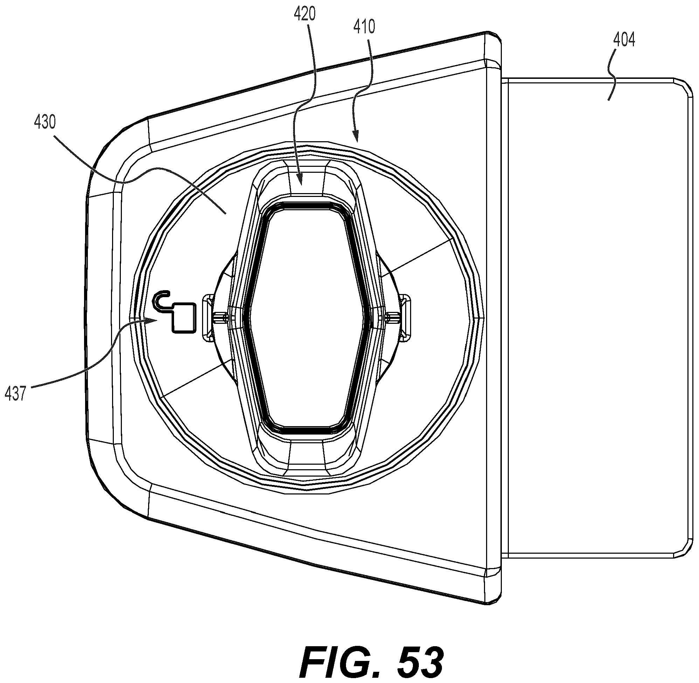

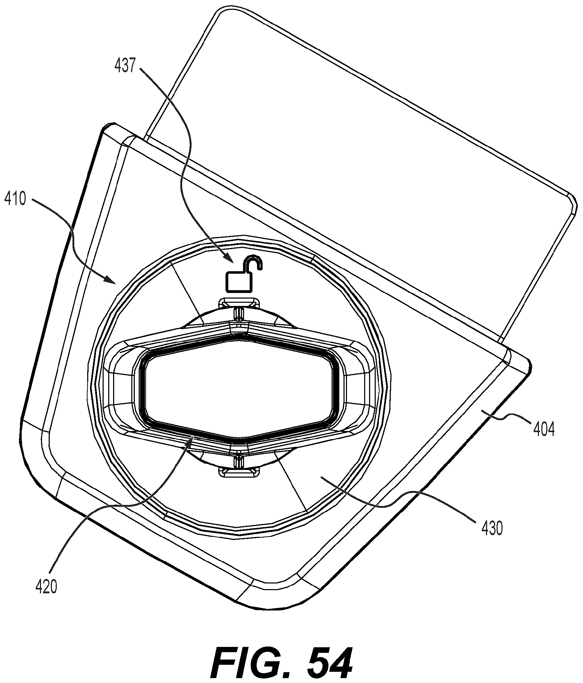

Returning to Figs. 49 to 51 and with additional reference to Figs. 52 to 54, the washer stop 434 of the anchor 410 aids in properly indicating locked and unlocked status of the system 400 when in use, while also providing a flexible orientation of the anchor 410 relative to the corresponding anchor fixture 480.

As can be seen from at least Fig. 44, the anchor 410 is connected to the anchor base 404 by the stem 412 extending through the base aperture 405, but is not otherwise fastened to the anchor base 404. The entirety of the anchor 410 is thus rotatable relative to the anchor base 404 when the anchor 410 is not engaged with the anchor fixture. As can be seen in Figs. 52 to 54, the anchor 410 is rotatable to a variety of orientations relative to the anchor base 404. This permits the anchor 410 to be oriented to match a variety of orientations of anchor fixtures 480, without requiring a change in the connection between the anchor 410 and the accessory to which it is connected or requiring to change the orientation of the anchor fixture 480. When the anchor 410 is separated and spaced from the anchor fixture 480, the lever 420, the anchor lock 415, and the indicator washer 430 are rotatable relative to the base aperture 405. As there is no component acting on the indicator washer 430, an indication that the anchor lock 415 is unlocked, via the indication symbol 437, remains visible to correctly indicate the unlocked status.

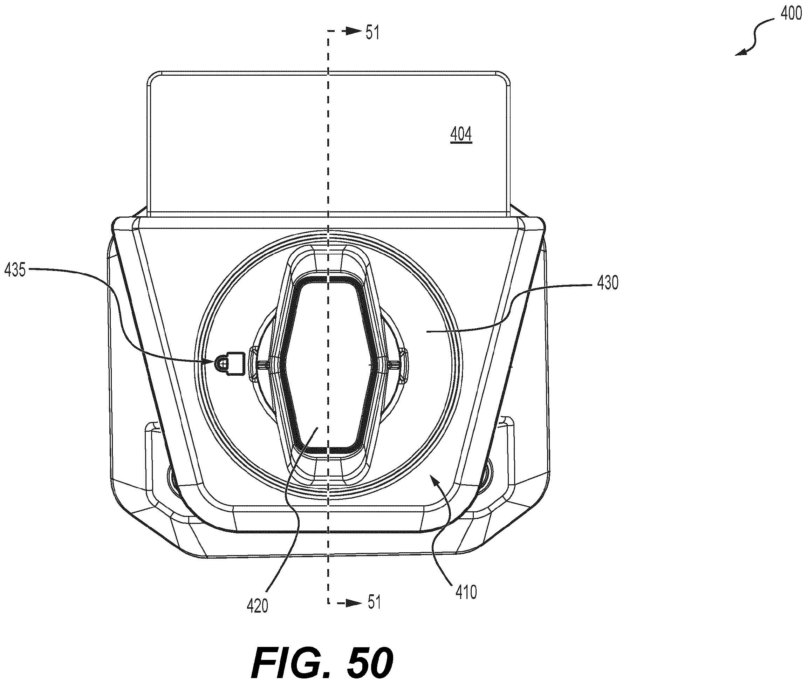

When the anchor 410 is in the unlocked position, the anchor lock 415 is free to pass through the anchor aperture 490. Upon inserting the anchor lock 415 into the anchor aperture 490, the washer stop 434 is received in the anchor aperture 490; see for example Figs. 48, 49. Rotational movement of the indicator washer 430 is then impeded by the anchor fixture 480, as the washer stop 434 abuts the edge of the anchor aperture 490 when the anchor 410 is rotated to move to the locked position. Thus when the washer stop 434 is received in the anchor aperture 490, the lever 420 and the anchor lock 415 are rotatable relative to the indicator washer 430, the base aperture 405, and the anchor fixture 480. Upon rotation of the lever 420 to move the anchor lock 415 to the locked position, the lever 420 now also moves relative to the indicator washer 430, which in turn results in the lever 420 hiding the unlocked indication symbol 437 and displays the locked indication symbol 435 (see Fig. 50).

As is mentioned above, the lock washer 440 is also rotationally fixed to the lever 420. The lock washer 440 thus rotates relative to the indicator washer 430 when the washer stop 434 is received in the anchor aperture 490, with the washer stop 434 extending through the channel 444 of the lock washer 440. As the channel 444 extends only a quarter-turn around the axis 413, motion of the anchor lock 415 is limited to a quarter-turn. At the maximum unlocked position, the lever 420 will be impeded from turning further away from the locked position by the end of the channel 444 abutting the washer stop 434, which in turn is prevented from rotating by the anchor aperture 490. From the maximum locked position, the lever 420 will be impeded from turning further away from the unlocked position by the opposite end of the channel 444 abutting the washer stop 434, which in turn is again prevented from rotating by the anchor aperture 490. The stop edge portions 492 adjacent to the recessed portions 491 further aid in preventing the anchor lock 415 from being over-rotated past the locked position. When attempting to turn beyond the locked position, the anchor lock 415 abuts the two oppositely disposed stop edge portions 492.

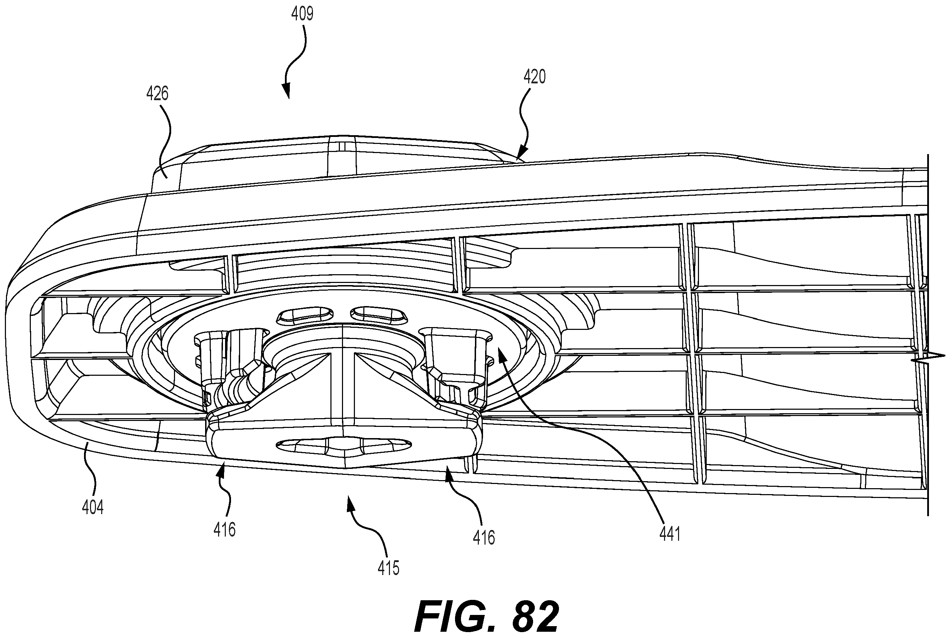

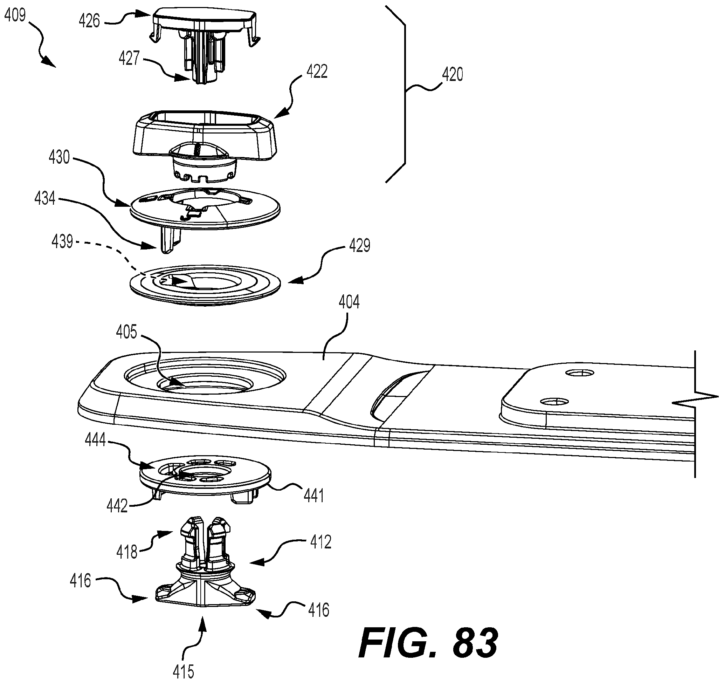

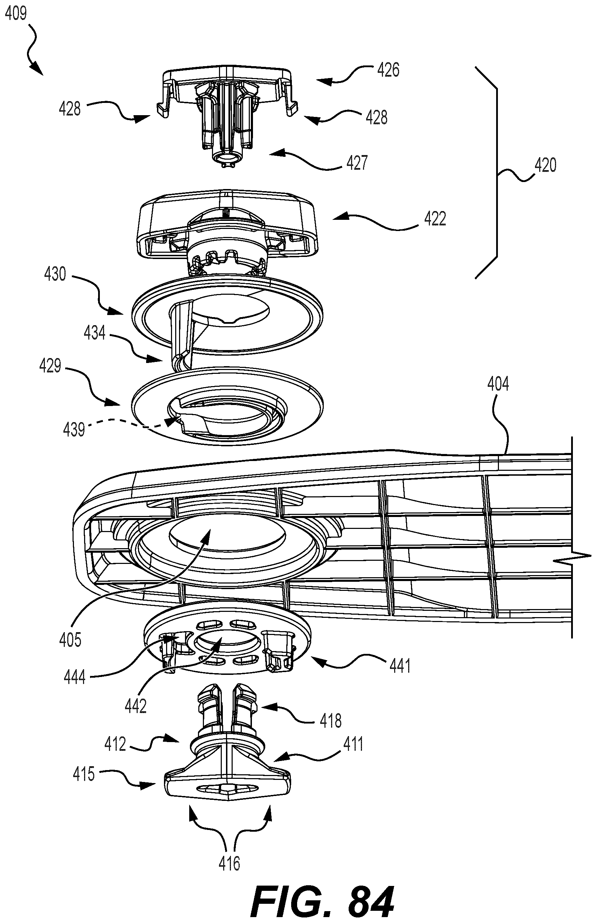

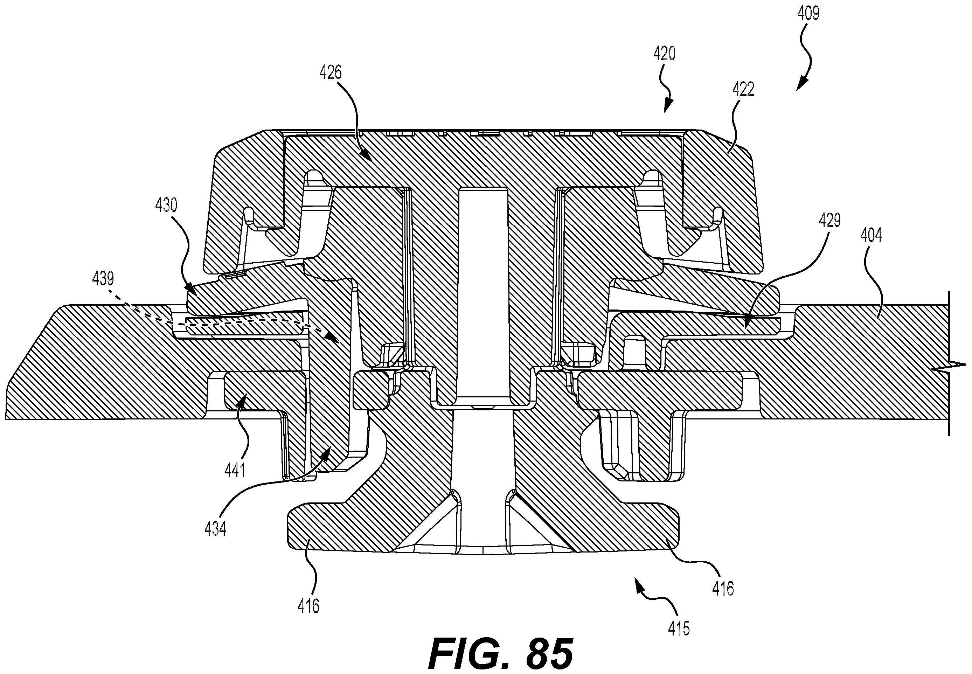

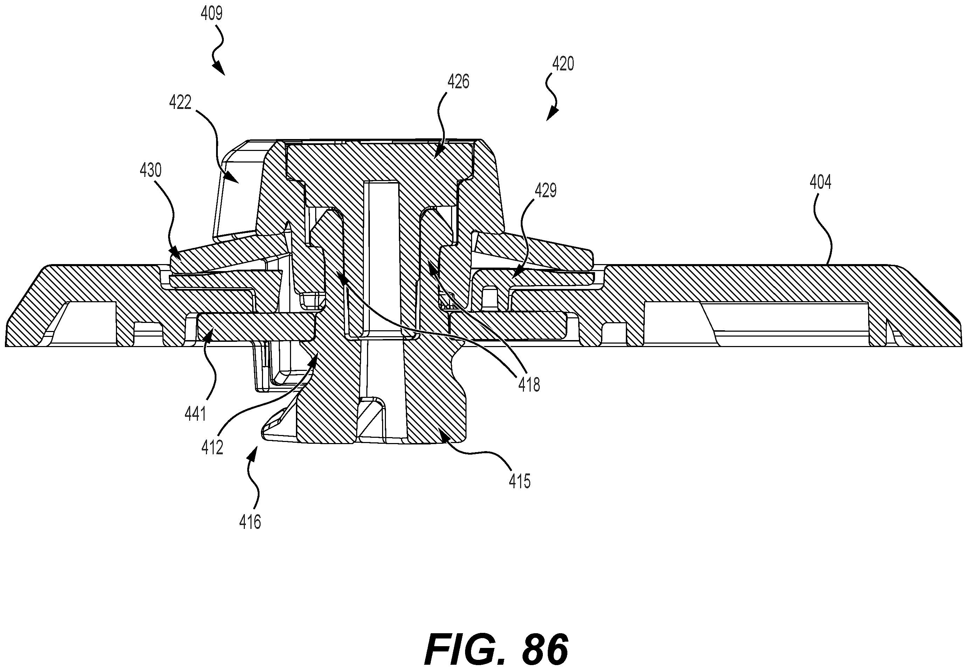

With reference to Fig. 82 to 86, another non-limiting embodiment of an anchor 409 for the system 400 for connecting an accessory to an item is illustrated, to be optionally implemented in place of the anchor 410 described above. It is also contemplated that the anchor 409 could be used with a different system for connecting an accessory to an item, *mutatis mutandis.* Elements of the anchor 409 that are similar to those of the anchor 410 retain the same reference numeral and will not necessarily be described in detail again.

As with the anchor 410, a portion of the anchor 409 is selectively received in the anchor fixture 480 for selectively connecting an accessory connected to the anchor 409 to an item connected to the anchor fixture 480. The reverse arrangement is also possible in at least some embodiments, where the anchor fixtures 480 could be connected to an accessory to selectively connect to an item connected to the anchor 409.

The system 400 also includes the anchor base 404 for connecting the anchor 409 to an accessory in at least some embodiments as described above. The anchor base 404 defines the base aperture 405 therein. The anchor 409 is rotationally connected to the anchor base 404, with a portion of the anchor 409 extending through the base aperture 405. It is noted that while the system 400 is generally described herein using the anchor base 404, the anchor base 404 may be omitted in some non-limiting embodiments, with a portion of the accessory providing a base structure for receiving the anchor 409 therethrough.

The anchor 409 has the anchor stem 412 and the anchor lock 415 as described above. The anchor 410 also includes the lever 420 connected to the stem 412. The anchor lock 415 is rotatable by using the lever 420 between the locked and unlocked positions.

In the present embodiment, the lever 420 includes the handle portion 422 forming the ergonomic portion of the lever 420. It is contemplated that the lever 420 could be a single integral component in some embodiments, with or without slots defined therein. In the present embodiment, the lever 420 also includes the lever insert 426 disposed at least partially in the passage 423 of the handle 422. The lever insert 426 has the end portion 427 engaged with the stem 412 inside the passage 423 inside the handle 422, thereby securing the lever 420 to the anchor lock 415 via the stem 412.

When connected to the anchor 409, the anchor base 404 is disposed between the lever 420 and the anchor lock 415. With the lever 420 disposed to one side of the anchor base 404 and the anchor lock 415 disposed on the other side of the anchor base 404, the anchor 410 is connected through the base aperture 405 by inserting the anchor stem 412 through the base aperture 405 and into one side of the passage 423 of the handle portion 422. The lever insert 426 is then inserted into an other side of the passage 423, the end portion 427 being push fit between the rigid members 418 of the stem 412.

By the present embodiment, the anchor 409 further includes the indicator washer 430 as well as an alignment washer 429 disposed between the lever 420 and the anchor lock 415, and more specifically between the lever 420 and the anchor base 404. The indicator washer 430 provides a visual indication to the user of the system 400 that the anchor 409 (*i.e.* the anchor lock 415) is in the locked position or in the unlocked position. The indicator washer 430 includes the washer stop 434 as discussed above. The alignment washer 429 is specifically disposed between the indicator washer 430 and the anchor base 404. The alignment washer 429 has defined therein a passage 439 permit the anchor stem 412 to pass therethough to engage with the handle 420. The passage 439 is further shaped to receive the washer stop 434 therein, with the alignment washer 429 being shaped to engage with the washer stop 434. The washer stop 434 extends from the washer body 432 parallel to the anchor stem 412, generally toward the anchor lock 415 and through the alignment washer 429.

The anchor 409 further includes a lock washer 441 disposed between the base aperture 405 of the anchor base 404 and the anchor lock 415. The lock washer 441 is thus oppositely disposed to the indicator washer 430 and the alignment washer 429 (relative to the base aperture 405) and acts as a stabilizing feature to aid in maintaining the correct positioning of the anchor 409 relative to the anchor base 404.

Similarly to the lock washer 440, the lock washer 441 has defined therein the central aperture 442 through which extends the anchor stem 412 for connecting with the lever 420. The lock washer 441 also has defined therein the arc-shaped channel 444. The washer stop 434 of the indicator washer 430 extends through the passage 439 of the alignment washer 429 and the channel 444. The lock washer 441 is rotationally fixed to the lever 420.

As with the anchor 410, the washer stop 434 of the anchor 409 aids in properly indicating locked and unlocked status of the system 400 when in use, while also providing a flexible orientation of the anchor 409 relative to the corresponding anchor fixture 480. The anchor 409 is connected to the anchor base 404 by the stem 412 extending through the base aperture 405, but is not otherwise fastened to the anchor base 404.

The entirety of the anchor 409 is thus rotatable relative to the anchor base 404 when the anchor 409 is not engaged with the anchor fixture. The anchor 409 is rotatable to a variety of orientations relative to the anchor base 404. This permits the anchor 409 to be oriented to match a variety of orientations of anchor fixtures 480, without requiring a change in the connection between the anchor 409 and the accessory to which it is connected or requiring to change the orientation of the anchor fixture 480. When the anchor 409 is separated and spaced from the anchor fixture 480, the lever 420, the anchor lock 415, and the indicator washer 430 are rotatable relative to the base aperture 405. As there is no component acting on the indicator washer 430, an indication that the anchor lock 415 is unlocked, via the indication symbol 437, remains visible to correctly indicate the unlocked status. The alignment washer 429 further aids in maintaining the lever 420, the indicator washer 430, and the lock 415 is the correct relative position, such that the indications of the indicator washer 430 are correct, regardless of whether or not the anchor 409 is connected to an anchor fixture.

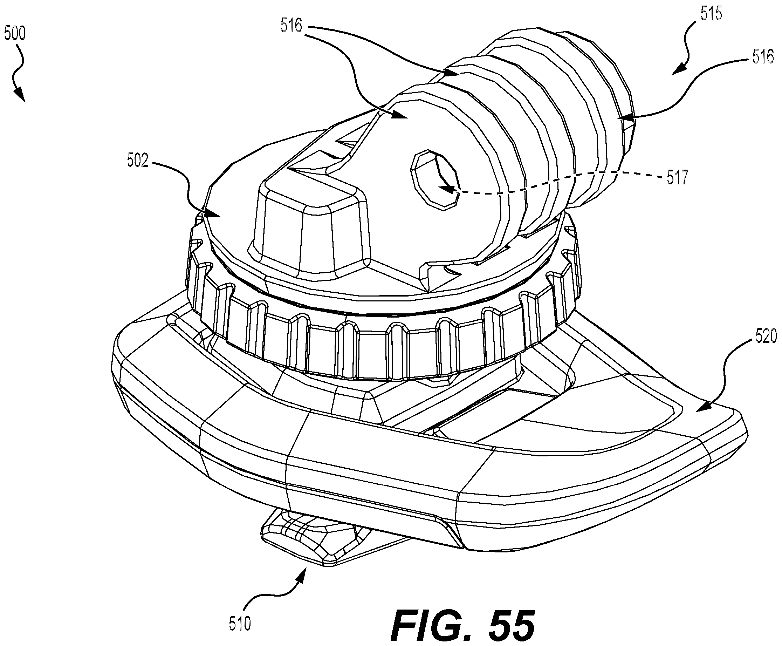

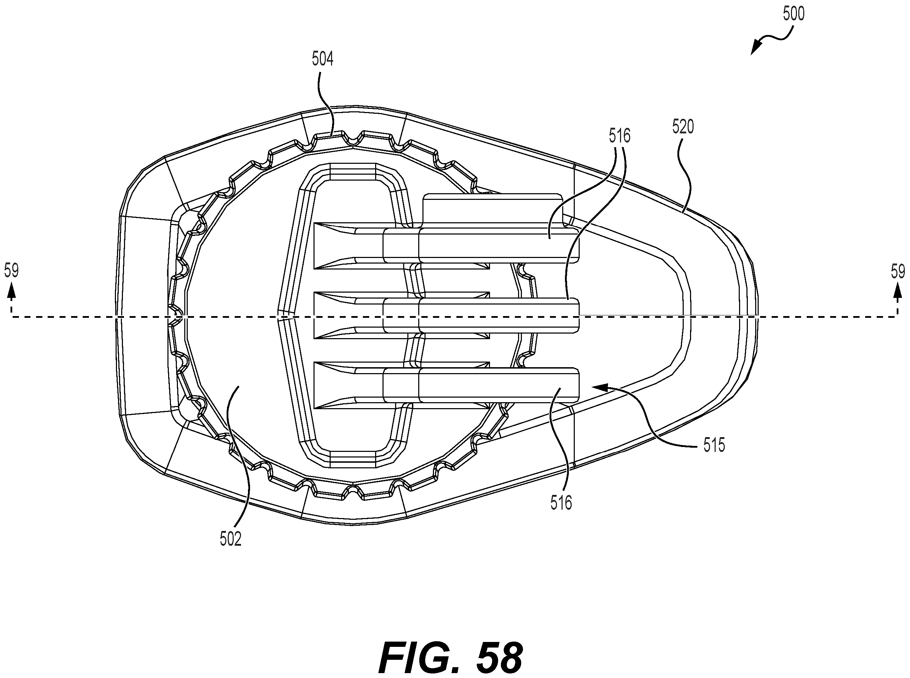

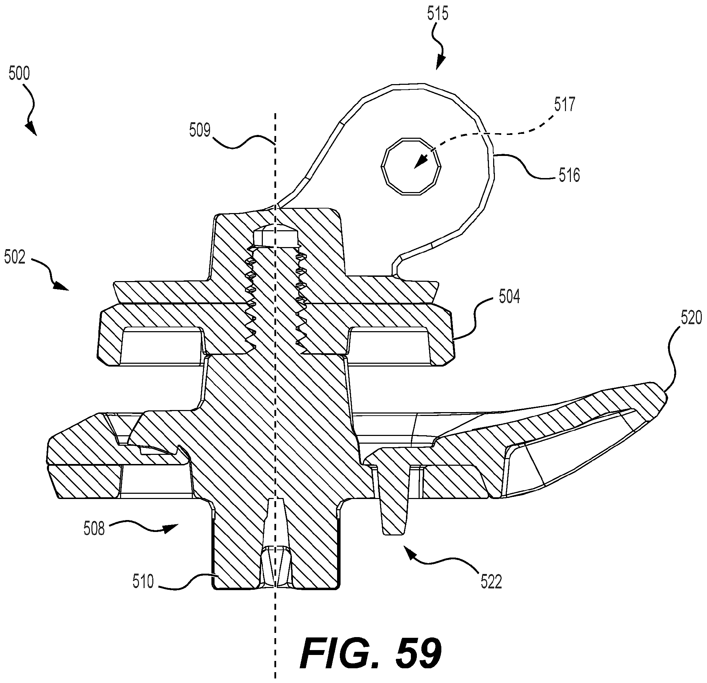

With reference to Figs. 55 to 59, another non-limiting embodiment of an anchor 500 for connecting an accessory to an item is illustrated. The anchor 500 is shaped and arranged to be selectively connected to an anchor fixture, such as the anchor fixture 480 described above. It is also contemplated that the anchor 500 could be selectively connected to other anchor fixtures.

The anchor 500 has an anchor base 502 and an anchor lock 510 extending below the anchor base 502, spaced therefrom by a gap. The anchor base 502 is configured to be connected to a body of an accessory, such as the accessory 75'. Notably, the anchor base 502 has an accessory mount 515 that is configured for connection to the body of the accessory 75'. In this embodiment, the accessory mount 515 includes three stands 516 projecting upward from a top surface of the anchor base 502. Each of the stands 516 defines an opening 517. The openings 517 are aligned with one another (i.e., are coaxial) and are configured to receive a fastener (not shown) that engages the accessory 75'. The fastener is inserted through the stands 516 and through the stands of the accessory 75'. The accessory mount 515 may be configured differently in other embodiments.

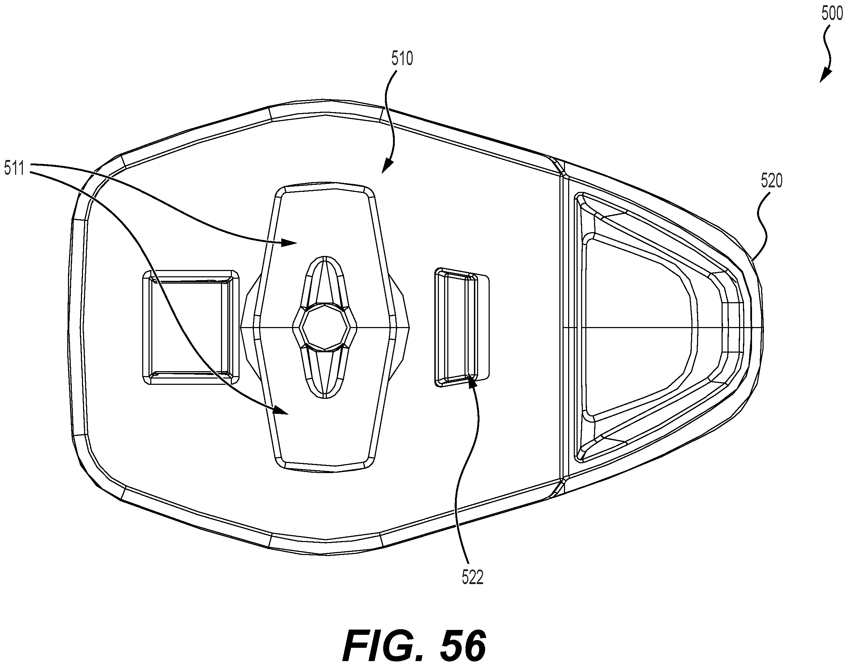

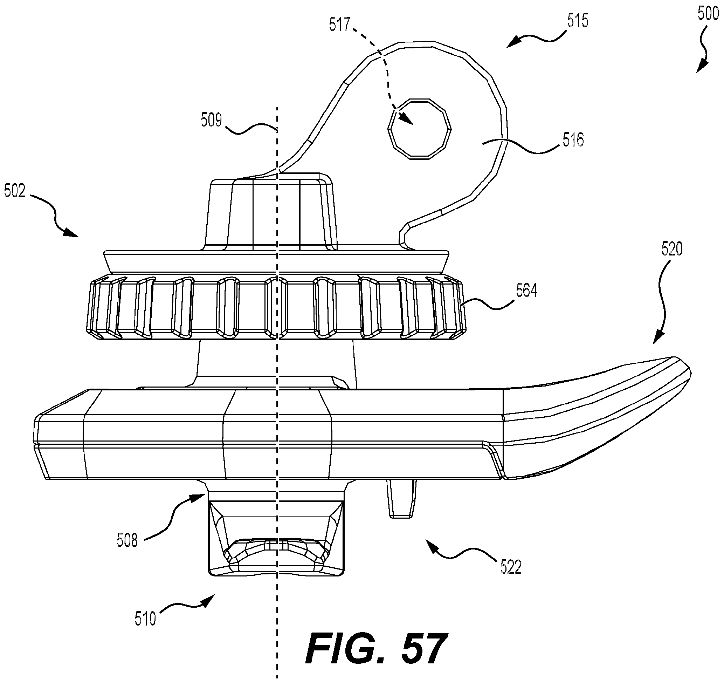

As best shown in Fig. 56, the anchor lock 510 is connected to the anchor base 502 via a stem 508 defining an axis 509 (Fig. 57). The stem 508 extends downward from the anchor base 502. The anchor lock 510 includes two cams 511 extending from opposite sides of the stem 508 in opposite directions from each other. The anchor 500 does not have a lever to rotate the anchor lock 510. Rather, the anchor base 502 and anchor lock 510 move together. As such, when the anchor lock 510 is rotated between an unlocked position and a locked position, the anchor base 502 describes the same rotation. An entirety of the anchor base 502 is rotated in order to rotate the anchor lock 510 between the unlocked and locked positions. The anchor base 502 includes a gripping portion 504 to permit a user to turn the anchor base 502 and thus the anchor lock 510.

In this embodiment, the anchor 500 includes a handle 520 for handling by the user to connect the anchor 500 to the anchor fixture. The handle 520 is made of an elastomeric material (e.g., rubber). It is contemplated that the handle 520 could be made of other materials in other embodiments. The anchor base 502 is pivotable relative to the handle 520, such that the user may hold the handle 520 in one hand and turn the anchor base 502 with the other. In at least some embodiments, the handle 520 could be arranged to connect to the accessory.

By the present embodiment, the handle 520 further includes a handle stop 522 disposed between the anchor base 502 and the anchor lock 510. The handle stop 522 extends from the main body of the handle 520 generally parallel to the anchor stem 508, generally toward the anchor lock 510. Use of the washer stop 434 will be described in more detail below.

In order to secure the anchor 500 to the anchor fixture, the anchor 500 is first oriented such that the anchor lock 510 is aligned with the anchor aperture of the anchor fixture. The anchor lock 510 is then inserted through the anchor aperture and into the anchor chamber thereof. The anchor lock 510 is thus disposed in the anchor chamber but is still in the unlocked position and thus free to pass through the anchor aperture. When the anchor lock 510 is inserted into the anchor aperture, the stop 522 is disposed in the anchor aperture. The anchor base 502 is then rotated in order to rotate the anchor lock 510 to the locked position, similar to that shown in Fig. 17. As will be appreciated, the stop 522 is prevented from rotating by the anchor fixture when the anchor base 502 is rotated, and thus the handle 520 does not rotate between the locked and unlocked positions.

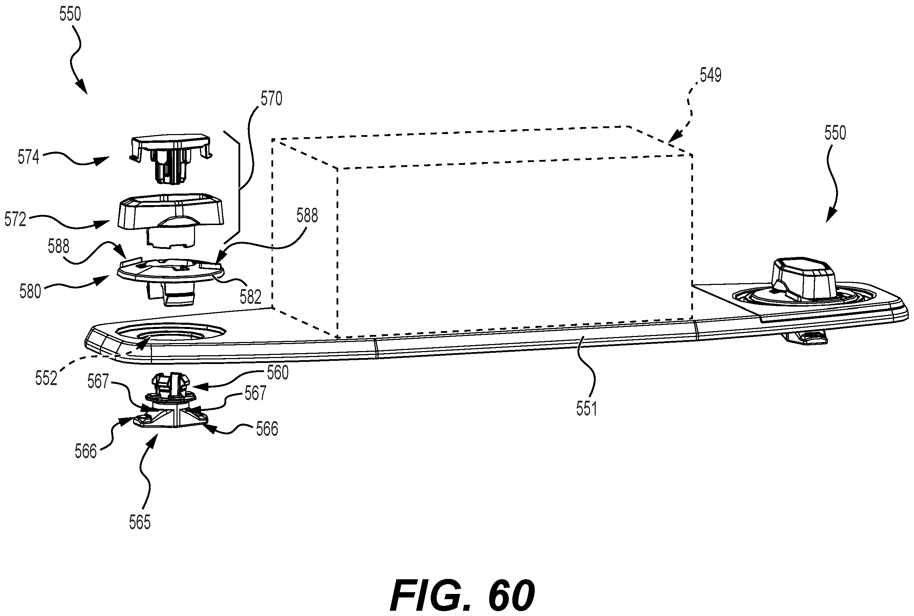

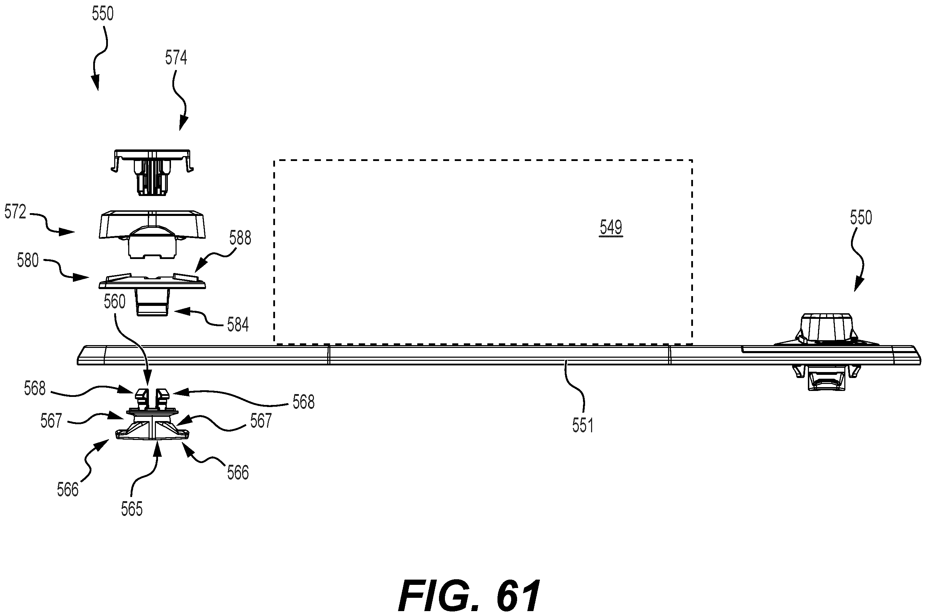

With reference to Figs. 60 to 63, another non-limiting embodiment of an anchor 550 for connecting an accessory to an item is illustrated. The anchor 550 is illustrated connecting a storage accessory 549 (shown schematically) to the snowmobile 10 using a platform 551 to which the accessory 549 is connected, similarly to the platform 497 described above. The two anchors 550 selectively connect the storage accessory 549 to the snowmobile 10 by selectively connecting to anchor fixtures (such as the anchor fixtures 480) connected to the snowmobile 10. In other non-limiting examples, the anchors 550 could be used for connecting a variety of other accessories to a variety of items, including using more or fewer than two anchors 550.

Each anchor 550 is rotationally connected to the platform 551, with a portion of the anchor 550 extending through a platform aperture 552. It is noted that while the anchors 550 are generally described herein using the platform 551, the platform 551 may be omitted in some non-limiting embodiments, with a portion of the accessory providing a base structure for receiving the anchor 550 therethrough.

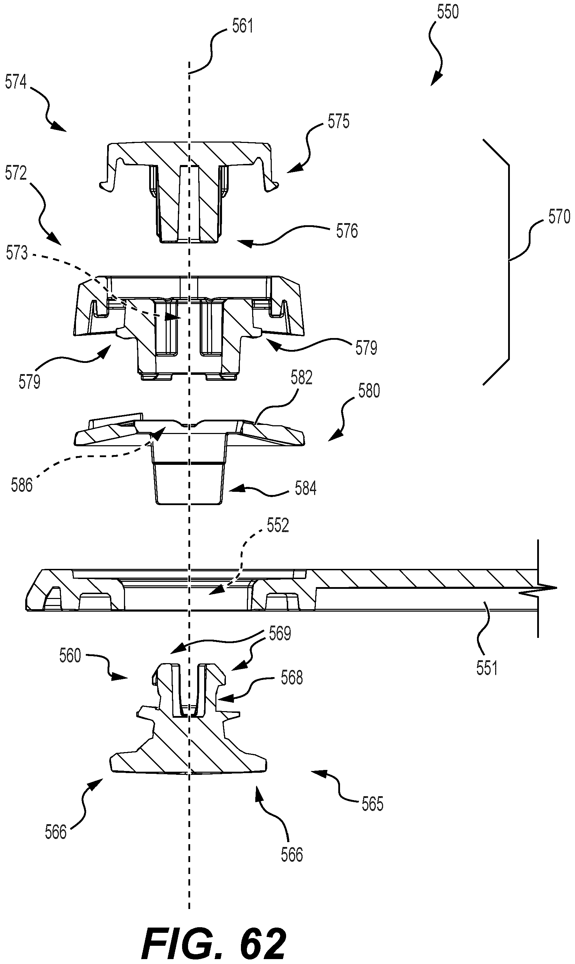

With additional reference to Fig. 45, the anchor 550 has an anchor stem 560 and an anchor lock 565 connected to one end of the stem 560. The anchor stem 560, also referred to as the stem 560, defines an axis 561 (Fig. 62) about which the anchor lock 565 is rotated during use. The anchor lock 565 includes two cams 566 extending from opposite sides of the stem 560. In the illustrated embodiment, the stem 560 and the anchor lock 565 are integrally connected. In different embodiments, the anchor lock 565 could be differently connected to the stem 560.

The anchor lock 565 further has one or more protrusions extending therefrom for selectively engaging with a surface of the anchor fixture 480 when in the locked position, similarly to the system 400 described above. In the illustrated embodiment, the anchor lock 565 includes a protrusion 567 extending from each cam 566, generally in the form of a conic, bulbous or protruding surface curving out from the junction of the corresponding cam 566 with the stem 560. It is contemplated that the protrusions 567 could take different forms, for example as ridges or bumps on a lever-side surface of the cams 566. Use of the protrusions 567 is similar to the use of the protrusions 411 and will not be described again.

The anchor 550 also includes a lever 570 connected to the stem 560. The lever 570 allows a user to rotate the stem 560 about the axis 561, thereby rotating the anchor lock 565. In particular, the anchor lock 565 is rotatable about the axis 561 by using the lever 570 between locked and unlocked positions, described further below.

In the present embodiment, the lever 570 includes a handle portion 572 forming the ergonomic portion of the lever 570. The handle portion 572, also referred to as the handle 572, has a passage 573 defined therethrough. It is contemplated that the lever 570 could be a single integral component in some embodiments. In the present embodiment, the lever 570 also includes a lever insert 574 disposed at least partially in the passage 573 of the handle 572. The lever insert 574 has an end portion 576 engaged with the stem 560 inside the passage 573 inside the handle 572, thereby securing the lever 570 to the anchor lock 565 via the stem 560. Specifically, the stem 560 is formed from four rigid members 568 and the portion 576 is shaped to fit between the rigid members 568.

When to the anchors 550 are connected to the platform 551, the platform 551 is disposed between the lever 570 and the anchor lock 565. With the lever 570 disposed to one side of the platform 551 and the anchor lock 565 disposed on the other side of the platform 551, the anchor 550 is connected through the aperture 552 by inserting the anchor stem 560 through the aperture 552 and into one side of the passage 573 of the handle portion 572. The lever insert 574 is then inserted into an other side of the passage 573, the end portion 576 being push fit between the rigid members 568 of the stem 560. In order to maintain connection of the lever 570 to the anchor lock 565, the lever insert 574 also includes two clips 575 to secure the lever insert 574 to the handle portion 572. It is further noted that the rigid members 568 include hook end portions 569. These hook end portions 569 pass through the passage 573 and abut an edge (not shown) in the handle 572, preventing removal of the stem 560 from the handle 572.

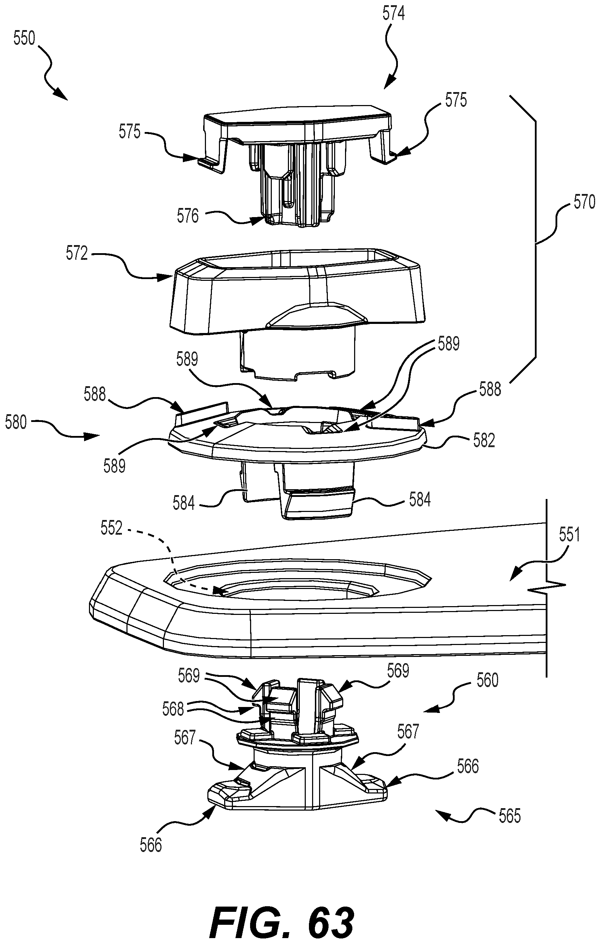

By the present embodiment, each anchor 550 further includes an indicator washer 580 disposed between the lever 570 and the anchor lock 565, and more specifically between the lever 572 and the platform 551. The indicator washer 580 provides a visual indication to the user that the anchor 550 *(i.e.* the anchor lock 565) is in the locked position or in the unlocked position (or generally not locked when not connected to the anchor fixture 480). The washer 580 includes a washer body 582 and two washer stops 584 extending from the washer body 582. The washer body 582 has a central aperture 586 defined therein, through which the stem 560 extends to engage with the lever 570. The washer body 582 is generally dome shaped, such that it resists compression from the convex surface of the washer body 582. In at least some embodiments, the dome formed body 582 provides a longitudinally outward directed force, against which the hook end portions 569 of the stem 560 abutting the handle 572 resist. These counter acting forces thus act to maintain a rigid alignment of the anchor 550. The washer stops 584 extends from the washer body 582 parallel to the anchor stem 560, generally toward the anchor lock 565. Use of the washer stop 584 will be described in more detail below. The indicator washer 580 includes at least one ridge indicator for limiting movement of the lever 570 when locking the anchor 550 by the user. In the present embodiment, the indicator washer 580 includes two ridge indicators 588. In some embodiments, the indicator washer 580 could include one or more indicator symbols for indicating a locked or unlocked status of the anchor 550. The washer body 582 also has formed therein two pairs of indents 589 (Fig. 63). Two oppositely disposed bumps 579 of the handle 572 (Fig. 62), positioned on a side adjacent the indicator washer 580, are received in the indents 589 when the anchor lock 565 and the lever 570 are in the locked or unlocked positions. When received in the indents 589, the bumps 579 aid in indicating that the lever 570 is in the correct position, *i.e.* the lever 570 clicks into place when the anchor lock 565 is in the locked or unlocked position.

The washer stop 584 of the anchor 550 aids in properly indicating locked and unlocked status of the anchor 550 when in use, while also providing a flexible orientation of the anchor 550 relative to the corresponding anchor fixture 480.

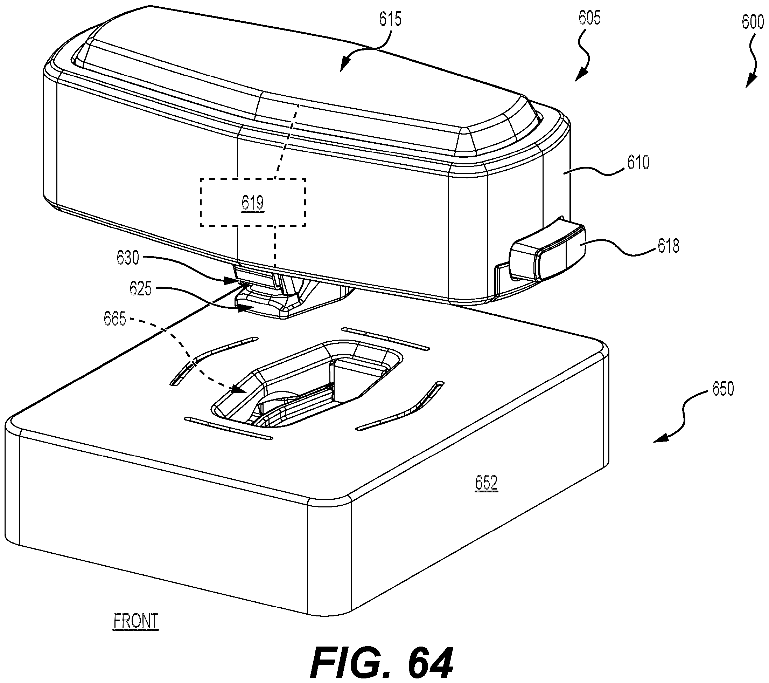

As can be seen from at least Fig. 64, the anchor 550 is connected to the platform 551 by the stem 560 extending through the aperture 52, but is not otherwise fastened to the platform 551. The entirety of the anchor 550 is thus rotatable relative to the platform 551 when the anchor 550 is not engaged with the anchor fixture. This permits the anchor 550 to be oriented to match a variety of orientations of anchor fixtures 480, without requiring a change in the connection between the anchor 550 and the accessory to which it is connected or requiring to change the orientation of the anchor fixture 480. When the anchor 550 is separated and spaced from the anchor fixture 480, the lever 570, the anchor lock 565, and the indicator washer 580 are rotatable relative to the platform 551.

When the anchor 550 is in the unlocked position, the anchor lock 65 is free to pass through the anchor aperture 490. Upon inserting the anchor lock 565 into the anchor aperture 490, the washer stops 584 are received in the anchor aperture 490. Rotational movement of the indicator washer 580 is then impeded by the anchor fixture 480, as the washer stops 584 abut the edge of the anchor aperture 490 when the anchor 550 is rotated to move to the locked position. Thus when the washer stops 584 are received in the anchor aperture 490, the lever 570 and the anchor lock 565 are rotatable relative to the indicator washer 580, the aperture 552, and the anchor fixture 480. Upon rotation of the lever 570 to move the anchor lock 565 to the locked position, the lever 570 now also moves relative to the indicator washer 580.

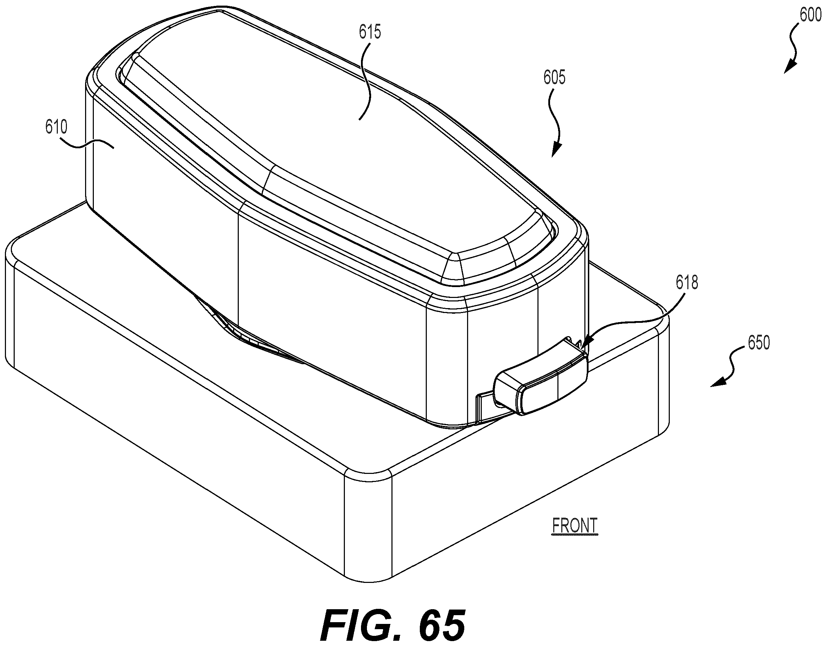

With reference to Figs. 64 and 65, another non-limiting embodiment of a system 600 for connecting an accessory to an item is illustrated. The system 600 is illustrated connecting an accessory 605, specifically a flashlight 605, to the snowmobile 10 via an anchor fixture 650. By the present embodiment and as will be described further below, the anchor fixture 650 is further arranged and configured for charging or powering the accessory 605.

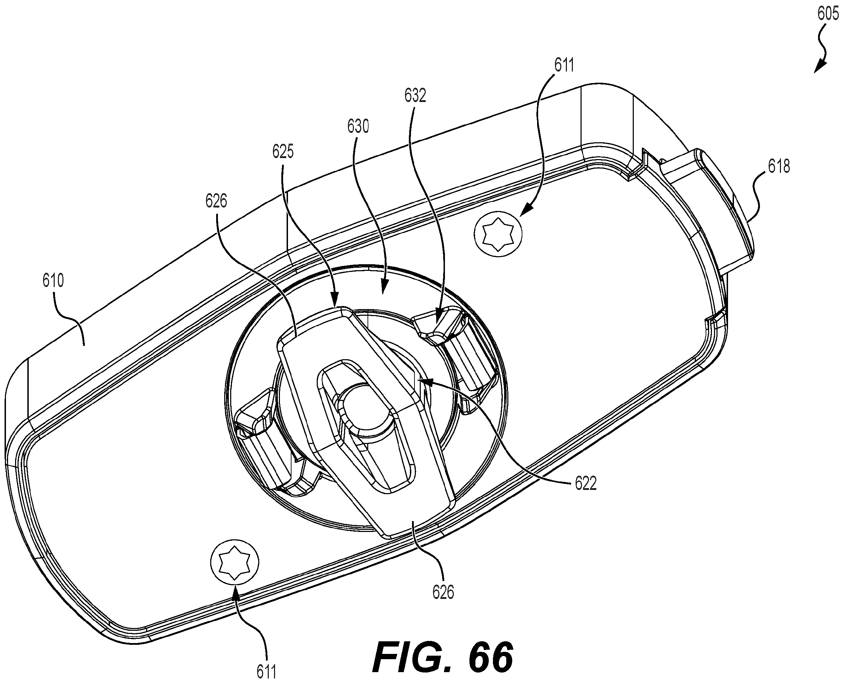

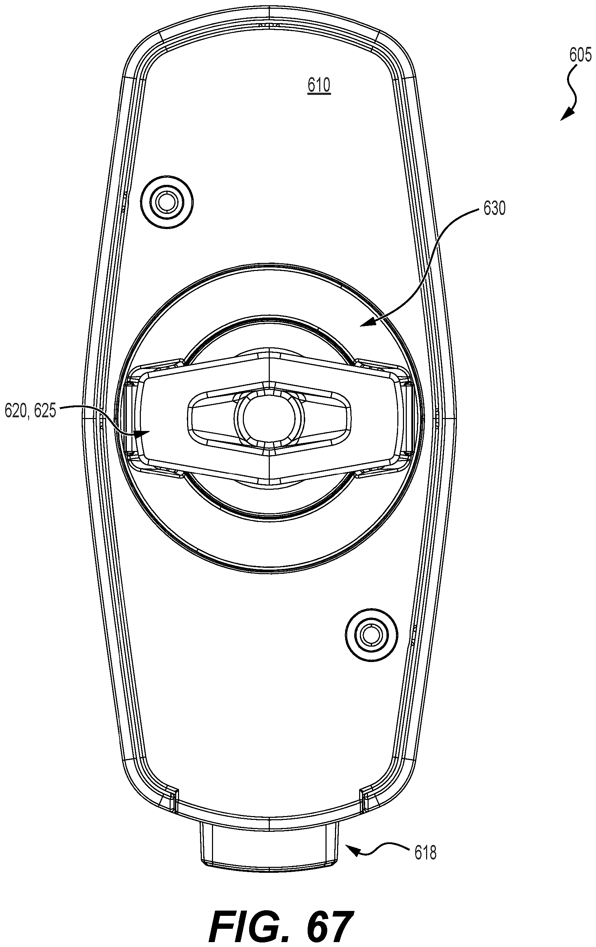

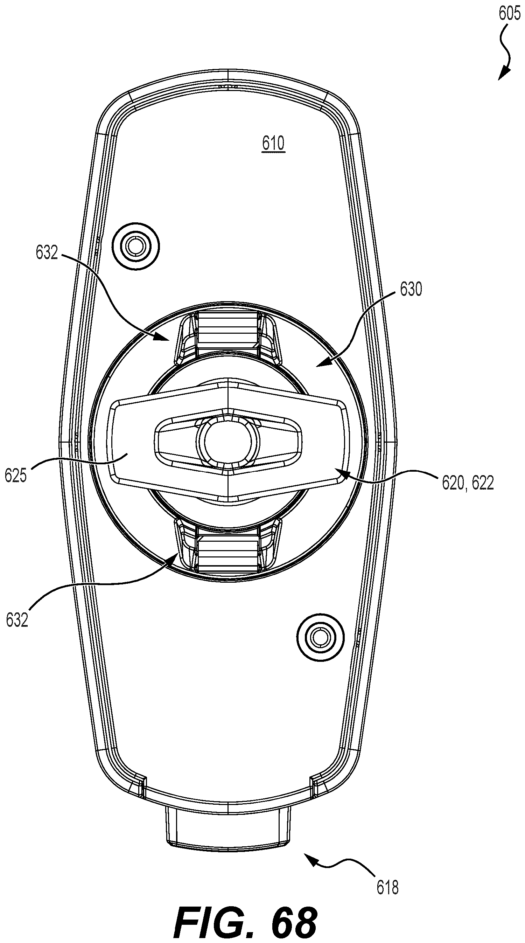

With additional reference to Figs. 66 to 68, the accessory 605 includes an accessory body 610 and an anchor 620 for connecting the body 610 to the anchor fixture to which the accessory 605 is connected. In the illustrated embodiment, the accessory body 610 houses a light source 615 and a switch 618 operatively connected to the light source 615 for selectively activating the light source 615. The flashlight 605 further includes a battery 619 (shown schematically in Fig. 64) housed in the body 610. The battery 619 is operatively connected to the switch 618, the light source 615, and an electric component 630 (described further below). The battery 619 provides energy to the light source 615 and is charged via the electrical component 630 when the accessory 605 is selectively connected to the anchor fixture 650. The accessory body 610 includes two fasteners 611, specifically two screws 611, for connecting together different accessory components. Other manners for connecting together housing portions are contemplated.

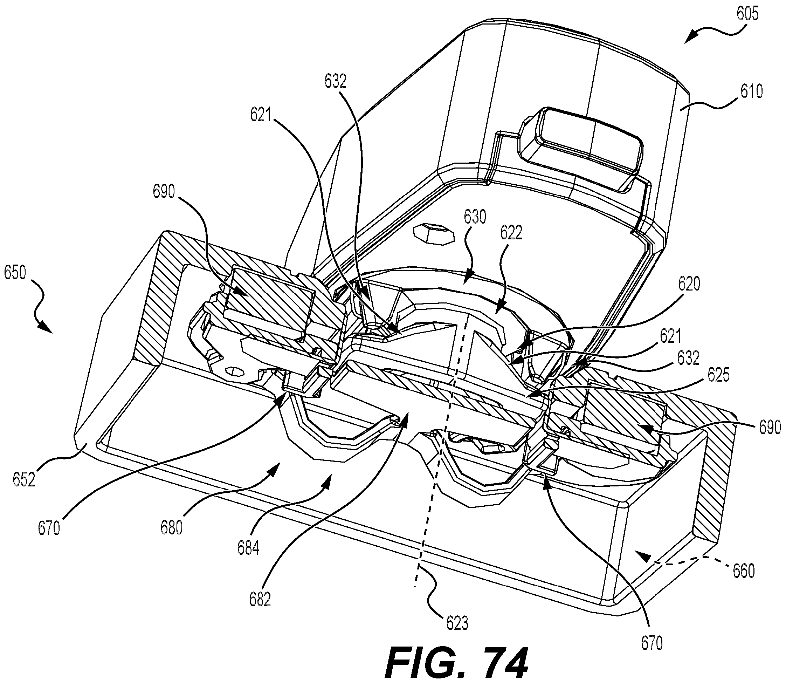

The anchor 620 has a stem 622 extending from the body 610 and an anchor lock 625 connected to stem 622, spaced from the body 610 by a gap. The stem 622 is integrally connected to the body 610, but it is contemplated that the stem 622 and the anchor 620 could be differently connected to the body 610. The anchor lock 560 is configured to be inserted through an anchor aperture 660 of the anchor fixture 650, described further below. The stem 622 defines an axis 623 (Fig. 74) about which the anchor lock 625 is rotated. The anchor lock 625 includes two cams 626 extending from opposite sides of the stem 622 in opposite directions from each other.

The shape of the anchor lock 625 as defined by the cams 626 together is a hexagonal lock 625 in the present embodiment, the hexagonal lock 625 being defined by two shorter side portions and four longer longitudinal side portions. Each of the two end side portions are shorter than each of the four longitudinal side portions. It is contemplated that the shape of the anchor lock 625 could vary in different embodiments.

As is best seen in Fig. 74, the anchor lock 620 further has one or more protrusions extending therefrom for selectively engaging with a surface of the anchor fixture 650 when in the locked position. In the illustrated embodiment, the anchor lock 620 includes a protrusion 621 extending from each cam 626, generally in the form of a conic, bulbous or protruding surface curving out from the junction of the corresponding cam 626 with the stem 622. It is contemplated that the protrusions 621 could take different forms, for example as ridges or bumps on a lever-side surface of the cams 626. Use of the protrusions 621 is described in more detail below.

As is noted above, the accessory 605 further includes an electrical element 630 rotatively connected to the body 610, specifically a ring element 630 including a pair of electrical contacts 632. The electrical contacts 632 include a positive contact plate and a negative contact plate, although the particular arrangement of the polarity of the contacts 632 is not meant to be particularly limited. The electrical contacts 632 are electrically connected to powered components of the accessory 605, specifically the battery 619 and the light source 615 in the illustrated embodiment. Specifics of the electrical connections are not specifically illustrated; connections could vary in different embodiments. The electrical contacts 575 are configured and arranged to contact electrical contacts 670 of the anchor fixture 650 to electrically connect the anchor fixture 650 to the accessory 605 when the anchor 620 is connected to the anchor fixture 650.

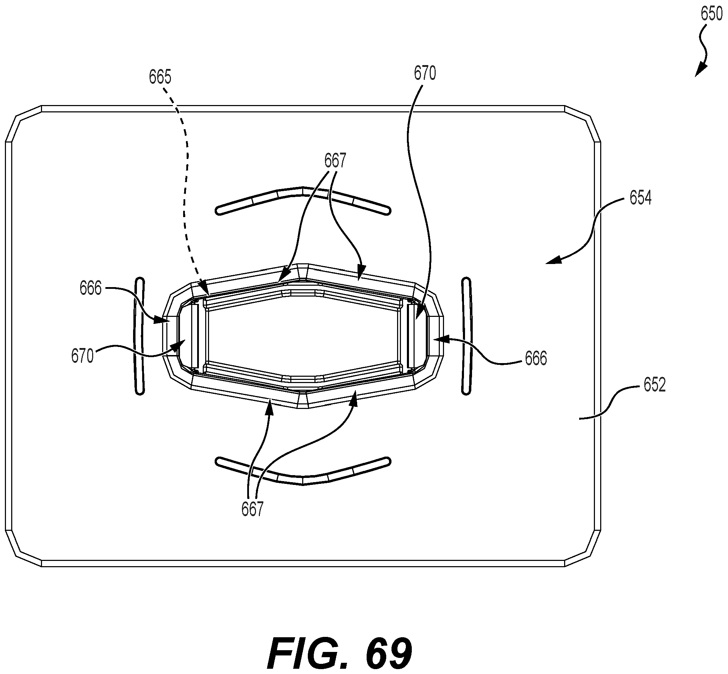

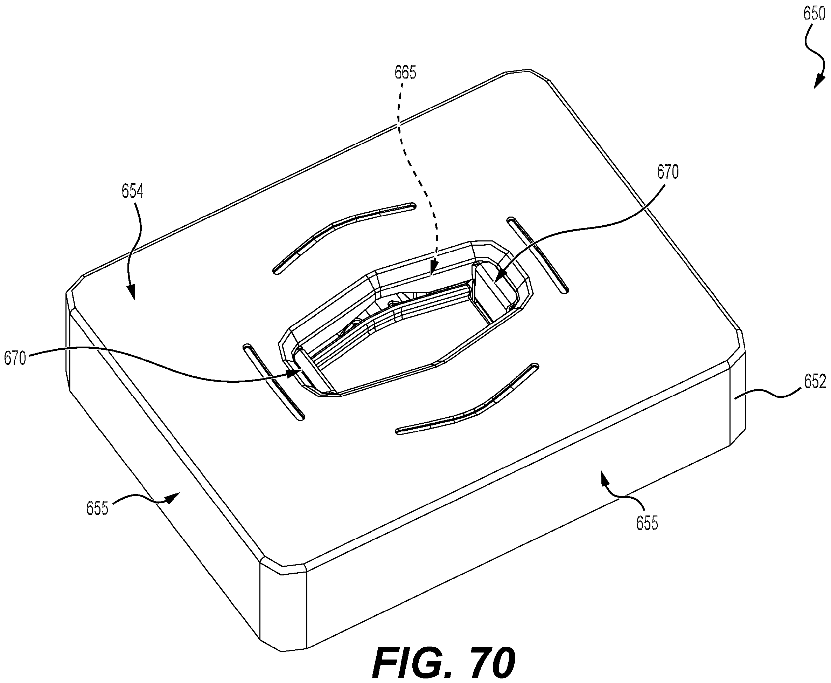

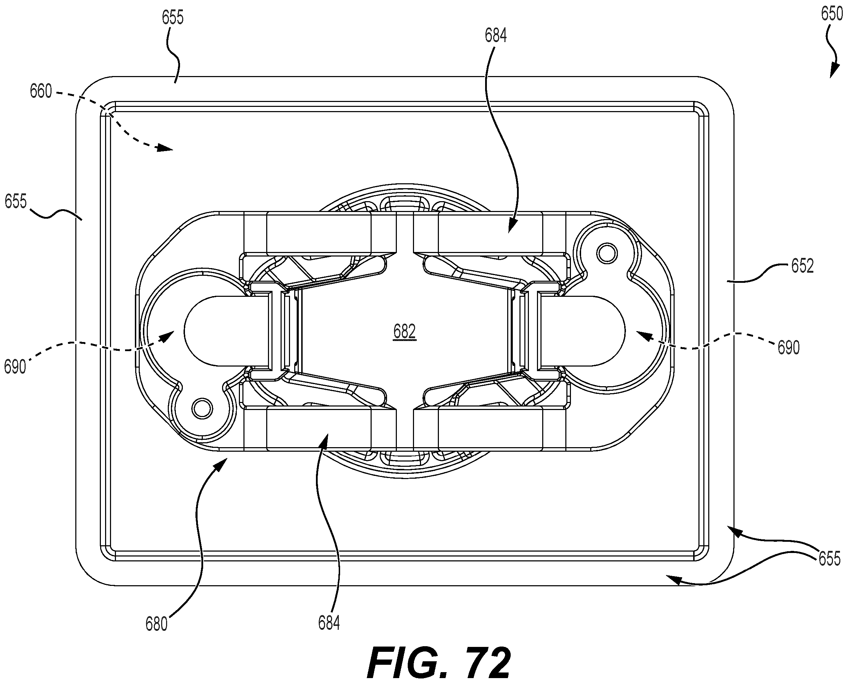

With additional reference to Figs. 69 to 73, the system 600 also includes an anchor fixture 650 that is fixable to an item, such as the snowmobile 10. The anchor 620 is mateable with the anchor fixture 650. The anchor fixture 650 has a fixture body 652 including a top wall portion 654 and four side wall portions 655. Each of the wall portions 654, 655 has an interior surface and an exterior surface. The interior surfaces of the wall portions 654, 655 define an anchor chamber 660 that is configured to receive therein the anchor lock 620. The top wall portion 654 also defines an anchor aperture 665 that opens into the anchor chamber 660. The anchor lock 625 is selectively inserted into the anchor chamber 660 through the anchor aperture 665 in order to secure the accessory 605 to the anchor fixture 650, as will be described further below.

The anchor aperture 665 is a hexagonal aperture 665 in the present embodiment. As is illustrated in Fig. 69, the hexagonal aperture 665 is defined by two shorter end side portions 666 and four longer longitudinal side portions 667. Each of the two end side portions 666 are shorter than each of the four longitudinal side portions 667. It is contemplated that the shape of the anchor aperture 665 could vary in different embodiments.

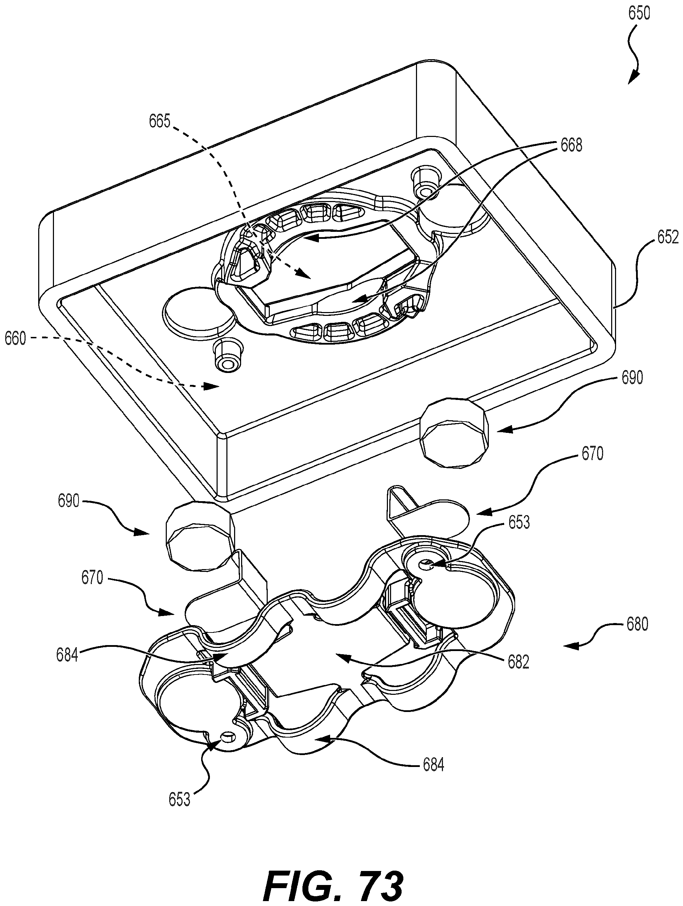

As can be seen in Fig. 73, the anchor aperture 665 has one or more recessed portions formed along an edge thereof. Specifically, two side wall portions 667 defining the long sides of the aperture 665 form two oppositely disposed recessed portions 668, along the fixture body 652, along the surface between the top wall portion 654 and the chamber 660. The recessed portions 621 are generally centered between longer of the longer side portions 667 on each side of the anchor aperture 665. The recessed portions 668 are generally arc-shaped recesses 668 formed by the anchor fixture 650. Similar to the system 400 described above, when the anchor lock 625 is in the locked position, the protrusions 621 of the anchor lock 625 are received in the recessed portions 668 of the anchor aperture 650. The anchor lock 625, by way of the protrusions 621 nested in the recessed portions 668, thus impedes rotational movement of the anchor 620 within the anchor fixture 650.

The anchor fixture 650 further includes two electrical contacts 670 for electrically connecting to the anchor 620. Each contact 670 is disposed on a corresponding one of the shorter end side portions 666, such that the contacts 670 are arranged in the anchor aperture 665. The contacts 670 are electrically connected to a power source (not shown) for providing power to the accessory 605 via the anchor 620 when connected to the anchor fixture 650. In some embodiments, the anchor fixture 650 could be operatively connected to the snowmobile 10 to provide power to the contacts 670. The contacts 670 are positioned and arranged to contact and electrically connect to the electrical contacts 632 when the anchor lock 625 disposed in the chamber 660.

The anchor fixture 650 also includes two magnets 690 for selectively magnetically connecting different embodiments of connectors to the anchor fixture 650, as will be described in more detail below. The magnets 690 are disposed adjacent to the shorter side portions of the anchor aperture 665.

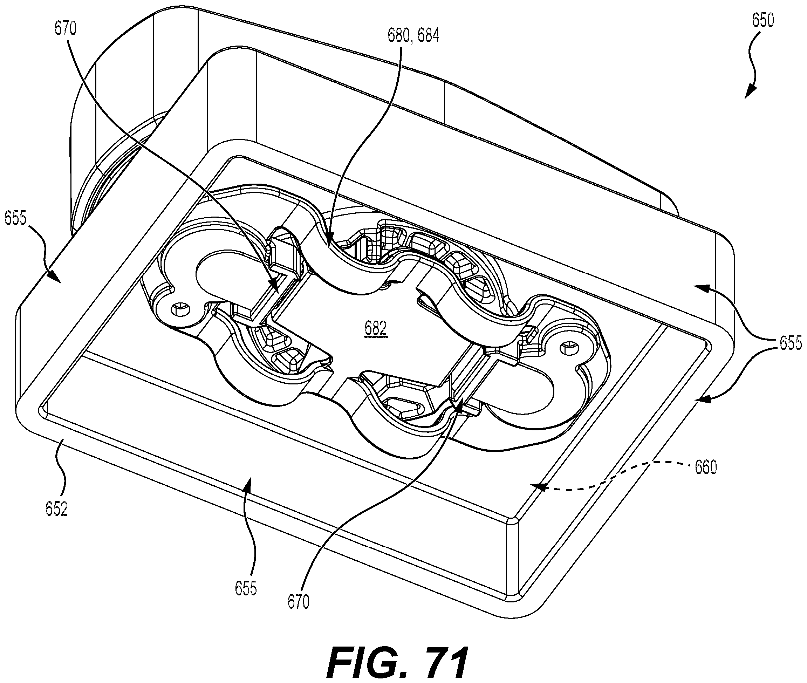

As can be seen in Figs. 71 to 75, the anchor fixture 650 further includes a securing member 680 disposed in the chamber 660 and generally below the anchor aperture 665. Two fasteners 653, specifically two screws 653, are included to connect the securing member 680 to the fixture body 652. The magnets 690 and the contacts 670 are also at least partially maintained in their position relative to the fixture body 652 by the securing member 680 fastened to the fixture body 652 by the fasteners 653.

The securing member 680 includes an anchor platform 682, disposed below the anchor aperture 665, and two resilient members 684. The resilient members 684 are connected between the fixture body 652 and the anchor platform 682 for biasing the anchor platform 682 toward the top surface 654. In the present embodiment, the resilient members 684 are integrally connected together and to the anchor platform 682. It is contemplated that the securing member 680 could be differently constructed.

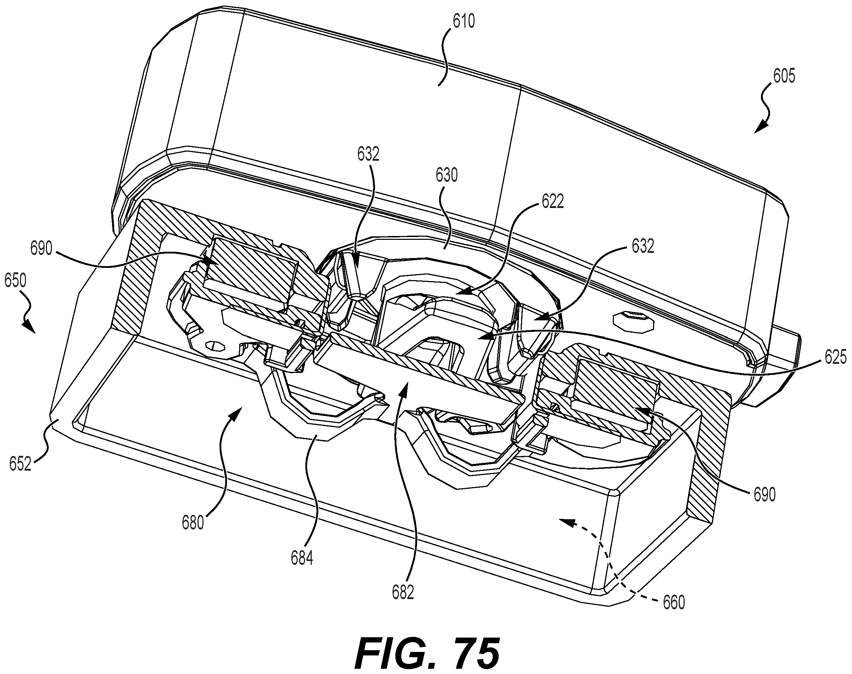

As is illustrated in Figs. 74 and 75, the securing member 680 aids in maintaining proper vertical alignment of the anchor 620 in the anchor fixture 650. When inserting the anchor lock 625 into the anchor aperture 665 (Fig. 74), the anchor lock 625 contacts the securing member 680. In order to secure the anchor 620 to the anchor fixture 650, the anchor lock 625 (and the accessory 605) are rotated by a quarter-turn and a downward force is applied to the securing member 680. The resilient members 684 then apply an upward bias on the anchor lock 625, via the platform 682, aiding in preventing vertical shifting or vibration of the anchor 620 relative to the anchor fixture 650.

The rotational arrangement of the accessory body 610, the anchor lock 625, and the electrical element 640 is further illustrated in Figs. 74 and 75. When in the inserted, unlocked position (Fig. 74), a long axis of the anchor lock 625 transects the electrical contacts 632, with the contacts 632 abutting the contacts 670 of the anchor fixture 650. To bring the anchor lock 625 to the locked position (Fig. 75), the accessory body 610 is rotated a quarter-turn, as noted above, while the electrical element 630 does not rotate, such that the contacts 632, 670 remain in electrical connection.

As can be seen from the Figures, the anchor lock 625 and the anchor aperture 665 are shaped such that the anchor 620 could be connected to the anchor fixture 650 in two different orientations, one 180 degrees rotated from the other. In order to ensure the proper polarity of power flow when the anchor 620 is electrically connected to the anchor fixture 650, the anchor fixture 650 could include one or more switches (not shown) to maintain correct current flow regardless of the relative orientation of the anchor 620 and the anchor fixtures 650.

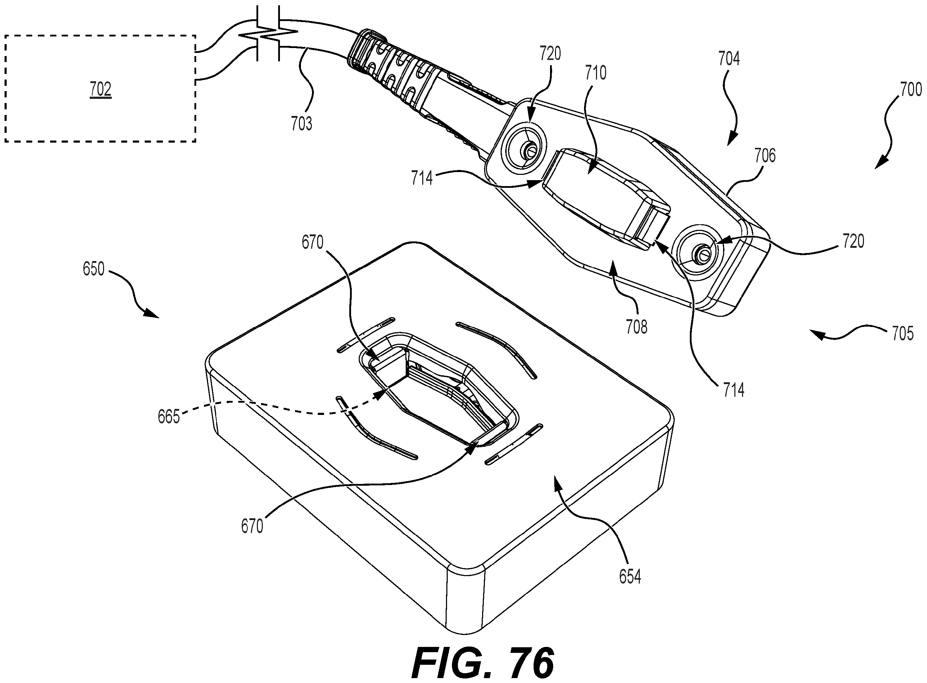

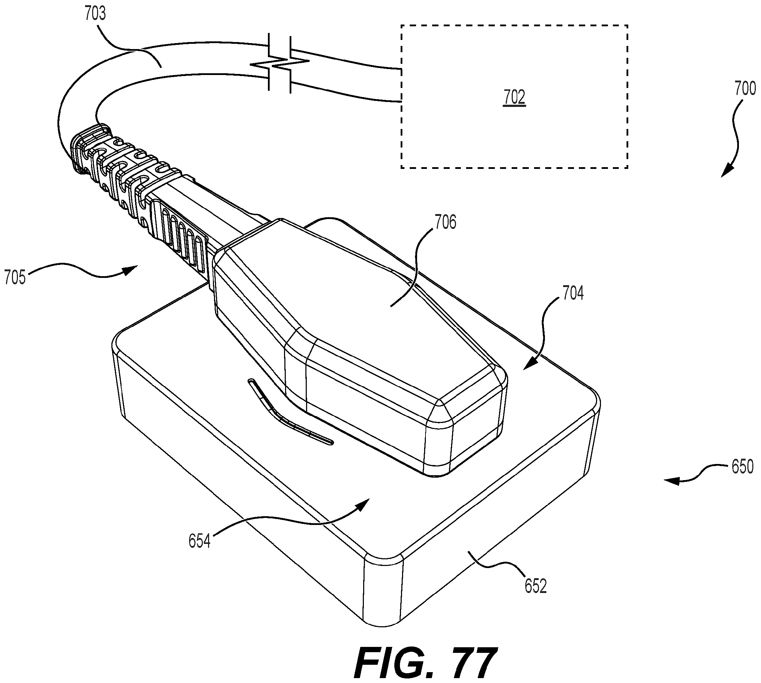

With reference to Figs. 76 and 77, another non-limiting embodiment of a system 700 for connecting an accessory to an item is illustrated. The system 700 is illustrated connecting an accessory, specifically a cord and power plug assembly 705 for powering an accessory 702 such as a helmet (shown schematically) via the anchor fixture 650. By the present embodiment and as will be described further below, the anchor fixture 650 is arranged and configured for charging or powering the accessory 702 via the cord 705. It is also contemplated that a different anchor fixture could be used for powering the cord 705.

The cord and plug assembly 705 includes a power cord 703 electrically connected to the accessory 702 at a proximal end thereof and a plug body 704 connected to the distal end of the cord 703. The plug body 704 includes a housing 706 for supporting the components of the plug body 704. The housing 706 is generally hexagonally shaped, although the shape choice for the housing 706 is simply aesthetic in the present embodiment. The housing 706 thus could be differently shaped.

The housing 706 has a plurality of surfaces, including a contact surface 708 configured and arranged to abut the top surface 654 of the anchor fixture 650 when the assembly 705 is selectively connected to the anchor fixture 650, described in further detail below.

The plug body 704 includes an anchor portion 710 connected to and extending from the housing 706, and more specifically from the contact surface 708. The anchor portion 710 is shaped and sized to pass through the aperture 665 of the anchor fixture 650 and to extend at least partially into the chamber 660 when connected to the anchor fixture 650. The anchor portion 710 is a hexagonally shaped in the present embodiment, the anchor portion 710 being defined by two shorter side portions and four longer longitudinal side portions to match the form of the anchor aperture 665. It is contemplated that the shape of the anchor portion 710 could vary in different embodiments, although variations in the form of the anchor portion 710 will depend on variations on the form of the anchor aperture 665 and placement of the electrical contacts 670.

The plug body 704 further includes two electrical contacts 714 disposed on the short end portions of the anchor portion 710. The electrical contacts 714 are operatively connected to electronics and electrical wiring (not shown) disposed in the housing 704, such that electricity supplied to the electrical contacts 714 are transmitted to the accessory 702. Specifically, when the anchor portion 710 is inserted into the anchor aperture 665 of the anchor fixture 650, the contacts 714 contact the electrical contacts 670.

In contrast to the anchor 620 of the accessory 605, the plug assembly 705 is not rotated when inserted in the anchor fixture 650. To selectively secure the plug assembly 705 to the anchor fixture 650 when the anchor portion 710 is inserted into the anchor aperture 665, the plug assembly 705 further includes two magnets 720. The magnets 720 are disposed adjacent to the short side portions of the anchor portion 710 and inside the housing 706. The magnets 720 are further arranged and positioned to align with the magnets 670 of the anchor fixture 650 when the anchor portion 710 is inserted into the anchor aperture 665. The force between the magnets 720 and the magnets 670 thus acts to aid in maintaining the connection between the plug assembly 705 and the anchor fixture 650.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A system for connecting an accessory to an item, the system comprising:
an anchor fixture comprising:
a fixture body configured to be connected to one of the accessory and the item, the fixture body defining an anchor aperture therein,
the anchor aperture having at least one recessed portion along an edge thereof;
an anchor configured to be connected to an other one of the accessory and the item, the anchor including:
an anchor lock being configured to be inserted through the anchor aperture of the anchor fixture,
the anchor lock having at least one protrusion extending therefrom,
the anchor lock being movable relative to the anchor fixture between an unlocked position and a locked position,
in the unlocked position, the anchor lock being free to pass through the anchor aperture, and
in the locked position:
the anchor lock being prevented by the anchor fixture from passing through the anchor aperture, and
the at least one protrusion of the anchor lock being received in the
at least one recessed portion of the anchor aperture; and
the anchor being selectively secured to the anchor fixture by inserting the anchor lock through the anchor aperture and moving the anchor lock relative to the anchor fixture to place the anchor lock in the locked position,
the anchor lock impeding movement within the anchor fixture of the anchor.

2. The system of claim 1, further comprising:
an anchor base configured to be connected to the other one of the accessory and the item;
the anchor base defines a base aperture therein;
the anchor is rotationally connected to the anchor base, a portion of the anchor extending through the base aperture; and
the anchor base is disposed between the lever and the anchor lock.

3. The system of claim 1, wherein:
the anchor comprises an anchor lock connected to a first end of the anchor stem: and
a lever connected to a second end of the anchor stem, the lever being rotatable to cause the anchor lock to rotate between the unlocked position and the locked position.

4. The system of claim 2, further comprising:
an anchor base configured to be connected to the other one of the accessory and the item;
the anchor base defines a base aperture therein; and
wherein:
the lever includes:
a handle portion having a passage defined therethrough, and
a lever insert selectively disposed at least partially in the passage;
the second end of the anchor stem is shaped to engage with an end portion of the lever insert; and
the anchor being connected through the base aperture by:
inserting the anchor stem through the base aperture and into one side of the passage of the handle portion, and
inserting the lever insert into an other side of the passage.

5. The system of claim 4, wherein:
the anchor further comprises an indicator washer disposed between the lever and the anchor lock; and
the indicator washer includes:
a washer body, and
a washer stop extending from the washer body, the washer stop extending parallel to the anchor stem.

6. The system of claim 5, wherein:
when the anchor is separated and spaced from the anchor fixture:
the lever, the anchor lock, and the indicator washer are rotatable relative to a base aperture defined by one of an anchor base and the one of the accessory and the item; and when the anchor lock is inserted into the anchor aperture:
the washer stop is received in the anchor aperture, rotational movement of the indicator washer being impeded by the anchor fixture, the washer stop abutting edges of the anchor aperture when the anchor is rotated, and
the lever and the anchor lock are rotatable relative to the indicator washer, the base aperture, and the anchor fixture.

7. The system of claim 6, wherein:
the anchor further comprises a lock washer disposed between the base aperture and the anchor lock; and
the indicator washer is disposed between the lever and the base aperture.

8. The system of claim 7, wherein:
the lock washer has defined therein:
a channel, and
a central aperture;
the anchor stem extends through the central aperture;
the washer stop extends through the channel, the channel being sized and shaped to permit movement of the washer stop relative to the lock washer; and
when the anchor lock is inserted into the anchor aperture:
the lock washer rotates relative to the indicator washer.

9. The system of claim 7 or 8, wherein:
the lever has a plurality of slots defined therein; and
the lock washer comprises a plurality of teeth disposed on one surface thereof, the plurality of teeth being shaped and arranged to engage with the plurality of slots of the lever.

10. The system of any one of claims 1 to 9, wherein the at least one recessed portion of the anchor fixture is at least one arc-shaped recess formed by the anchor fixture.

11. The system of claim 1, wherein:
the at least one recessed portion of the anchor fixture includes two oppositely disposed recessed portions;
the at least one protrusion of the anchor lock includes two oppositely disposed protrusions formed by the anchor lock; and
each protrusion is received in a corresponding one of the recessed portions when the anchor lock is in the locked position.

12. The system of claim 11, wherein:
the anchor lock comprises two cams extending from opposite sides of the anchor stem; and
each of the two protrusions is formed from a protruding surface extending from the anchor stem to a corresponding one of the two cams.

13. The system of claim 1, wherein:
the anchor aperture is a hexagonal aperture;
the hexagonal aperture is defined by two end side portions and four longitudinal side portions;
each of the two end side portions are shorter than each of the four longitudinal side portions;
a line extending between the two end side portions defining a major axis of the anchor aperture;
a line extending through a first junction of a first pair of the longitudinal side portions to a second junction of a second pair of the longitudinal side portions defining a minor axis of the anchor aperture; and
the major axis is larger than the minor axis.

14. The system of claim 13, wherein the anchor lock impedes movement along the major axis and the minor axis of the anchor aperture of the anchor within the anchor fixture.

15. The system of claim 14, wherein the anchor lock impedes movement of the anchor:
parallel to the anchor aperture; and
orthogonal to the anchor aperture.
